(19) Europäisches Patentamt
European Patent Office
Office européen des brevets

(11) Veröffentlichungsnummer: **0 474 654 B1**

(12) # EUROPÄISCHE PATENTSCHRIFT

(45) Veröffentlichungstag der Patentschrift: **26.10.94**

(51) Int. Cl.$^{5}$: **C09B 62/51**, C09B 62/085

(21) Anmeldenummer: **90906981.7**

(22) Anmeldetag: **12.05.90**

(86) Internationale Anmeldenummer:
**PCT/EP90/00767**

(87) Internationale Veröffentlichungsnummer:
**WO 90/15107 (13.12.90 90/28)**

(54) **WASSERLÖSLICHE FASERREAKTIVE FARBSTOFFE, VERFAHREN ZU IHRER HERSTELLUNG UND IHRE VERWENDUNG.**

(30) Priorität: **29.05.89 DE 3917369**

(43) Veröffentlichungstag der Anmeldung:
**18.03.92 Patentblatt 92/12**

(45) Bekanntmachung des Hinweises auf die Patenterteilung:
**26.10.94 Patentblatt 94/43**

(84) Benannte Vertragsstaaten:
**BE CH DE ES FR GB IT LI**

(56) Entgegenhaltungen:
**EP-A- 0 271 883**

(73) Patentinhaber: **HOECHST AKTIENGESELL-SCHAFT**

**D-65926 Frankfurt (DE)**

(72) Erfinder: **HUSSONG, Kurt**
**Am Fachsland 56**
**D-6233 Kelkheim (DE)**
Erfinder: **SPRINGER, Hartmut**
**Am Erdbeerstein 27**
**D-6240 Königstein (DE)**

EP 0 474 654 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, insbesondere in Bezug auf die Echtheiten, aufweisen. So sind zwar aus der Europäischen Patentanmeldungs-Veröffentlichung Nr. 0 144 766A und den Deutschen Offenlegungsschriften Nrs. 33 27 641, 35 26 551 und 36 28 090 faserreaktive Farbstoffe bekannt, gleichwohl lag der vorliegenden Erfindung die Aufgabe zugrunde, neue, verbesserte Reaktivfarbstoffe zu finden, die Baumwolle in allen Farbtönen mit hohem Ausziehgrad färben und sich durch eine hohe Faser-Farbstoff-Bindungsstabilität auszeichnen und besonders für das Färben nach dem Klotzverfahren geeignet sind.

Desweiteren ist aus dem Beispiel 19 der deutschen Offenlegungsschrift Nr. 35 26 551 ein Disazofarbstoff beschrieben, der als bivalente Kupplungskomponente die 1-Amino-8-hydroxy-3,6-disulfonsäure besitzt, an die in ortho-Stellung zur Hydroxygruppe der 4-(β-Sulfatoethylsulfonyl)-phenyl-azo-Rest als eine der Diazokomponenten und an die in ortho-Stellung zur Aminogruppe der 3-{2'-[β-(4''-β'-Sulfatoethylsulfonyl-phenyl)-ethylamino]-1',3',5'-triazin-6'-yl}-amino-4-sulfo-phenylazo-Rest gebunden ist.

Mit der vorliegenden Erfindung wurde diese Aufgabe durch Auffindung der Verbindungen der allgemeinen Formel (1)

$(Y^1 - SO_2)_k - A - Z_n$ (1)

gelöst, in welcher

- A der Rest eines wasserlöslichen, sulfo- und/oder carboxygruppenhaltigen Farbstoffs ist, bevorzugt eines solchen, der eine oder mehrere, wie 2 bis 8, Sulfogruppen enthält,
- $Y^1$ die Vinylgruppe ist oder eine β-Chlorethyl-, β-Thiosulfatoethyl-, β-Acetyloxyethyl- oder bevorzugt β-Sulfatoethyl-Gruppe ist,
- k die Zahl 1 oder 2, bevorzugt 1, ist,
- n die Zahl 1 oder 2, bevorzugt 1, ist und
- Z eine Gruppe der allgemeinen Formel (2)

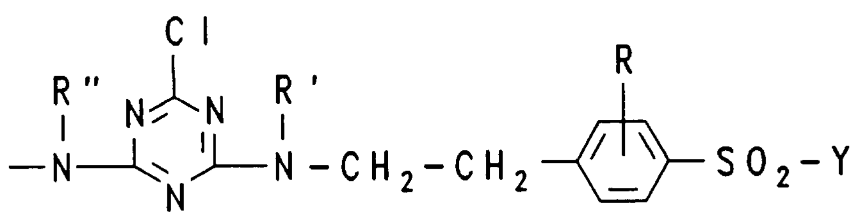

(2)

ist, in welcher

- R' und R'' jedes, unabhängig voneinander, ein Wasserstoffatom oder eine Alkylgruppe von 1 bis 4 C-Atomen ist,
- R ein Wasserstoffatom oder eine Sulfogruppe ist und
- Y die Vinylgruppe oder eine β-Sulfatoethyl-Gruppe ist, wobei $Y^1$ und Y zueinander gleiche oder voneinander verschiedene Bedeutungen haben können,

jedoch ausgenommen der Farbstoffe der allgemeinen Formel

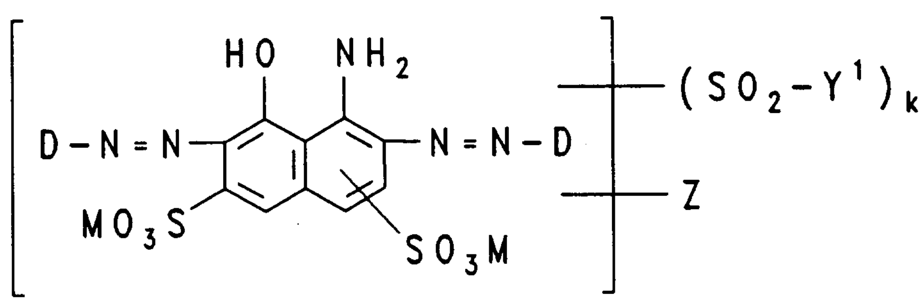

in welcher

M ein Wasserstoffatom oder ein Alkalimetall ist,

D jeweils für den Rest einer Diazokomponente steht, wobei beide D voneinander verschiedene Bedeutungen besitzen, und

Z, k und $Y^1$ eine der obengenannten Bedeutungen haben, wobei der Rest Z an einem der Reste D und die Gruppe(n) $-SO_2-Y^1$ direkt an ein aromatisches Kohlenstoffatom von D gebunden sind, wobei jedoch die Gruppen $-SO_2-Y^1$ und Z nicht gleichzeitig an demselben Rest D gebunden sind.

Farbstoffe mit dem Rest A bzw. die den Verbindungen der allgemeinen Formel (1) zugrundeliegenden Farbstoffe mit einer Aminogruppe -NHR'' sind in der Literatur zahlreich beschrieben. Besonders wertvolle Farbstoffe dieser Reihe sind sulfogruppenhaltige Mono- und Disazofarbstoffe und Metallkomplex-Mono- und -Disazofarbstoffe, wie sulfogruppenhaltige 1:2-Chrom- und 1:2-Kobalt- und insbesondere 1:1-Kupferkomplex-Monoazo- und -Disazofarbstoffe.

Bevorzugt sind Verbindungen der allgemeinen Formel (1), die insgesamt 1 bis 6 Sulfogruppen besitzen. Alkylgruppen R' und R'' sind beispielsweise die n-Butyl-, n-Propyl- und die Ethylgruppe, vorzugsweise die Methylgruppe. Besonders bevorzugt ist R'' eine Methylgruppe und insbesondere ein Wasserstoffatom und R' ein Wasserstoffatom.

Der Formelrest R ist bevorzugt ein Wasserstoffatom. Ist R eine Sulfogruppe, so steht sie bevorzugt in m-Stellung zur Gruppe $-SO_2-Y$.

Wichtige Azofarbstoffe entsprechend der allgemeinen Formel (1) sind solche, in denen A einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalinazo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Insbesondere bevorzugt sind erfindungsgemäße Verbindungen der Formel (1), in welchen die faserreaktive Gruppe Z eine Gruppe der allgemeinen Formel (3)

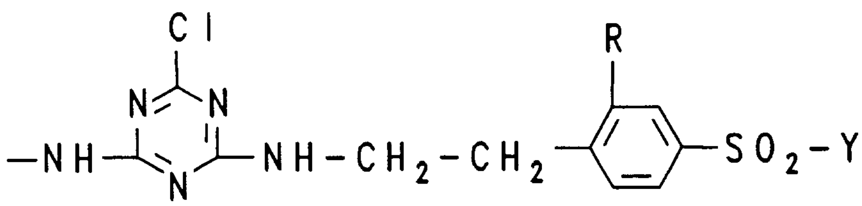

(3)

mit R und Y der obengenannten Bedeutungen ist.

Azofarbstoffe der allgemeinen Formel (1) sind beispielsweise Farbstoffe der allgemeinen Formeln (4a) und (4c)

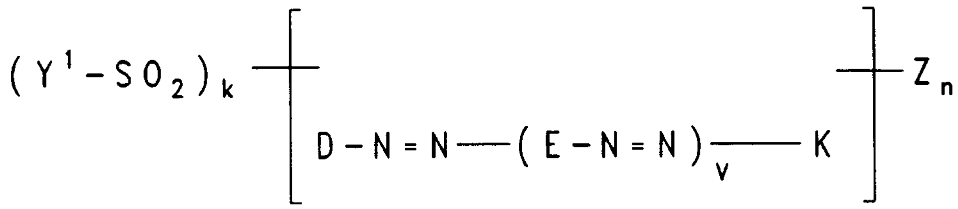

(4a)

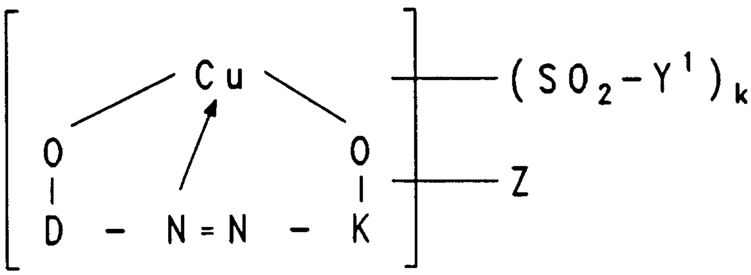

(4c)

in welchen

- M ein Wasserstoffatom oder ein Alkalimetall, wie Natrium, Kalium oder Lithium, ist,
- D für den Rest einer Diazokomponente steht,
- E der bivalente Rest einer kupplungsfähigen und diazotierbaren Verbindung ist,
- K den Rest einer Kupplungskomponente bedeutet,
- v für die Zahl Null oder 1 steht und
- Z, k, n und $Y^1$ eine der obengenannten Bedeutungen haben, wobei der Rest Z an den Rest D oder den Rest K, im Falle von n gleich 2 in Formel (4a) an D und K, und die Gruppe(n) $-SO_2-Y^1$ an D, E und/oder K gebunden sind, wobei jedoch die Gruppen $-SO_2-Y^1$ und Z nicht gleichzeitig an dem selben Rest gebunden sind. Die Gruppe $-SO_2-Y^1$ kann zudem an D, E und K über eine Alkylengruppe, wie eine Methylengruppe, oder über eine N-Methyl- oder N-Ethylamino-Gruppe an ein aromatisches Kohlenstoffatom von D bzw. E bzw. K gebunden sein.

Von den erfindungsgemäßen Farbstoffen sind solche hervorzuheben, die den allgemeinen Formeln (5a), (5b), (5c) und (5d)

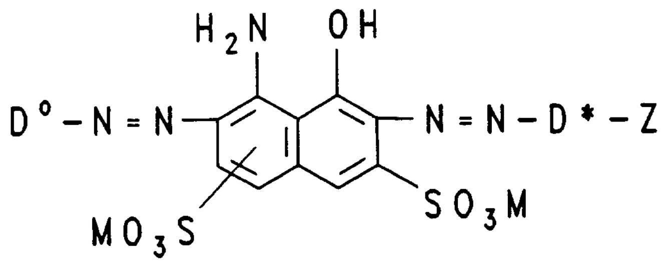

(5a)

$$(Y^1-SO_2-X^1)_k-D^1-N=N-(E^1-N=N)_v-K^*-Z \quad (5b)$$

$$Z-D^*-N=N-(E^1-N=N)_v-K^1-X^1-SO_2-Y^1 \quad (5c)$$

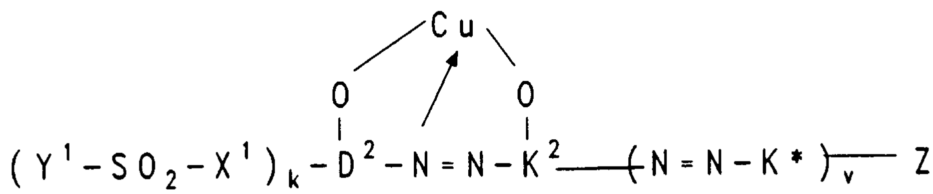

(5d)

entsprechen, in welchen bedeuten:

| | |
|---|---|
| $Y^1$, M, k, v und Z | haben eine der obengenannten Bedeutungen; |
| $X^1$ | ist die Methylengruppe oder Methylaminogruppe oder bevorzugt eine direkte Bindung; |
| $D^o$ | ist ein Rest der allgemeinen Formel (6a), (6b) oder (6c) |

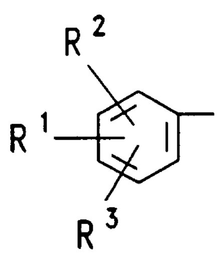

(6a)

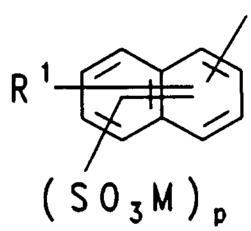

(6b)

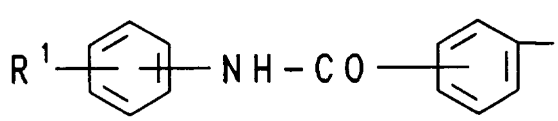

(6c)

in welchen

| | |
|---|---|
| $R^1$ | ein Rest der allgemeinen Formel $Y^1$-$SO_2$-$X^1$- ist, in welcher $Y^1$ eine der obengenannten, insbesondere bevorzugten Bedeutungen hat und $X^1$ hier die Methylengruppe oder eine Methylaminogruppe ist, |
| $R^2$ | Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist, |
| $R^3$ | Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C- |

Atomen, Carbamoyl, N-($C_1$-$C_4$-Alkyl)-carbamoyl, Fluor, Chlor, Nitro, Sulfamoyl, N-($C_1$-$C_4$)-Alkyl)-sulfamoyl, Alkylsulfonyl von 1 bis 4 C-Atomen, Phenylsulfonyl oder Phenoxy ist,

wobei der Benzol- bzw. Naphthalinring von Formeln (6a) und (6b) zusätzlich in o-Stellung zur freien Bindung eine Hydroxygruppe enthalten kann,

p — die Zahl Null, 1 oder 2 bedeutet (wobei diese Gruppe im Falle von p gleich Null ein Wasserstoffatom bedeutet) und

M — die obengenannte Bedeutung hat;

$D^1$ — ist ein Phenylenrest, der die oben genannten und definierten Substituenten $R^2$ und $R^3$ besitzt, oder ist ein Naphthylenrest, der durch 1 oder 2 Sulfogruppen substituiert sein kann;

$E^1$ — ist ein Rest der allgemeinen Formel (7a), (7b), (7c) oder (7d)

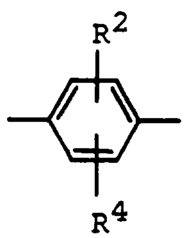
(7a)

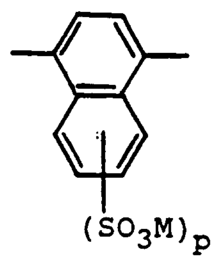
(7b)

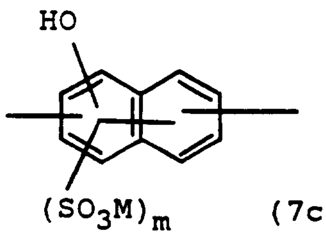
(7c)

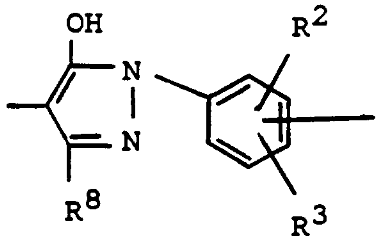
(7d)

in welchen

$R^2$, $R^3$, M und p — die oben angegebenen Bedeutungen haben,

$R^4$ — ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino und Propionylaminogruppe, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist,

m — die Zahl 1 oder 2 bedeutet und

$R^8$ — für Wasserstoff, Alkyl von 1 bis 4 C-Atomen, wie Methyl, Cyano, Carboxy, Carbalkoxy von 2 bis 5 C-Atomen, Carbonamido oder Phenyl steht, bevorzugt jedoch Methyl, Carboxy oder Carbalkoxy von 2 bis 5 C-Atomen, wie Carbomethoxy und Carbethoxy, ist;

-K*-Z — ist ein Rest der allgemeinen Formel (8a), (8b), (8c), (8d), (8e) oder (8f)

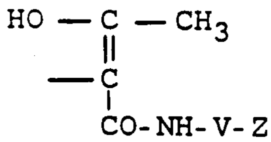

(8a)

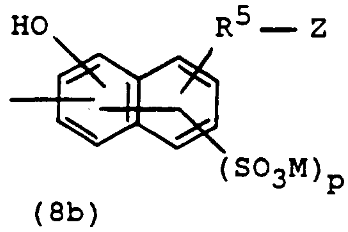

(8b)

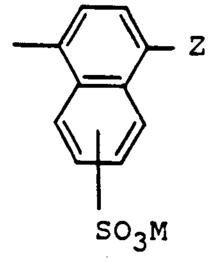

(8c)

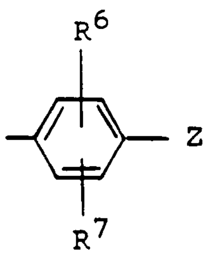

(8d)

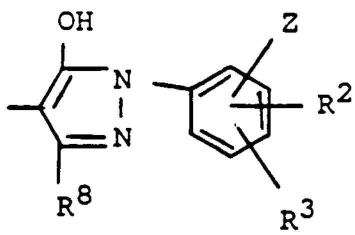

(8e)

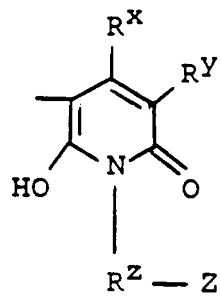

(8f)

in welchen

| | |
|---|---|
| $R^2$, $R^3$, Z, p und M | die obengenannten Bedeutungen haben und die Hydroxygrupe in Formel (8b) in ortho-Stellung zur freien Bindung, die mit der Azogruppe verbunden ist, steht, |
| V | ein Phenylenrest ist, der die obengenannten und definierten Reste $R^2$ und $R^3$ enthält, oder ein Naphthylenrest ist, der durch 1 oder 2 Sulfogruppen substituiert sein kann, |
| $R^5$ | eine direkte Bindung oder ein Rest der Formel -NH-CO-phenylen- , -NH-CO-NH-phenylen- , -N($CH_3$)-CO-phenylen- oder -N($CH_3$)-CO-NH-phenylen- ist, |
| $R^6$ | Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, |
| $R^7$ | Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist, |
| $R^8$ | eine der oben angegebenen Bedeutungen hat, |
| $R^x$ | Wasserstoff, Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, |
| $R^y$ | Wasserstoff, Sulfo, Sulfoalkyl mit einem Alkylenrest von 1 bis 4 C-Atomen, wie Sulfomethyl, Cyano oder Carbamoylgruppe ist und |
| $R^z$ | Alkylen von 1 bis 6 C-Atomen, bevorzugt von 1 bis 4 C-Atomen, oder Phenylen ist, das durch Substituenten aus der Gruppe Methyl, Ethyl, Chlor, Carboxy und Sulfo substituiert sein kann, oder Alkylenphenylen mit 2 bis 4 C-Atomen im Alkylenrest ist; |
| D* | ist Phenylen, das durch 1 oder 2 Substituenten aus der Gruppe Wasserstoff, Methyl, Ethyl, Methoxy, Brom, Chlor, Carboxy und Sulfo substituiert sein kann, oder ist Naphthylen, das durch 1 oder 2 Sulfogruppen substituiert sein kann; |
| $K^1$ | ist ein Rest der allgemeinen Formel (9a), (9b) oder (9c) |

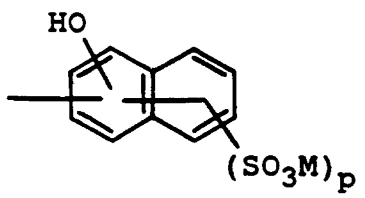 (9a) 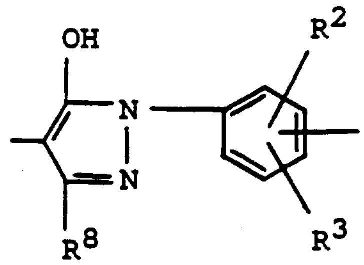 (9b)

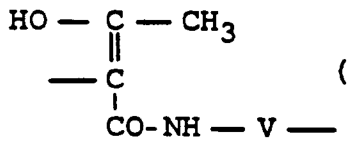 (9c)

in welchen

M, p, V, $R^2$, $R^3$ und $R^8$ die obengenannten Bedeutungen haben und die Hydroxygruppe in Formel (9a) in ortho-Stellung zur freien Bindung steht, die mit der Azogruppe verbunden ist;

$D^2$ ist ein Benzolrest, dessen freie Bindungen zum komplexbildenden Oxiatom und zur Azogruppe o-ständig zueinander stehen und der als zusätzliche Substituenten 1 oder 2 Substituenten aus der Gruppe Methyl, Ethyl, Methoxy, Ethoxy, Brom, Chlor, Carboxy und Sulfo enthalten kann, oder ist ein Naphthalinrest, an den die Oxigruppe in 1-Stellung und die Azogruppe in 2-Stellung gebunden sind und der als zusätzlichen Substituenten eine Sulfogruppe enthalten kann;

$K^2$ ist ein Rest der allgemeinen Formel (10a) oder (10b)

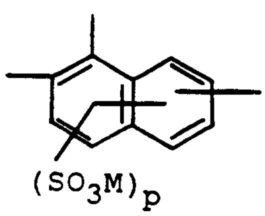 (10a) 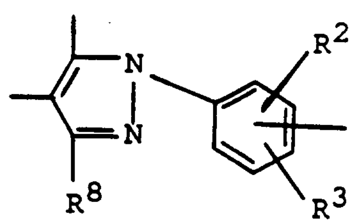 (10b)

in welchen M, p, $R^2$, $R^3$ und $R^8$ die obengenannten Bedeutungen haben.

Bevorzugt ist $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Die Substituenten "Sulfo", "Carboxy", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Thiosulfatogruppen Gruppen entsprechend der allgemeinen Formel $-S-SO_3M$ und Sulfatogruppen entsprechend Gruppen der allgemeinen Formel $-OSO_3M$ , jeweils mit M der obengenannten Bedeutung.

Von den erfindungsgemäßen Azofarbstoffen der allgemeinen Formel (1) können insbesondere die Mono- und Disazoverbindungen der obigen allgemeinen Formel (5a) und der nachstehenden allgemeinen Formeln (12) bis (18) hervorgehoben werden:

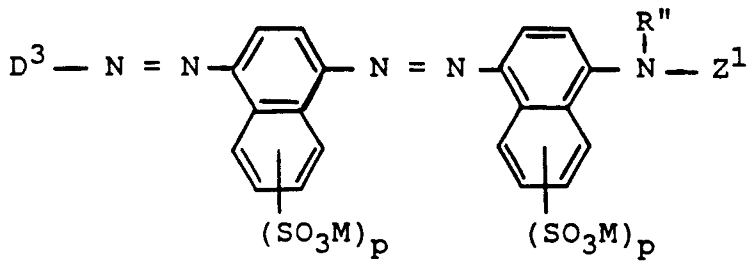

(12)

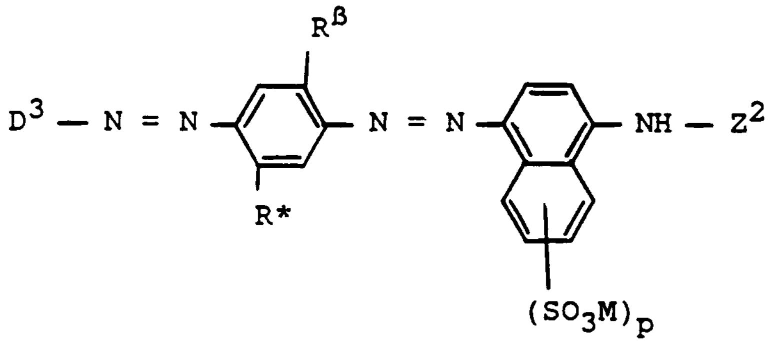

(12a)

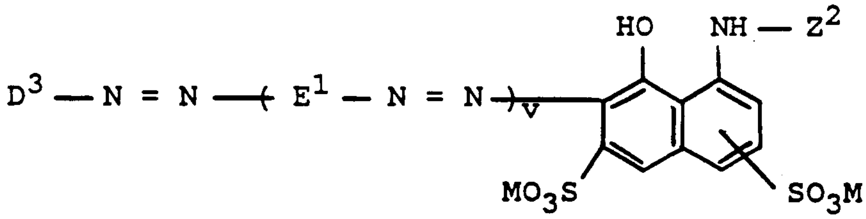

(13)

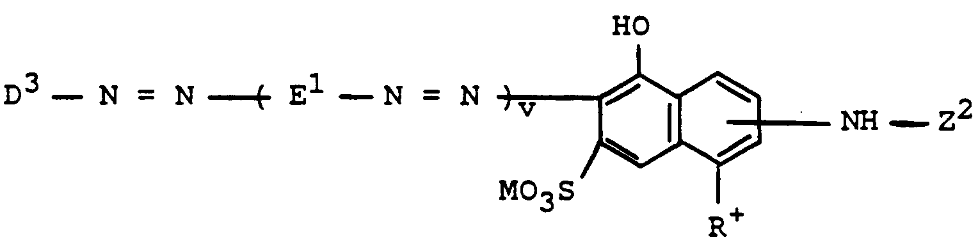

(14)

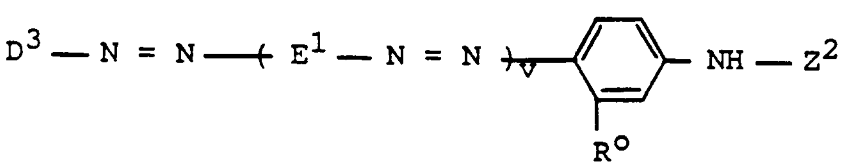

(15)

$D^3{-}N = N{-}K^3$ (16)

$D^4{-}N = N{-}K^4{-}Z$ (17)

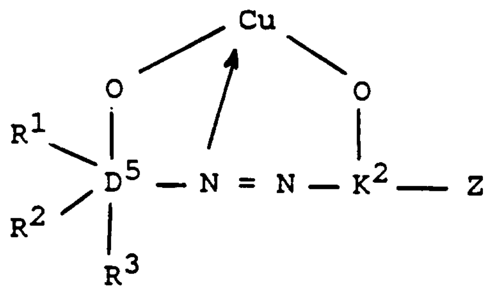

(18)

In diesen Formeln bedeuten:
In den Formeln (12) und (12a) haben M, p, R'', $R^\beta$ und R* die obengenannten bzw. nachstehend genannten, insbesondere bevorzugten Bedeutungen,

$D^3$ ist eine Gruppe der allgemeinen Formel (6a) oder (6b), wobei hier $X^1$ eine direkte Bindung ist und $R^2$ insbesondere bevorzugt ein Wasserstoffatom, die Methyl-, Methoxy-, Ethoxy- oder Sulfogruppe oder ein Chloratom ist und $R^3$ insbesondere bevorzugt ein Wasserstoffatom, die Methyl-, Methoxy-, Ethoxy- oder Carboxygruppe oder ein Chloratom ist,

$Z^1$ ist ein Rest der allgemeinen Formel (3a)

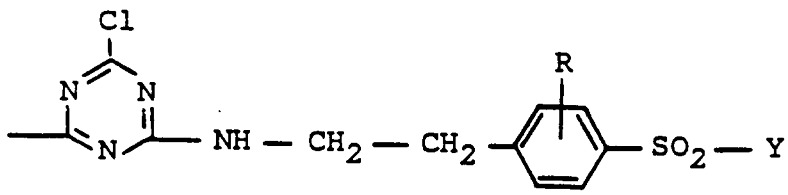

(3a)

mit R und Y der obengenannten Bedeutung oder bevorzugt der nachstehend definierte Rest $Z^2$,

$Z^2$ ist ein Rest der allgemeinen Formel (3b)

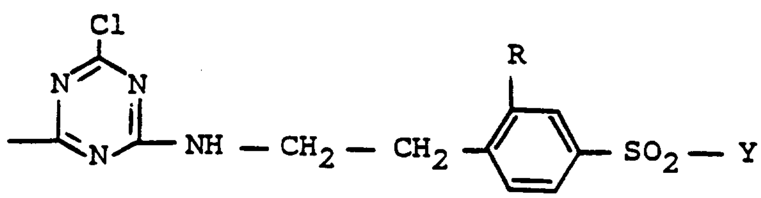

(3b)

mit Y der obengenannten Bedeutung und R gleich Sulfo oder bevorzugt Wasserstoff;
in den Formeln (13), (14) und (15) haben $D^3$, M und v die obengenannten Bedeutungen,

$E^1$ ist ein Rest der Formel (7A)

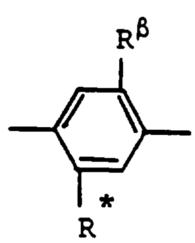

(7A)

in welcher $R^\beta$ ein Wasserstoffatom, die Sulfo-, $\beta$-Methoxy-ethoxy-, Methyl-, Ethyl-, Methoxy- oder Ethoxygruppe bedeutet und R* ein Wasserstoffatom, die Methyl-, Ethyl-, Methoxy-, Ethoxy-, Acetylamino-, Propionylamino- oder Ureidogruppe ist,

$Z^2$ ist ein Rest der allgemeinen Formel (3b),

$R^o$ ist die Acetylamino- oder Ureidogruppe und

$R^+$ ist ein Wasserstoffatom oder eine Sulfogruppe;

in Formel (16) ist $D^3$ ein Rest der obenangegebenen und definierten allgemeinen Formel Z-D*- mit Z und D* der obengenannten Bedeutung oder ein Rest der allgemeinen Formel (19) und $K^3$ ein Rest der obengenannten und definierten allgemeinen Formel (8b), (8d) oder (8e);

in Formel (17) ist $D^4$ ein Rest der allgemeinen Formel (6a) oder (6b), bevorzugt ein oben definierten Rest $D^3$, und $K^4$ ist ein Rest der allgemeinen Formeln (8b) bis (8e), wobei Z bevorzugt ein Rest der Formel (3) ist;

in Formel (18) bedeutet $D^2$ einen Benzol- oder Naphthalinkern, wobei die Oxi- und die Azogruppe zueinander ortho-ständig gebunden sind, Z, $R^1$, $R^2$ und $R^3$ haben die obengenannten, insbesondere bevorzugten Bedeutungen, wobei im Falle, daß $D^5$ für einen Naphthalinkern steht, $R^2$ ein Wasserstoffatom und $R^3$ ein Wasserstoffatom oder eine Sulfogruppe bedeutet sowie die Oxygruppe in 1-Stellung und die Azogruppe in 2-Stellung gebunden sind und $K^2$ einen Rest der Formel (10a) darstellt.

Die vorliegende Erfindung betrifft weiterhin Verfahren zur Herstellung der erfindungsgemäßen Farbstoffe. Beispielsweise lassen sie sich erfindungsgemäß analog bekannten Verfahrensweisen der Synthese von Azofarbstoffen oder deren Schwermetallkomplex-Verbindungen durch Umsetzung von dem Fachmann geläufigen Farbstoffvorprodukten, von denen mindestens eines dieser Farbstoffvorprodukte eine faserreaktive Gruppierung der allgemeinen Formel (2) und mindestens eines der Vorprodukte eine Gruppe $-SO_2-Y^1$ enthält, herstellen. So können beispielsweise Mono- und Disazofarbstoffe der allgemeinen Formel (1) durch Umsetzung von deren Diazo- und Kupplungskomponenten in der hierfür üblichen Verfahrensweise der Diazotierung und Kupplung synthetisiert werden, wobei die Diazo- und Kupplungskomponenten eine faserreaktive Gruppe der allgemeinen Formel (2) bzw. der Formel $-SO_2-Y^1$ enthalten. Im Falle der Synthese von Disazofarbstoffen kann bereits die Diazo- oder Kupplungskomponente die zweite Azogruppierung gebunden enthalten.

Erfindungsgemäß einsetzbare Diazokomponenten sind die für faserreaktive Azofarbstoffe üblichen aromatischen carbocyclischen und heterocyclischen Aminoverbindungen, die die faserreaktive Gruppe der allgemeinen Formel (2) bzw. $-SO_2-Y^1$ enthalten, und erfindungsgemäß einsetzbare Kupplungskomponenten sind die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, die die faserreaktive Gruppe der allgemeinen Formel $-SO_2-Y$ oder der allgemeinen Formel (2) enthalten.

Solche Diazokomponenten sind beispielsweise Verbindungen, die der allgemeinen Formel $D^o-NH_2$ bzw. $(Y^1-SO_2-X^1)_k-D^1-NH_2$ oder $(Y^2-SO_2-X^1)_k-D^2(OH)-NH_2$ oder D*-Z mit $D^o$, D*, Z, $Y^1$, $X^1$, k, $D^1$ und $D^2$ der obengenannten Bedeutung entsprechen, und solche Kupplungskomponenten sind bspw. die nachstehend genannten Verbindungen der allgemeinen Formeln (20a) bis (20d) und (21a) bis (21c)

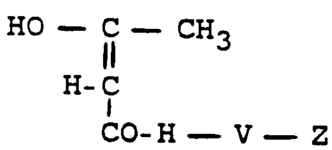
(20a)

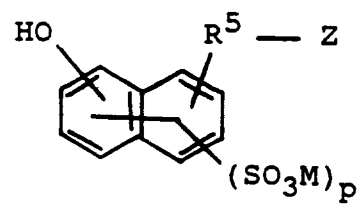
(20b)

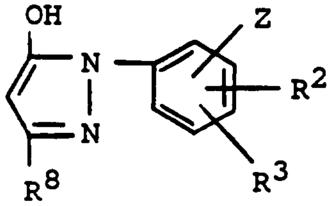
(20c)

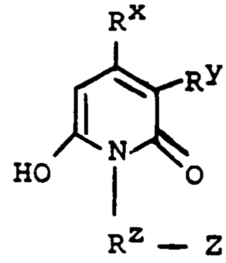
(20d)

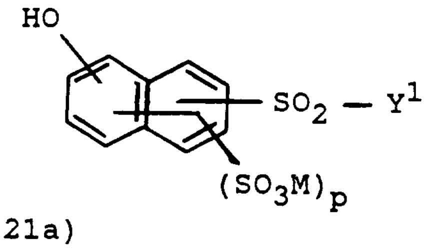

(21a)

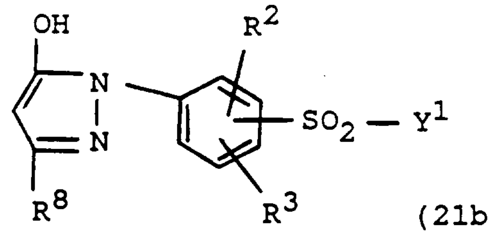

(21b)

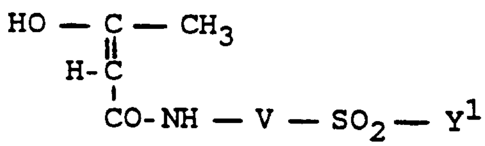

(21c)

mit Z, $Y^1$, V, $R^5$, M, p, $R^2$, $R^3$, $R^8$, $R^x$, $R^y$ und $R^z$ der obengenannten Bedeutung.

Weitere Diazokomponenten, die erfindungsgemäß zur Synthese der Farbstoffe der allgemeinen Formel (1) eingesetzt werden können, sind beispielsweise Diaminoverbindungen der * allgemeinen Formel $H_2N$-D*-$NH_2$ mit D* der obengenannten Bedeutung bzw. deren Monoacylaminoderivate (wobei die Acylgruppe als übliche Schutzgruppe dient, um eine Diazotierung der zweiten Aminogruppe auszuschließen, die dann nach Diazotierung und Kupplung in üblicher Weise hydrolytisch abgespalten werden kann). Die mit diesen Diazokomponenten erhältlichen Aminoazoverbindungen können dann erfindungsgemäß mit Cyanurchlorid und anschließend der später angegebenen Aminoverbindung der allgemeinen Formel (23) oder mit einer Dichlor-s-triazinylamino-Verbindung der später angegebenen allgemeinen Formel (25) analog bekannten Verfahrensweisen der Umsetzung von Aminoverbindungen bzw. Aminoazoverbindungen mit Halogen-triazin-Derivaten umgesetzt werden.

Die Diazotierungs- und Kupplungsreaktionen erfolgen in üblicher Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einem pH-Wert Zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25 °C, ebenso bevorzugt in wäßrigem Medium.

Die neuen Farbstoffe der allgemeinen Formel (1) können ebenfalls erfindungsgemäß in der Weise hergestellt werden, daß man Cyanurchlorid mit einer Aminoverbindung der allgemeinen Formel (22)

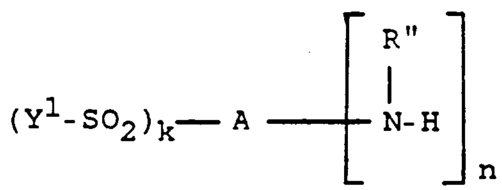

(22)

in welcher $Y^1$, k, A, R'' und n die obengenannten Bedeutungen haben, und einer Aminoverbindung der allgemeinen Formel (23)

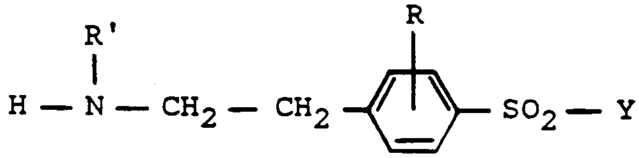

(23)

in welcher R', R und Y die obengenannten Bedeutungen haben, in beliebiger Folge umsetzt. So kann man zunächst eine Aminoverbindung der allgemeinen Formel (22) mit Cyanurchlorid zur Dichlortriazinylaminoverbindung der allgemeinen Formel (24)

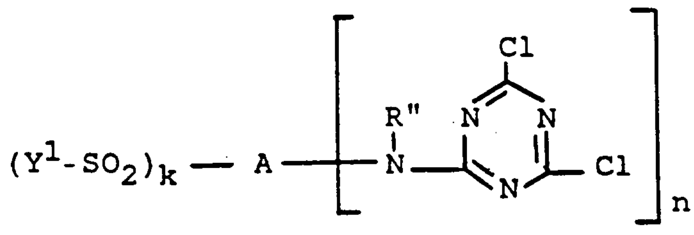

(24)

mit $Y^1$, k, A, R" und n der obengenannten Bedeutung umsetzen, und diese wird durch Reaktion mit einer Aminoverbindung der allgemeinen Formel (23) in äquivalenter Menge in den Endfarbstoff (1) übergeführt, oder man reagiert zunächst eine Aminoverbindung der allgemeinen Formel (23) mit Cyanurchlorid zur Dichlortriazinylaminoverbindung der allgemeinen Formel (25)

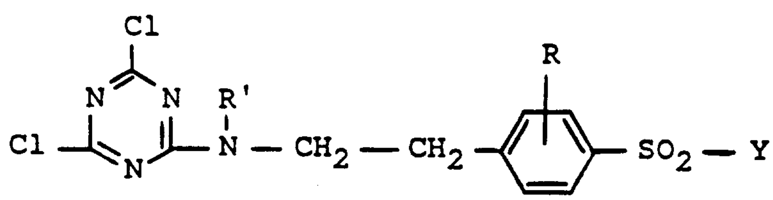

(25)

mit R', R und Y der obengenannten Bedeutung und setzt diese in äquivalenter Menge mit der Verbindung der allgemeinen Formel (22) zum Endfarbstoff (1) um. Die Kondensationsreaktionen zwischen Cyanurchlorid bzw. den Dichlortriazinylaminoverbindungen (24) und (25) mit den Aminoverbindungen (23) und/oder (22) können in der üblichen Weise der Umsetzung von Cyanurchlorid bzw. Dichlortriazinylaminoverbindungen mit Aminoverbindungen erfolgen, so in organischem oder bevorzugt wäßrig- organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.

Die Kondensationsreaktionen zwischen Cyanurchlorid und den Aminoverbindungen erfolgen in der Regel bei einer Temperatur zwischen -10 °C und +10 °C, vorzugsweise zwischen -5 °C und +5 °C, sowie bei einem pH-Wert zwischen 1,0 und 7,0, bevorzugt zwischen 4 und 5. Die Umsetzung der Dichlortriazinylaminoverbindungen der allgemeinen Formel (24) oder (25) mit einer Aminoverbindung der allgemeinen Formel (22) bzw. (23) erfolgt beispielsweise bei einer Temperatur Zwischen 0 und 50 °C, bevorzugt zwischen 10 und 30 °C, und bei einem pH-Wert zwischen 2 und 8, bevorzugt zwischen 5 und 7, wobei darauf zu achten ist, daß die faserreaktive Gruppierung im schwach alkalischen Bereich nicht geschädigt wird.

Bei der erfindungsgemäßen Synthese von Schwermetallkomplex-Azofarbstoffen, beispielsweise solchen entsprechend der allgemeinen Formeln (4c), (5d) und (18), geht man in der Regel von den entsprechenden Schwermetall-Komplexverbindungen der allgemeinen Formel (22) oder von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel -N(R")-Acyl , in welcher Acyl für den Acylrest einer organischen Säure, wie einer niederen Alkancarbonsäure, steht und R" die obengenannte Bedeutung besitzt. So geht man beispielsweise von einer Ausgangsverbindung entsprechend der allgemeinen Formel (26)

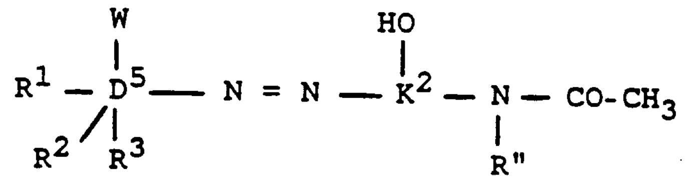

(26)

aus, in welcher $R^1$, $R^2$, $R^3$, $D^5$, $K^2$ und R" die obengenannten Bedeutungen haben und W ein Wasserstoffatom oder eine in ortho-Stellung zur Azogruppe an $D^5$ gebundene Hydroxy- oder Methoxygruppe ist, und setzt diese acylaminogruppenhaltige Ausgangs-Azoverbindung im Falle von W gleich einer Hydroxygruppe analog bekannten und üblichen Verfahrensweisen mit einem Schwermetall-abgebenden Mittel, wie einem Schwermetallsalz, um oder unterwirft sie im Falle zur Bildung eines Kupferkomplex-Azofarbstoffes auch einer auf üblichem Wege durchzuführenden oxidativen oder entalkylierenden Kupferungsreaktion, wenn W gleich ein Wasserstoffatom oder eine Methoxygruppe ist. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit Cyanurchlorid und der faserreaktiven Aminoverbindung entsprechend der allgemeinen Formel (23) zu den erfindungsgemäßen Farbstoffen der allgemeinen Formel (1) umgesetzt werden.

Die Ausgangsverbindung der allgemeinen Formel (23) kann beispielsweise durch Sulfochlorierung von N-Acetyl-β-phenyl-ethylamin erhalten werden. Zur Überfuhrung der Sulfochloridgruppe in die faserreaktive Gruppe der Vinylsulfonreihe wird in üblicher Weise sodann diese zur Sulfinsäure reduziert, welche wiederum beispielsweise mit Ethylenoxid oder einem β-Halogeno-ethanol zur β-Hydroxyethylsulfonyl-Verbindung umgesetzt wird, die sodann entacetyliert und gegebenenfalls verestert wird, so in die entsprechende β-Sulfatoethylsulfonyl-Gruppe mittels den üblichen Sulfatierungsmitteln übergeführt wird. Solche Methoden sind an sich bekannt und können analog angewendet werden.

Aromatische Amine der allgemeinen Formel $D^o$-$NH_2$ sind beispielsweise 4-(β-Sulfatoethylsulfonyl)-anilin, 3-(β-Sulfatoethylsulfonyl)-anilin,

Aromatische Amine als Diazokomponenten, an die der faserreaktive Rest $Z^o$ gebunden werden kann (der Rest $Z^o$ ist der von der Gruppe -N(R")- freie Rest Z), sind beispielsweise solche der allgemeinen Formeln (27a) und (27b)

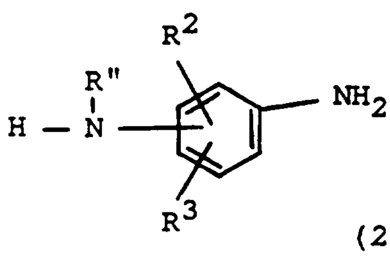

(27a)

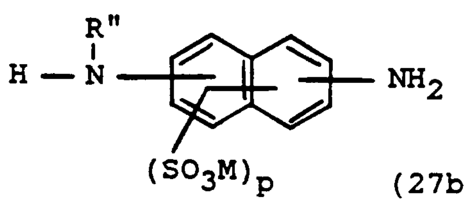

(27b)

in welchen R", $R^2$, $R^3$, M und p die oben angegebenen, insbesondere bevorzugten Bedeutungen haben.

Amine der allgemeinen Formeln (27) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure und 1,3-Diamino-5-methylbenzol und 2,6-Diamino-naphthalin-1-sulfonsäure.

Aromatische Amine der allgemeinen Formel H-E-$NH_2$ bzw. H-$E^1$-$NH_2$ , die als kupplungsfähige und diazotierbare Verbindungen fungieren können, sind beispielsweise Amine der allgemeinen Formeln (28a) und (28b)

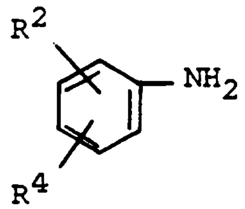

(28a)

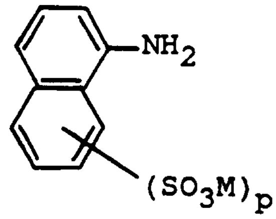

(28b)

in welchen $R^2$, $R^4$, M und p die obengenannten Bedeutungen haben.

Solche Verbindungen sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol.

Kupplungskomponenten sind beispielsweise Verbindungen entsprechend der allgemeinen Formel (29)

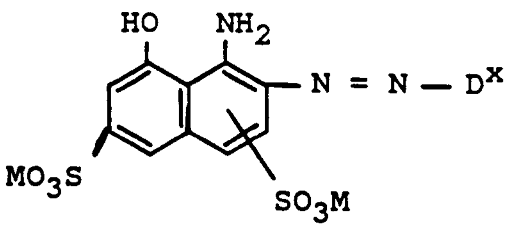

(29)

in welchen M die obengenannte Bedeutung besitzt und $D^x$ einen Rest $D^o$ mit obengenannter, insbesondere bevorzugter Bedeutung bzw. einen Rest der Formel $-D^*-Z$ mit $D^*$ und Z der obengenannten, insbesondere bevorzugten, Bedeutungen darstellt. Für die Kupplungskomponenten der allgemeinen Formel (29) sind solche Reste $D^o$ insbesondere der 4-(β-Sulfatoethylsulfonyl)-phenyl-, der 3-(β-Sulfatoethylsulfonyl)-phenyl-, der 2-Sulfo-5-(β-sulfatoethylsulfonyl)-phenyl-, der 2-Sulfo-4-(β-sulfatoethylsulfonyl)-phenyl-, der 2-Methoxy-5-(β-sulfatoethylsulfonyl)-phenyl-, der 2-Methoxy-5-methyl-4-(β-sulfatoethylsulfonyl)-phenyl-,der 2,5-Dimethoxy-4-(β-sulfatoethylsulfonyl)-phenyl-, der 2-Hydroxy-4-(β-sulfatoethylsulfonyl)-phenyl-, der 2-Hydroxy-5-(β-sulfatoethylsulfonyl)-phenyl-, der 6-(β-Sulfatoethylsulfonyl)-8-sulfo-naphth-2-yl-, der 6-(β-Sulfatoethylsulfonyl)-1-sulfo-naphth-2-yl-, der 8-(β-Sulfatoethylsulfonyl)-6-sulfo-naphth-2-yl-, der 5-(β-Sulfatoethylsulfonyl)-7-sulfo-naphth-2-yl- und der 7-(β-Sulfatoethylsulfonyl)-5-sulfo-naphth-2-yl-Rest.

Weitere Kupplungskomponenten mit der faserreaktiven Gruppe der Vinylsulfonreihe, wie beispielsweise solche, die der Formel $H-K^1-(SO_2-Y)_k$ mit $K^1$ den obigen Bedeutungen entsprechen, sind bspw. solche der allgemeinen Formeln (30a), (30b) und (30c)

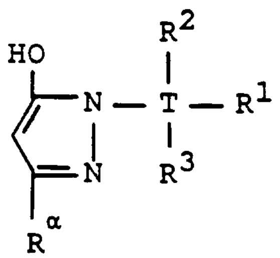

(30a)

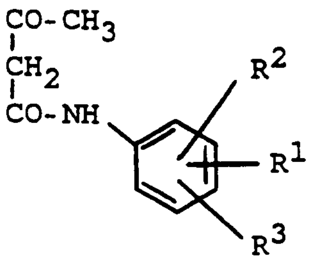

(30b)

oder

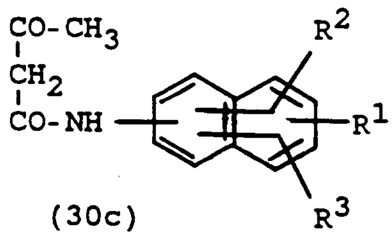

(30c)

in welchen

| | |
|---|---|
| $R^1$, $R^2$ und $R^3$ | die obengenannten Bedeutungen haben, |
| T | für einen Benzol- oder Naphthalinring steht und |
| $R^\alpha$ | Methyl, Carboxy, Methoxycarbonyl oder Ethoxycarbonyl oder Phenyl ist. |

Faserreaktivgruppenhaltige Kupplungskomponenten mit einer Aminogruppe, an die der Rest $Z^o$ der Formel (3c)

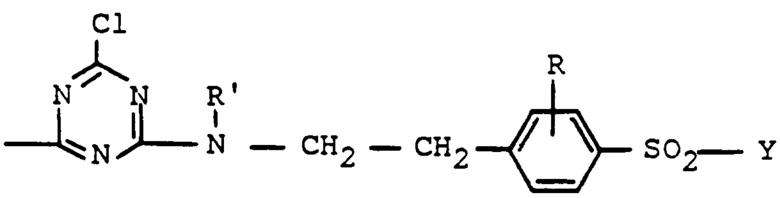

(3c)

mit R', R und Y der obigen Bedeutung gebunden werden kann, sind beispielsweise Verbindungen der allgemeinen Formeln (31a) bis (31c)

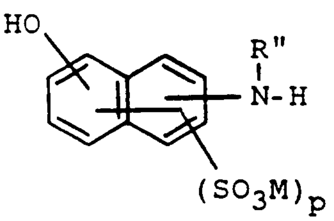

(31a)

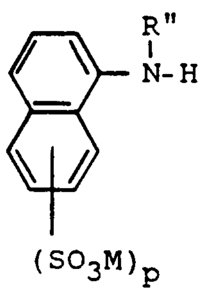

(31b)

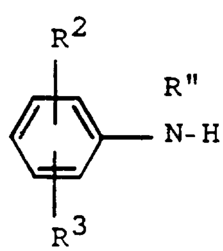

(31c)

in welchen R'', $R^2$, $R^3$, M und p die obengenannten Bedeutungen haben.

Durch Umsetzung mit einem faserreaktiven Acylierungsmittel vor der Kupplung mit dem Diazoniumsalz, die Verbindungen der allgemeinen Formel (31a) betreffend, oder nach der Kupplung mit dem Diazoniumsalz, die Verbindungen der allgemeinen Formeln (31b) bis (31c) betreffend, kann der faserreaktive Rest $Z^o$ eingeführt werden.

Die Kupplungskomponenten der Formel (29), in welcher $D^x$ ein Rest $-D^*-Z$ ist, werden durch saure Kupplung der 1-Amino-8-hydroxy-naphthalin-3,6- und -4,6-disulfonsäure mit einem Diamin $HN(R'')-D^*-NH_2$

und anschließender Umsetzung mit Cyanurchlorid und dem Amin (23) oder mit der Dichlortriazinylamino-Verbindung (25) erhalten. Vorzugsweise ist der Rest -D*-Z ein Rest der allgemeinen Formel (32)

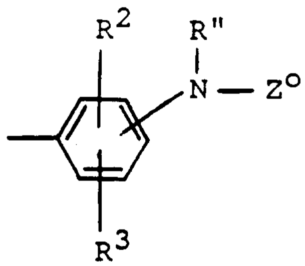

(32)

in welcher

| | |
|---|---|
| R'', $R^2$, $R^3$ und M | die oben angegebenen Bedeutungen haben und |
| $Z^{\circ}$ | bevorzugt ein Rest $Z^1$ oder $Z^2$ der obigen Definition ist. |

Bevorzugte Reste -D*-Z sind beispielsweise die Reste der Formeln (33a), (33b), (33c) und (33d)

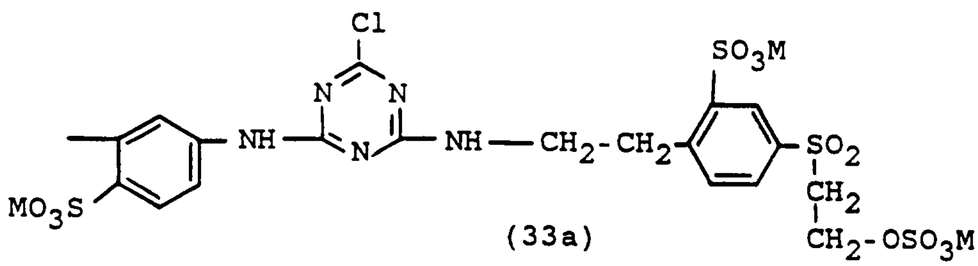

(33a)

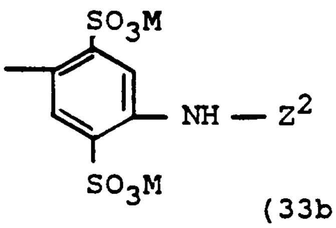

(33b)

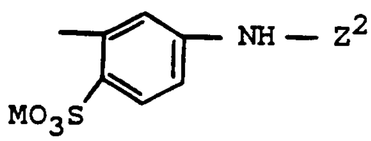

(33c)

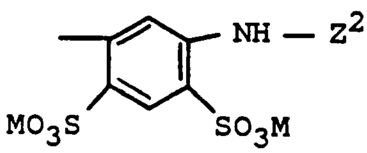

(33d)

in welchen $Z^2$ ein Rest der obigen Formel (3b) ist und M die obige Bedeutung hat.

Weitere Kupplungskomponenten, die erfindungsgemäß die faserreaktive Gruppe der Formel (2) enthalten, sind beispielsweise Verbindungen der allgemeinen Formel (34a), (34b) und (34c) bzw. deren $Z^{\circ}$-freien Vorprodukte:

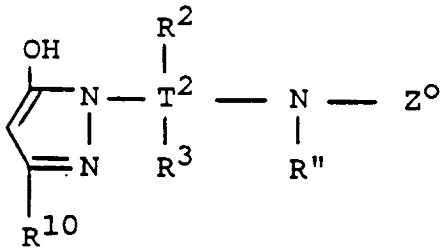

(34a)

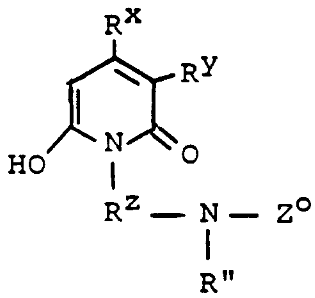

(34b)

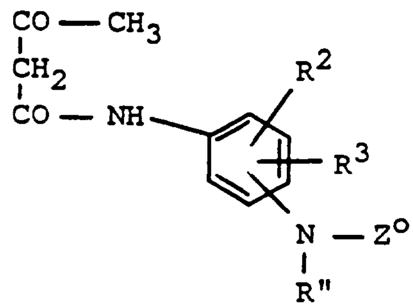

(34c)

in welchen

| | |
|---|---|
| R'', $R^2$, $R^3$, $R^x$, $R^y$, $R^z$ und Z° | die oben angegebenen, insbesondere bevorzugten Bedeutungen haben, |
| $T^2$ | einen Benzol- oder Naphthalinring bedeutet und |
| $R^{10}$ | eine Methyl- oder Carboxygruppe ist. |

Kupplungskomponenten, die den Verbindungen der allgemeinen Formeln (34a) bis (34c) entsprechen und die anstelle des Restes Z° ein Wasserstoffatom besitzen, in deren freie Aminogruppe nach beendeter Kupplung der Rest Z° eingeführt werden kann, sind beispielsweise:

1-(3'- oder 4'-Aminophenyl)-, 1-(2'-Sulfo-5'-aminophenyl)- und 1-(2'-Methoxy-5'-aminophenyl)-3-carboxy-5-pyrazolon, 1-(3'- oder 4'-Aminophenyl)-3-methyl-5-pyrazolon, und 1-(6'-Amino-4',8'-disulfonaphthyl-2')-3-carboxy-5-pyrazolon.

Bevorzugte faserreaktive Kupplungskomponenten entsprechend den Formeln (34a) und (34b) sind beispielsweise Verbindungen der Formeln (35a) bis (35f):

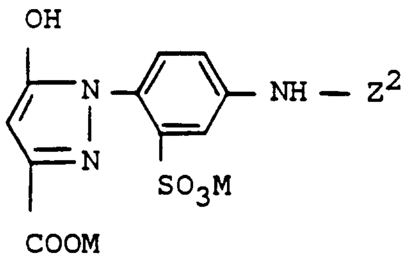

(35a)

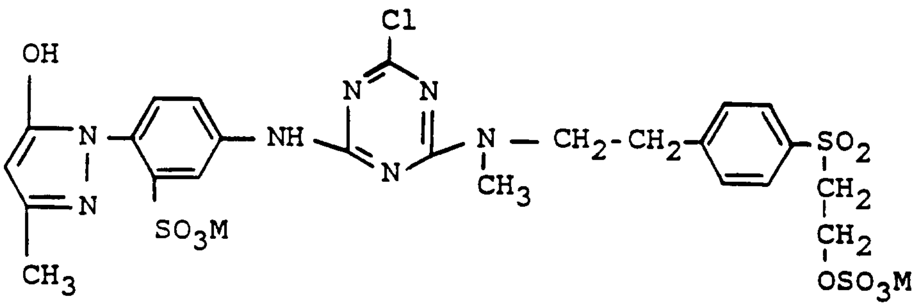

(35b)

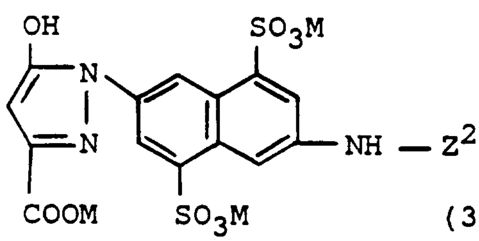

(35c)

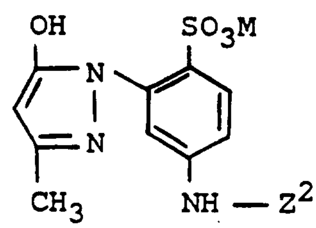

(35d)

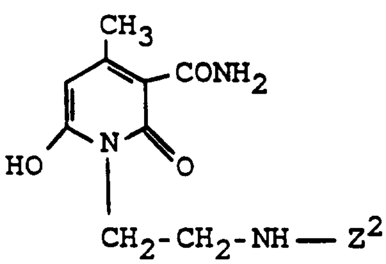

(35e)

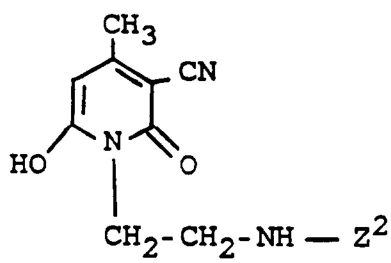

(35f)

in welchen M und $Z^2$ die obengenannten Bedeutungen haben.

Die erfindungsgemäßen Farbstoffe der allgemeinen Formel (1) besitzen faserreaktive Eigenschaften und eignen sich sehr vorteilhaft zum Färben und Bedrucken von hydroxygruppen-Fasermaterialien, insbesondere von Baumwolle, und des weiteren von synthetischen oder natürlichen Polyamidfasermaterialien, wie beispielsweise Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Chlortriazin- und Vinylsulfonreihe besitzen. Insbesondere sind die erfindungsgemäßen Farbstoffe bei 20 bis 40 °C und im Klotz-Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Zu einer Lösung des Natriumsalzes von 29,7 Teilen 4-(β-Sulfatoethylsulfonyl)-2-aminophenol in 70 Teilen Wasser und 90 Teilen Eis gibt man 7,4 Teile 96 %ige Schwefelsäure und diazotiert mit 14 Teilen einer wäßrigen 40 %igen Natriumnitritlösung bei 0 bis 10°C unter einstündigem Rühren. Überschüssiges Nitrit wird mittels Amidosulfonsäure zerstört. Es wird eine Lösung von 27,5 Teilen des Natriumsalzes von 1-Naphthol-7-amino-3-sulfonsäure in 200 Teilen Wasser hinzugegeben und die Kupplungsreaktion bei einem pH-Wert zwischen 4,5 und 5 gehalten. Anschließend werden 25 Teile Kupfer(II)-sulfatpentahydrat zugesetzt, und es wird noch 1 Stunde bei einem pH-Wert zwischen 5 und 6 und bei etwa 20°C weitergerührt. Der Reaktionsansatz wird mit etwas Kieselgur versetzt und filtriert und das Filtrat unter gutem Rühren bei 0°C langsam mit 19 Teilen Cyanurchlorid versetzt, wobei man mittels einer wäßrigen 2n-Natriumcarbonat-Lösung den pH-Wert zwischen 4 und 4,5 hält. Anschließend wird dem Reaktionsansatz bei etwa 20°C und unter Einhaltung eines pH-Wertes zwischen 5 und 6 eine Suspension von 33 Teilen 4-(β-Sulfatoethylsulfonyl)-1-(β-aminoethyl)-benzol hinzugegeben. Man rührt den Ansatz noch 4 Stunden bei etwa 20°C weiter, filtriert ihn sodann nach Zugabe von etwas Kieselgur und Einstellung eines pH-Wertes von 5 und dampft das Filtrat ein und isoliert den Farbstoff durch Aussalzen mittels eines Elektrolyten, wie beispielsweise Natriumchlorid oder Kaliumchlorid.

Man erhält das Alkalimetallsalz des Kupferkomplex-Monoazofarbstoffes der Formel

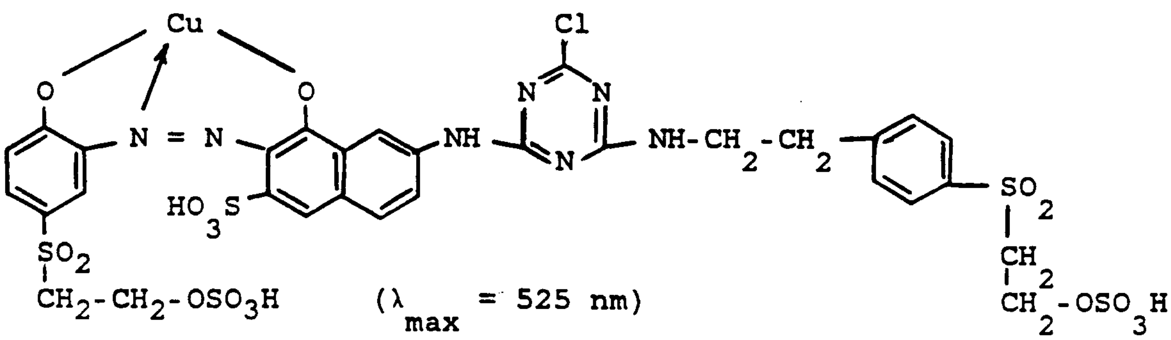

($\lambda_{max}$ = 525 nm)

als elektrolytsalzhaltiges Pulver. Der erfindungsgemäße Farbstoff liefert nach den in der Technik für faserreaktive Farbstoffe üblichen Applikations- und Fixiermethoden, wie beispielsweise nach bekannten Auszieh- und Klotzverfahren auf Wolle oder synthetischen Polyamidfasern und insbesondere auf Cellulosefasern rotviolette Färbungen von hoher Farbstärke, gutem Farbaufbau und guten Echtheiten, von denen insbesondere die guten Waschechtheiten, die gute Lichtechtheit und die guten Schweißechtheiten hervorzuheben sind.

**Beispiele 2 bis 10**

In den nachfolgenden Tabellenbeispielen sind weitere erfindungsgemäße Farbstoffe entsprechend einer allgemeinen Formel (E)

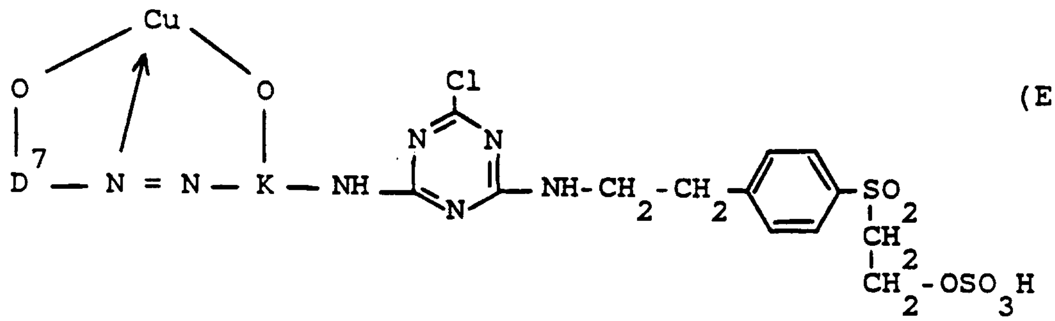

(E)

mittels ihrer Komponenten beschrieben. Sie lassen sich in erfindungsgemäßer Weise, beispielsweise analog den Angaben des Ausführungsbeispieles 1, durch Umsetzung der aus der Formel ersichtlichen Komponenten, wie der phenolischen oder naphtholischen Diazokomponente entsprechend der allgemeinen Formel $HO-D^7-NH_2$ der aminogruppenhaltigen Kupplungskomponente $H-K(OH)-NH_2$ , Cyanurchlorid und 4-(β-Sulfatoethylsulfonyl)-1-(β-aminoethyl)-benzol herstellen und liefern auf den in der Beschreibung genannten Materialien, insbesondere auf Cellulosefasermaterialien, nach den üblichen Färbeverfahren für faserreaktive Farbstoffe kräftige und echte Färbungen in dem in dem jeweiligen Tabellenbeispiel angegebenen Farbton.

| Bsp. | Diazokomponente $HO-D^7-NH_2$ | Kupplungskomponente $H-K(OH)-NH_2$ | Farbton |
|---|---|---|---|
| 2 | 4-(β-Sulfatoethylsulfonyl)-2-aminophenol | 3-Sulfo-6-amino-1-naphthol | violett |
| 3 | 5-(β-Sulfatoethylsulfonyl)-4-methoxy-2-aminophenol | 3,6-Disulfo-1-amino-8-naphthol | blau |
| 4 | 5-(β-Sulfatoethylsulfonyl)-2-amino-phenol | 4,6-Disulfo-1-amino-8-naphthol | violett |
| 5 | 4-(β-Sulfatoethylsulfonyl)-2-aminophenol | 3-Sulfo-7-amino-1-naphthol | violett |
| 6 | 8-(β-Sulfatoethylsulfonyl)-6-sulfo-2-amino-1-naphthol | 3,6-Disulfo-1-amino-8-naphthol | blau |
| 7 | 6-(β-Sulfatoethylsulfonyl)-8-sulfo-2-amino-1-naphthol | dito | blau |
| 8 | 4-(β-Sulfatoethylsulfonyl)-2-amino-phenol | 3,6-Disulfo-1-amino-8-naphthol | violett |
| 9 | dito | 1-(2'-Sulfo-4'-aminophenyl)-3-methyl-5-pyrazolon | rotstichig braun |
| 10 | dito | 1-(2'-Sulfo-4'-aminophenyl)-3-carboxy-5-pyrazolon | dito |

## Beispiel 11

Das Kondensationsprodukt aus 18,8 Teilen 1,3-Phenylendiamin-4-sulfonsäure, 18,5 Teilen Cyanurchlorid und 36,7 Teilen 4-(β-Sulfatoethylsulfonyl)-1-(β-aminoethyl)-benzol wird salzsauer diazotiert, mit 39,5

Teilen 1-(4'-β-Sulfatoethylsulfonylphenyl)-3-carboxypyrazol-5-on versetzt und bei einem pH-Wert zwischen 5 und 7 gekuppelt. Die erfindungsgemäße Verbindung wird mit Kaliumchlorid aus neutraler Lösung ausgefällt und getrocknet. Das erhaltene Alkalisalz der Verbindung der Formel

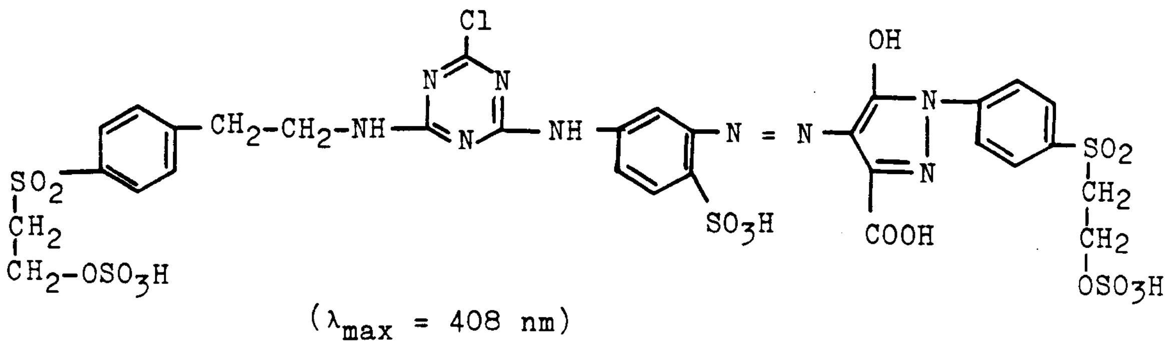

($\lambda_{max}$ = 408 nm)

färbt nach den für faserreaktive Farbstoffe üblichen Färbeverfahren Baumwolle in echten gelben Tönen mit guten Auszieh- und Fixiergraden. Von den Echtheiten können die Licht- und Schweißechtheiten hervorgehoben werden.

**Beispiel 12**

Eine Lösung von 59,1 Teilen 1-(4'-β-Sulfatoethylsulfonyl)-3-carboxy-4-(4'-amino-2'-sulfo-phenyl-1'-azo)-5-pyrazolon in 750 Teilen Eiswasser wird bei einer Temperatur zwischen 0 und 5 °C und einem pH-Wert von 5 mit 18,5 Teilen Cyanurchlorid umgesetzt. Sobald keine freien Aminogruppen mehr nachweisbar sind, werden 36,7 Teile 4-(β-Sulfatoethylsulfonyl)-1-(β-aminoethyl)-benzol hinzugegeben, und die Kondensationsreaktion wird bei 40 °C und einem pH-Wert von 7 durchgeführt. Der erhaltene erfindungsgemäße Farbstoff wird mit Kaliumchlorid ausgefällt und getrocknet. Es wird ein elektrolythaltiges Pulver des Alkalimetallsalzes des Azofarbstoffes der Formel

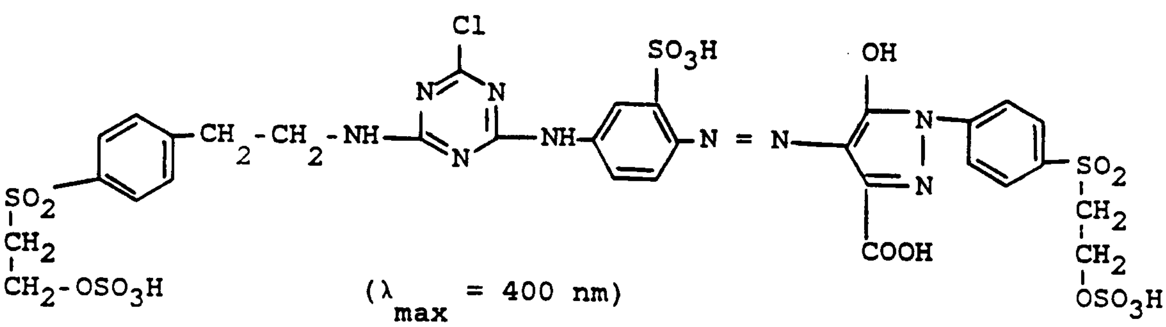

($\lambda_{max}$ = 400 nm)

erhalten, der nach üblichen Färbeverfahren für faserreaktive Farbstoffe Baumwolle in echten goldgelben Tönen färbt.

**Beispiele 13 bis 26**

Weitere erfindungsgemäße Farbstoffe entsprechend einer allgemeinen Formel (B)

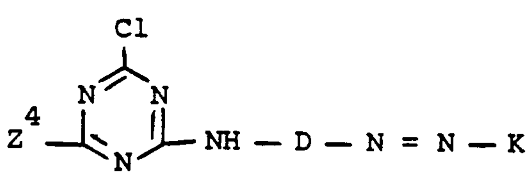

(B)

sind in den nachfolgenden Tabellenbeispielen mit Hilfe der dort angegebenen Komponenten beschrieben. Sie lassen sich in erfindungsgemäßer Weise, beispielsweise analog den obigen Ausführungsbeispielen, unter Anwendung des Kondensationsproduktes aus einer Diaminobenzolsulfonsäure entsprechend der Formel $H_2N\text{-}D\text{-}NH_2$ , Cyanurchlorid und dem Amin entsprechend der allgemeinen Formel (23) als angekuppelten Diazokomponente $Z\text{-}D\text{-}NH_2$ und der Kupplungskomponente H-K herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | $H-Z^4$ entspr. Amin (23) | Farbton |
|---|---|---|---|---|
| 13 | 1-(4'-β-Sulfatoethyl-sulfonyl-phenyl)-3-carboxy-5-pyrazolon | 1,4-Diaminobenzol-2,5-disulfonsäure | 4-(β-Sulfatoethylsulfonyl)-1-(β-aminoethyl)-benzol | gelb |
| 14 | 1,4-Dimethyl-2-hydroxy-3-sulfo-6-pyridon | 1,3-Diaminobenzol-4,6-disulfonsäure | dito | grünstichig gelb |
| 15 | 1-Ethyl-4-methyl-3-carbamoyl-2-hydroxy-6-pyridon | dito | 4-(β-Sulfatoethylsulfonyl)-2-sulfo-1-(β-aminoethyl)-benzol | grünstichig gelb |
| 16 | dito | dito | 4-(β-Sulfatoethylsulfonyl)-1-(β-aminoethyl)-benzol | grünstichig gelb |
| 17 | 1-(2'-Methyl-4'-sulfo-phenyl)-3-carboxy-5-pyrazolon | 1,3-Diaminobenzol-4-sulfonsäure | dito | gelb |
| 18 | 3-Sulfo-7-(3'-sulfo-phenyl)-amino-1-naphthol | dito | dito | orange |
| 19 | 1-Ethyl-2-hydroxy-4-methyl-5-carbamoyl-6-pyridon | dito | dito | gelb |
| 20 | 3-Sulfo-7-acetylamino-1-naphthol | dito | dito | orange |
| 21 | 1-[(2'-β-Sulfatoethyl-sulfonyl)-ethyl]-4-methyl-3-cyano-2-hydroxy-6-pyridon | 1,3-Diaminobenzol-4-sulfonsäure | 4-(β-Sulfatoethylsulfonyl)-1-(β-aminoethyl)-benzol | gelb |

| Bsp. | Kupplungskomponente H-K | Diaminobenzolsulfonsäure | $H-Z^4$ entspr. Amin (23) | Farbton |
|---|---|---|---|---|
| 22 | dito | 1,4-Diaminobenzol-2-sulfonsäure | dito | gelb |
| 23 | 1-(4'-β-Sulfatoethyl-sulfonyl-phenyl)-3-carboxy-5-pyrazolon | 1,3-Diaminobenzol-4-sulfonsäure | 4-(β-Sulfatoethylsulfonyl)-2-sulfo-1-(β-aminoethyl)-benzol | gelb (407) |
| 24 | 1-(4'-Sulfophenyl)-3-methyl-5-pyrazolon | dito | 4-(β-Sulfatoethylsulfonyl)-1-(β-aminoethyl)-benzol | gelb |
| 25 | dito | 1,4-Diaminobenzol-2-sulfonsäure | dito | gelb |
| 26 | 3-Sulfo-7-(4'-β-sulfato-ethylsulfonyl-phenyl)-amino-1-naphthol | 1,3-Diaminobenzol-4-sulfonsäure | dito | rot |

**Beispiel 27**

Eine Lösung von 41,1 Teilen 2-Amino-6-(β-sulfatoethylsulfonyl)-naphthalin-1-sulfonsäure in 200 Teilen Wasser wird bei 0°C mit 6,9 Teilen Natriumnitrit salzsauer diazotiert und mit 15 Teilen 3-Acetylaminoanilin

bei einem pH-Wert zwischen 4 und 5 gekuppelt. Die erhaltene Azoverbindung wird mit 19 Teilen Cyanurchlorid bei einer Temperatur von 0 °C und einem pH-Wert von 4 unter starkem Rühren acyliert, das Monokondensationsprodukt mit 36,7 Teilen 4-(β-Sulfatoethylsulfonyl)-1-(β-aminoethyl)-benzol bei einem pH-Wert von 5 bis 6 und einer Temperatur von 0 bis 20 °C umgesetzt und der erhaltene erfindungsgemäße Farbstoff mit Kaliumchlorid ausgefällt und isoliert. Das Alkalimetallsalz der Verbindung der Formel

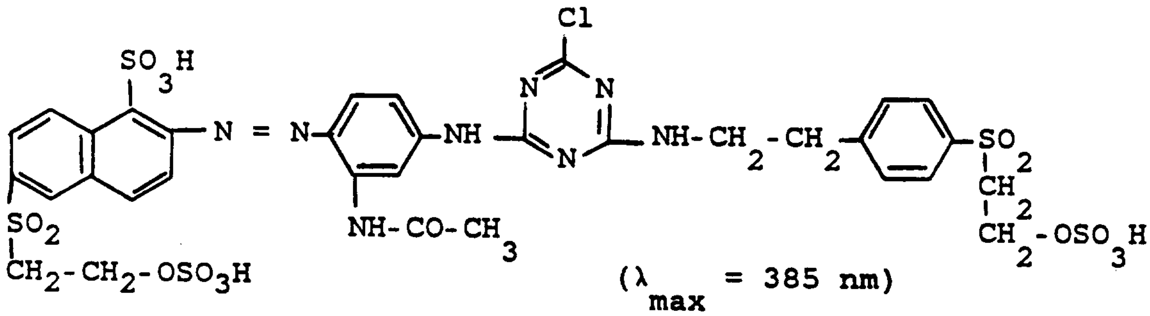

($\lambda_{max}$ = 385 nm)

färbt nach üblichen Färbeverfahren für faserreaktive Farbstoffe Baumwolle in echten rotstichig gelben Tönen. Von den Echtheiten sind insbesondere die Lichtechtheit, die Alkalischweißlichtechtheit und die Chlorwasserechtheit hervorzuheben.

**Beispiele 28 bis 38**

Weitere erfindungsgemäße Farbstoffe entsprechend einer allgemeinen Formel (C)

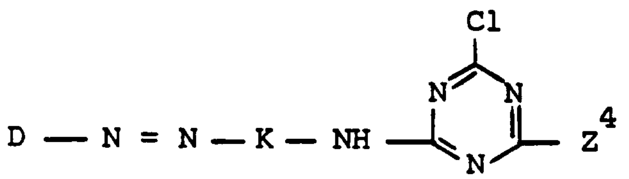

(C)

in welchen $Z^4$ der Rest des Ausgangsamins (23), D der Rest der Diazokomponente ohne faserreaktive Gruppe und K der Rest einer aminogruppenhaltigen Kupplungskomponente entsprechend der Formel H-K-NHR" ist, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 56, unter Anwendung der Diazokomponente $D-NH_2$ , der Kupplungskomponente H-K-NHR" , Cyanurchlorid und dem Amin entsprechend der allgemeinen Formel (23) herstellen. Die neuen Verbindungen besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | $H-Z^4$ entspr. Amin (23) | Farbton |
|---|---|---|---|---|
| 28 | 6-(β-Sulfatoethyl-sulfonyl)-1-sulfo-2-amino-naphthalin | 3-Amino-phenylharnstoff | 4-(β-Sulfatoethylsulfonyl)-1-(β-aminoethyl)-benzol | goldgelb |
| 29 | dito | N-(3-Aminophenyl)-N'-methyl-harnstoff | dito | goldgelb |
| 30 | 8-(β-Sulfatoethyl-sulfonyl)-6-sulfo-2-amino-naphthalin | 3-Amino-phenylharnstoff | 4-(β-Sulfatoethylsulfonyl)-2-sulfo-1-(aminoethyl)-benzol | goldgelb (408) |
| 31 | 6-(β-Sulfatoethyl-sulfonyl)-8-sulfo-2-amino-naphthalin | dito | 4-(β-Sulfatoethylsulfonyl)-1-(β-aminoethyl)-benzol | goldgelb |
| 32 | dito | N-Phenyl-N'-(3-amino-phenyl)-harnstoff | 4-(β-Sulfatoethylsulfonyl)-1-(β-aminoethyl)-benzol | goldgelb |
| 33 | dito | N-(3-Aminophenyl)-N'-methyl-harnstoff | dito | goldgelb |
| 34 | 4-(β-Sulfatoethylsulfo-nyl)-anilin | 3-Acetylamino-anilin | dito | goldgelb |
| 35 | dito | 3-Amino-phenylharnstoff | dito | goldgelb (416) |
| 36 | 3-(β-Sulfatoethylsulfo-nyl)-anilin | dito | dito | goldgelb |
| 37 | 6-(β-Sulfatoethylsulfo-nyl)-8-sulfo-2-amino-naphthalin | dito | dito | goldgelb |
| 38 | 8-(β-Sulfatoethylsulfo-nyl)-6-sulfo-2-amino-naphthalin | dito | dito | goldgelb |

## Beispiel 39

95 Teile Cyanurchlorid werden in bekannter Weise erst mit 160 Teilen 1-Amino-3,6-disulfo-8-naphthol und anschließend mit 155 Teilen 4-(β-Sulfatoethylsulfonyl)-1-(β-aminoethyl)-benzol zum Dikondensations-

produkt umgesetzt, das sodann zur Lösung des Diazoniumsalzes von 226 Teilen 2-Methoxy-5-(β-sulfatoethylsulfonyl)-anilin gegeben wird; die Kupplungsreaktion erfolgt bei einem pH-Wert zwischen 4 und 4,5. Der gebildete erfindungsgemäße Farbstoff wird mit Kaliumchlorid ausgefällt. Es wird das Alkalimetallsalz der Verbindung der Formel

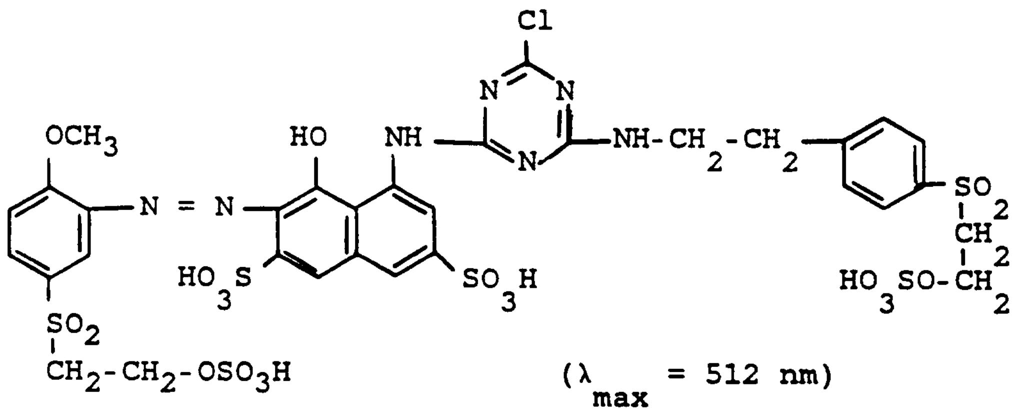

($\lambda_{max}$ = 512 nm)

erhalten, das Baumwolle in leuchtend roten, echten Tönen färbt. Von den Echtheiten können die Waschechtheiten und die Lichtechtheiten der mit Wasser oder einer Schweißlösung befeuchteten Färbungen hervorgehoben werden.

**Beispiele 40 bis 57**

Weitere erfindungsgemäße Farbstoffe entsprechend einer allgemeinen Formel (D)

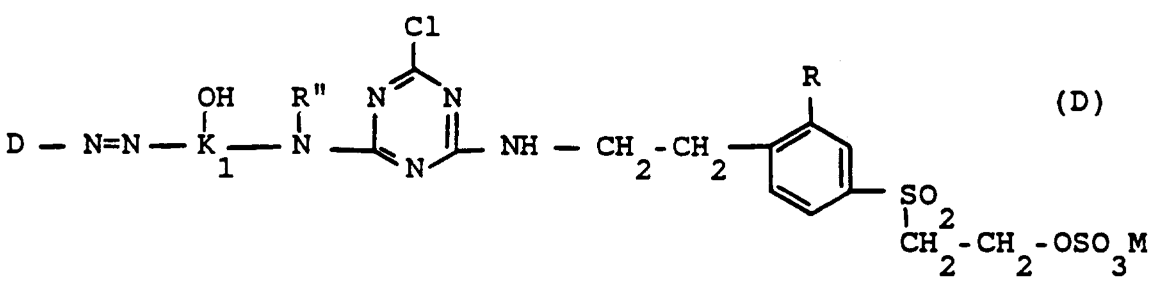

(D)

sind in den nachfolgenden Tabellenbeispielen mit Hilfe der in Formel (D) angegebenen Formelreste beschrieben. Sie lassen sich in erfindungsgemäßer Weise, beispielsweise analog dem Ausführungsbeispiel 39, unter Anwendung der Diazokomponente $D-NH_2$ , der Aminonaphthol-sulfonsäure entsprechend einer Formel $H(OH)K_1-NHR''$ als naphtholischer Kupplungskomponente sowie Cyanurchlorid und dem Amin der entsprechenden allgemeinen Formel (23) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Kupplungskomponente $H(OH)K_1-NHR''$ | Subst. R | Farbton |
|---|---|---|---|---|
| 40 | 6-(β-Sulfatoethylsulfonyl)-1-naphthyl | 1-Amino-3,6-disulfo-8-naphthol | Wasserstoff | rot |
| 41 | 4-Methoxy-2-(β-sulfatoethylsulfonyl)-phenyl | 3-Amino-7-sulfo-5-naphthol | Sulfo | rot (505) |
| 42 | 4-(β-Sulfatoethylsulfonyl)-anilin | 1-Amino-3,6-disulfo-8-naphthol | Sulfo | rot (511) |
| 43 | 3-(β-Sulfatoethylsulfonyl)-anilin | dito | Sulfo | rot (510) |
| 44 | 2-Sulfo-5-(β-sulfatoethylsulfonyl)-anilin | dito | Sulfo | rot (507) |
| 45 | 4-(β-Sulfatoethylsulfonyl)-anilin | 1-Amino-4,6-disulfo-8-naphthol | Sulfo | rot |
| 46 | dito | 3-Amino-7-sulfo-5-naphthol | Sulfo | rotorange |
| 47 | 6-Sulfo-8-(β-sulfatoethylsulfonyl)-2-naphthyl | 2-Amino-7-sulfo-5-naphthol | Sulfo | rotorange |
| 48 | 4-(β-Sulfatoethylsulfonyl)-phenyl | 1-(β-Aminoethyl)-4-methyl-3-carbamoyl-2-hydroxy-pyrid-6-on | Wasserstoff | gelb |
| 49 | dito | 1-(β-Aminoethyl)-4-methyl-3-cyano-2-hydroxy-pyrid-6-on | Wasserstoff | gelb |

| Bsp. | Rest D | Kupplungskomponente H(OH)$K_1$-NHR" | Subst. R | Farbton |
|---|---|---|---|---|
| 50 | 2-Sulfo-5-(β-sulfatoethylsulfonyl)-phenyl | 1-Amino-3,6-disulfo-8-naphthol | Wasserstoff | rot (510) |
| 51 | 3-(β-Sulfatoethylsulfonyl)-phenyl | dito | Wasserstoff | rot (518) |
| 52 | 1-Sulfo-6-(β-sulfatoethylsulfonyl)-2-naphthyl | dito | Sulfo | rot (515) |
| 53 | dito | dito | Wasserstoff | blaustichig rot (540) |
| 54 | 4-(β-Sulfatoethylsulfonyl)-phenyl | dito | Wasserstoff | rot (516) |
| 55 | 2-Methoxy-5-(β-sulfatoethylsulfonyl)-phenyl | dito | Sulfo | rot (519) |
| 56 | 2-Sulfo-4-(β-sulfatoethylsulfonyl)-phenyl | dito | Sulfo | rot (510) |
| 57 | dito | dito | Wasserstoff | rot (509) |

**Beispiel 58**

Bei 0 °C und einem pH-Wert von 4 bis 5 werden 47 Teile der bekannten Aminodisazoverbindung der Formel

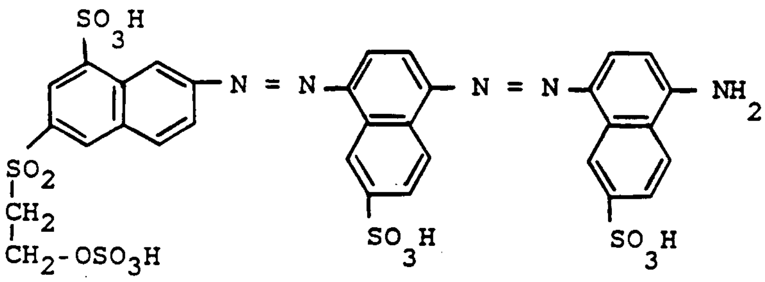

in 300 Teilen Wasser mit 8 Teilen Cyanurchlorid umgesetzt. Das entstandene Produkt wird anschließend mit 21 Teilen 4-(β-SulfatoethYlsulfonyl)-1-(β-aminoethyl)-benzol bei einer Temperatur von 20 °C und einem pH-Wert zwischen 5 und 6 umgesetzt. Nach vier Stunden ist die Reaktion beendet. Der entstandene erfindungsgemäße Farbstoff wird mit Kaliumchlorid ausgefällt. Man erhält das elektrolythaltige Farbstoffpulver des Alkalimetallsalzes der Disazoverbindung

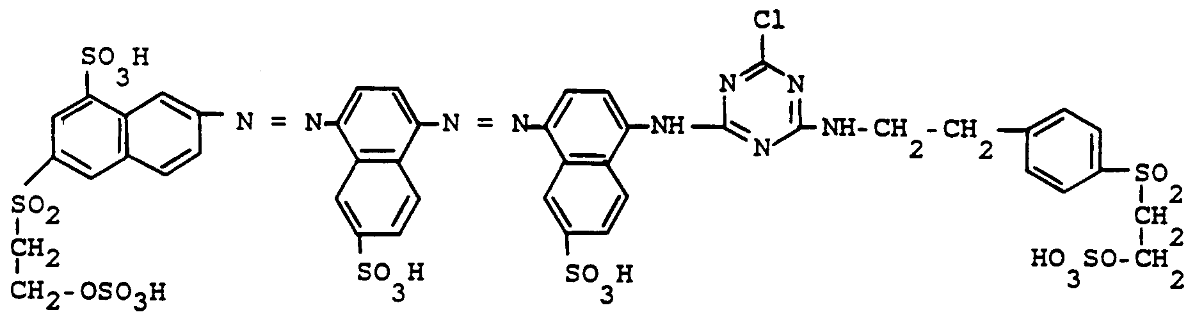

($\lambda_{max}$ = 470 nm)

die Baumwolle in echten rötlich-braunen Tönen färbt.

**Beispiele 59 bis 63**

In den nachfolgenden Tabellenbeispielen sind weitere erfindungsgemäße Farbstoffe entsprechend einer allgemeinen Formel $D^6$-$Z^3$ mit Hilfe des Reste $D^6$ beschrieben ($Z^3$ hat die in der Beschreibung angegebene Bedeutung). Sie können in erfindungsgemäßer Weise, so analog dem Ausführungsbeispiel 58, durch Umsetzung des jeweiligen Ausgangs-Aminodisazo-Farbstoffes entsprechend der allgemeinen Formel $D^6$-$NH_2$ mit Cyanurchlorid und 4-(β-Sulfatoethylsulfonyl)-1-(β-aminoethyl)-benzol hergestellt werden. Sie besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest | Farbton |
|---|---|---|
| 59 | 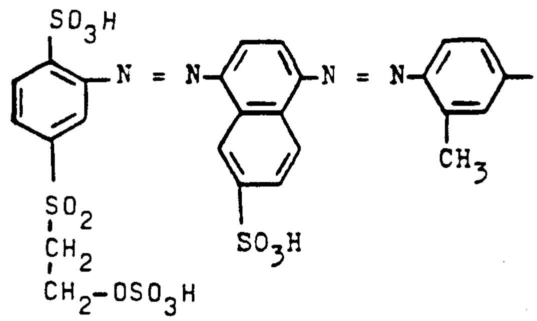 | braun |
| 60 | 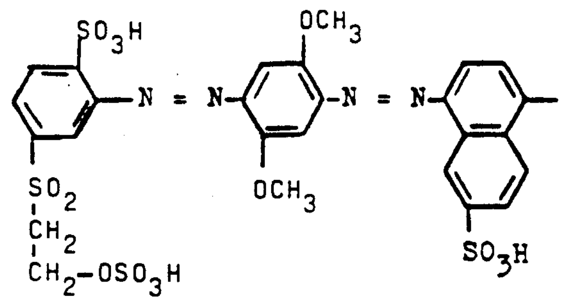 | rotbraun |
| 61 | 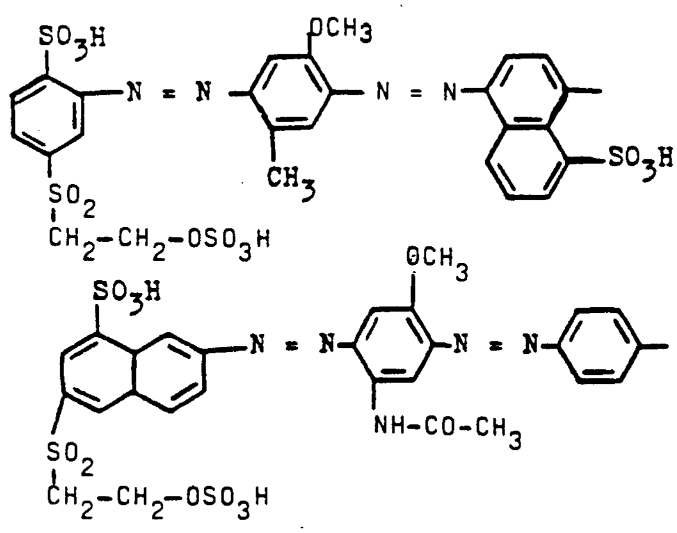 | orangebraun |
| 62 | | orangebraun |
| 63 | 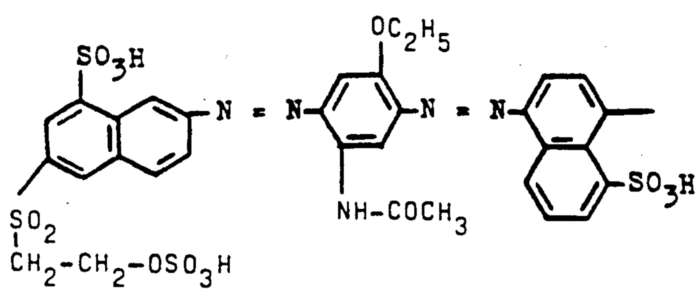 | rotbraun |

**Beispiel 64**

18,8 Teile 1,3-Phenylendiamin-4-sulfonsäure werden unter starkem Rühren bei 0 °C mit 18,5 Teilen Cyanurchlorid umgesetzt. Durch Zugabe einer wäßrigen Natriumcarbonatlösung wird der pH-Wert zwischen

4 und 5 gehalten. Anschließend werden 31 Teile 4-(β-Sulfatoethylsulfonyl)-1-(β-aminoethyl)-benzol bei 20 °C und einem pH-Wert zwischen 5 und 6 ankondensiert. Das erhaltene sekundäre Kondensationsprodukt wird sodann in üblicher Weise nach Zugabe von Salzsäure mit Natriumnitrit bei einer Temperatur zwischen 0 und 5 °C diazotiert. Die erhaltene Diazoniumsalzlösung wird zu einer Suspension von 30,8 Teilen 1-Amino-8-naphthol-3,6-disulfonsäure in 300 Teilen Wasser gegeben. Die Kupplungsreaktion erfolgt bei einem deutlich sauren pH-Wert.

Die erhaltene Monoazoverbindung wird nunmehr mit einer salzsauren, wäßrigen Lösung der Diazoniumverbindung von 36,1 Teilen 4-(β-Sulfatoethylsulfonyl)-2-sulfo-anilin versetzt; die Kupplungsreaktion zum Disazofarbstoff wird bei einem pH-Wert zwischen 4,5 und 5,5 und bei einer Temperatur zwischen 0 und 20 °C durchgeführt. Die erfindungsgemäße Verbindung wird durch Kaliumchlorid ausgefällt. Nach Trocknen erhält man ein schwarzes elektrolythaltiges Pulver mit dem Alkalimetallsalz der Verbindung der Formel

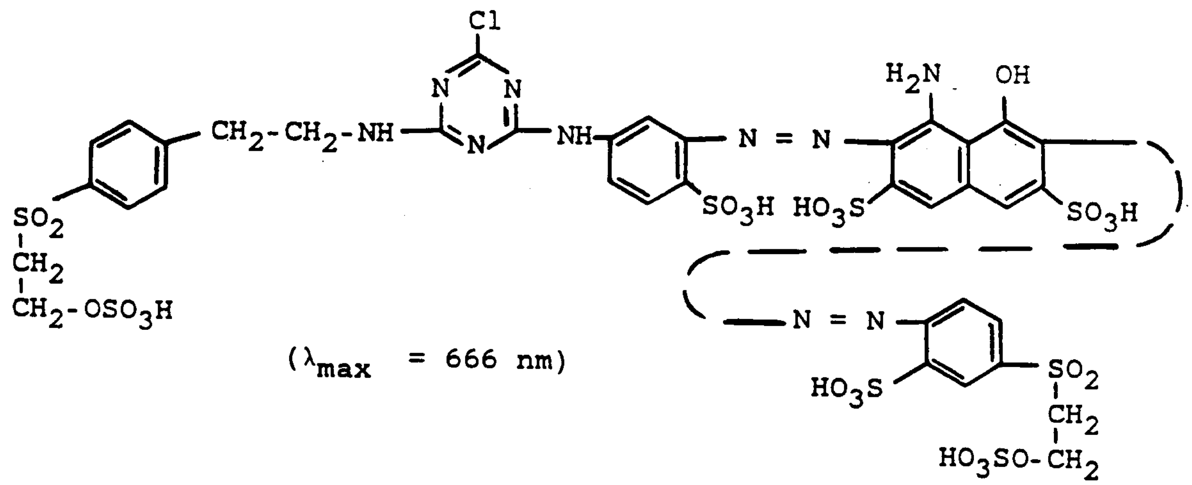

($\lambda_{max}$ = 666 nm)

die nach den in der Anwendungstechnik für faserreaktive Farbstoffe üblichen Färbe- und Druckverfahren auf Baumwolle mit hohen Auszieh- und Fixiergraden rotstichig marineblaue Färbungen mit guten Echtheiten liefert. Von den Echtheiten sind die Licht- und Waschechtheiten hervorzuheben.

**Beispiele 65 bis 68**

Weitere erfindungsgemäße Farbstoffe entsprechend einer allgemeinen Formel (F)

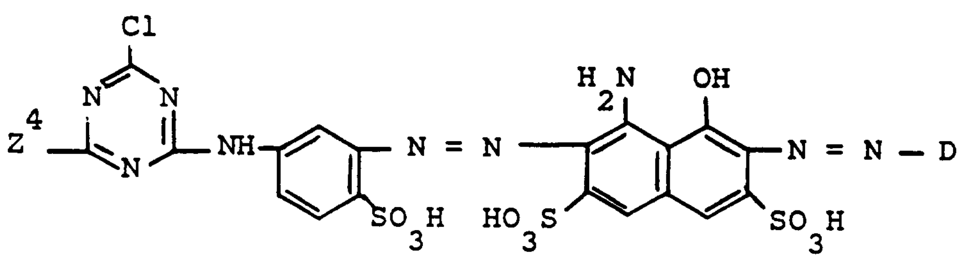

(F)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 64 unter Anwendung der neutral gekuppelten Diazokomponente $D-NH_2$ , 1-Amino-8-naphthol-3,6-disulfonsäure als bivalenter Kupplungskomponente und dem Kondensationsprodukt aus 1,3-Phenylendiamin-4-sulfonsäure, Cyanurchlorid und dem Amin der allgemeinen Formel (23) als sauer angekuppelter Diazokomponente, herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D - | Rest $-Z^4$ | Farbton |
|---|---|---|---|
| 65 | 2,5-Dimethoxy-4-(β-sulfatoethylsulfonyl)-phenyl | β-[4-(β-Sulfatoethylsulfonyl)-phenyl-]-ethylamino | rotstichig marineblau |
| 66 | 2-Methoxy-5-(β-sulfatoethylsulfonyl-)-phenyl | β-[4-(β-Sulfatoethylsulfonyl)-phenyl-]-ethylamino | rotstichig marineblau |
| 67 | 3-(β-Sulfatoethylsulfonyl)-phenyl | β-[4-(β-Sulfatoethylsulfonyl)-1-phenyl]-ethylamino | rotstichig marineblau |
| 68 | 2-Methoxy-5-methyl-4-(β-sulfatoethylsulfonyl)-phenyl | β-[4-(β-Sulfatoethylsulfonyl)-phenyl-]-ethylamino | rotstichig marineblau |

**Patentansprüche**
**Patentansprüche für folgende Vertragsstaaten : BE, CH, DE, FR, GB, IT, LI**

**1.** Farbstoff entsprechend der allgemeinen Formel (1)

$$(Y^1{-}SO_2)_k{-}\ A\ {-}Z_n \qquad (1)$$

in welcher

A der Rest eines wasserlöslichen, sulfo- und/oder carboxygruppenhaltigen Farbstoffs ist,
$Y^1$ die Vinylgruppe oder eine β-Chlorethyl-, β-Thiosulfatoethyl-, β-Acetyloxyethyl- oder β-Sulfatoethyl-Gruppe ist,
k die Zahl 1 oder 2 ist,
n die Zahl 1 oder 2 ist und
Z eine Gruppe der allgemeinen Formel (2)

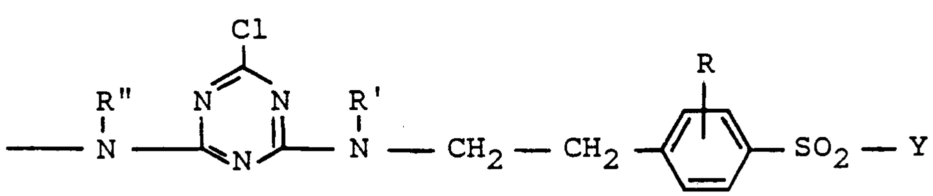 (2)

ist, in welcher
R' und R'' jedes, unabhängig voneinander, ein Wasserstoffatom oder eine Alkylgruppe von 1 bis 4 C-Atomen ist,
R ein Wasserstoffatom oder eine Sulfogruppe ist und
Y die Vinylgruppe oder eine β-Sulfatoethyl-Gruppe ist, wobei $Y^1$ und Y zueinander gleiche oder voneinander verschiedene Bedeutungen haben können,
jedoch ausgenommen Farbstoffe der allgemeinen Formel

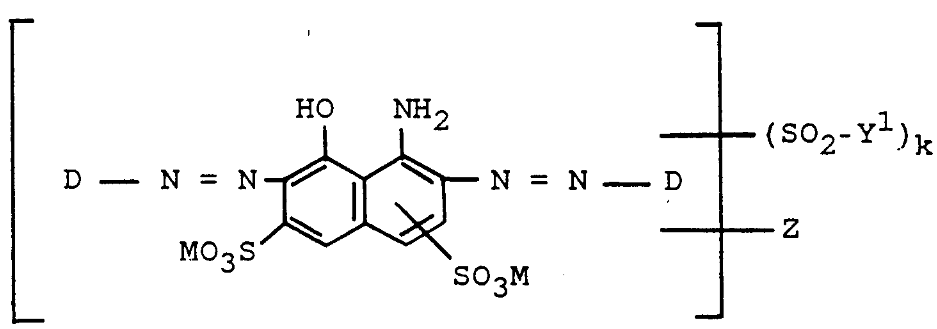

in welcher

M ein Wasserstoffatom oder ein Alkalimetall ist,

D jeweils für den Rest einer Diazokomponente steht, wobei beide D voneinander verschiedene Bedeutungen besitzen, und

Z, k und $Y^1$ eine der obengenannten Bedeutungen haben, wobei der Rest Z an einem der Reste D und die Gruppe(n) $-SO_2-Y^1$ direkt an ein aromatisches Kohlenstoffatom von D gebunden sind, wobei jedoch die Gruppen $-SO_2-Y^1$ und Z nicht gleichzeitig an demselben Rest D gebunden sind.

**2.** Farbstoffe nach Anspruch 1, dadurch gekennzeichnet, daß A der Rest eines sulfogruppenhaltigen Mono- oder Disazofarbstoffes ist.

**3.** Farbstoff nach Anspruch 1, dadurch gekennzeichnet, daß A der Rest eines sulfogruppenhaltigen 1:2-Chromkomplex- oder 1:2-Kobaltkomplex oder 1:1-Kupferkomplex-Monoazo- oder -Disazofarbstoffes ist.

**4.** Farbstoff nach Anspruch 1 entsprechend der allgemeinen Formel

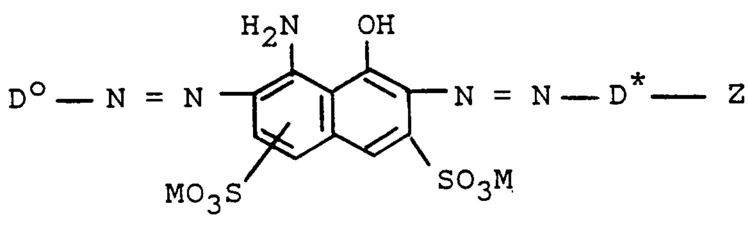

in welcher bedeuten:

M ist ein Wasserstoffatom oder ein Alkalimetall;

Z hat die in Anspruch 1 angegebene Bedeutung;

$D^o$ ist ein Rest der allgemeinen Formel (6a), (6b) oder (6c)

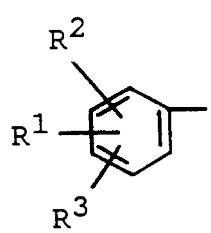 (6a)

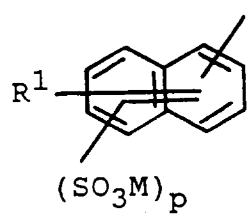 (6b)

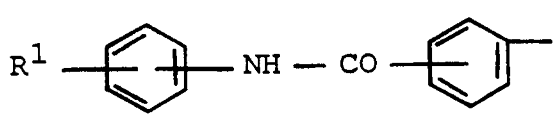 (6c)

in welchen

$R^1$ ein Rest der allgemeinen Formel $Y^1-SO_2-X^1-$ ist, worin $Y^1$ die in Anspruch 1 genannte Bedeutung besitzt und $X^1$ die Methylengruppe oder eine Methylaminogruppe ist,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

wobei der Benzol- bzw. Naphthalinring von Formeln (6a) und (6b) zusätzlich in o-Stellung

zur freien Bindung eine Hydroxygruppe enthalten kann,

p die Zahl Null, 1 oder 2 bedeutet (wobei diese Gruppe im Falle von p gleich Null ein Wasserstoffatom bedeutet) und

M die obengenannte Bedeutung hat;

D* ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann.

**5.** Farbstoff nach Anspruch 1 entsprechend der allgemeinen Formel (5b)

$$(Y^1\text{-}SO_2\text{-}X^1)_k - D^1 - N = N - (E^1 - N = N)_v - K^* - Z \qquad (5b)$$

in welcher bedeuten:

| | |
|---|---|
| $Y^1$, k und Z | haben die in Anspruch 1 genannten Bedeutungen; |
| $X^1$ | ist die Methylengruppe oder Methylaminogruppe oder bevorzugt eine direkte Bindung; |
| $D^1$ | ist ein Phenylenrest, der durch die Substituenten |
| $R^2$ und $R^3$ | substituiert ist, wobei |
| $R^2$ | Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und |
| $R^3$ | Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist, oder |
| $D^1$ | ist ein Naphthylenrest, der durch 1 oder 2 Sulfogruppen substituiert sein kann; |
| $E^1$ | ist ein Rest der allgemeinen Formel (7a), (7b), (7c) oder (7d) |

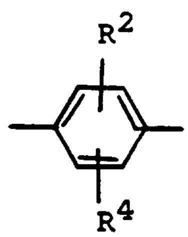

(7a)

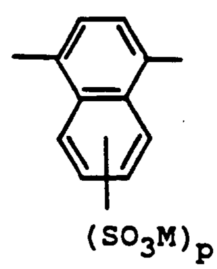

(7b)

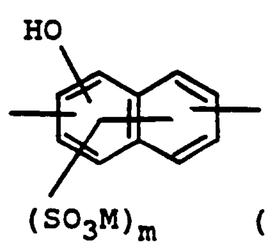

(7c)

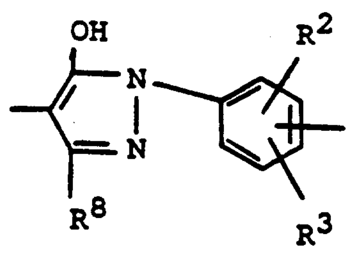

(7d)

in welchen

| | |
|---|---|
| M | ein Wasserstoffatom oder ein Alkalimetall ist, |
| p | die Zahl Null, 1 oder 2 bedeutet, |
| $R^2$ und $R^3$ | die oben angegebenen Bedeutungen haben, |
| $R^4$ | ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist, |
| m | die Zahl 1 oder 2 bedeutet und |
| $R^8$ | für Wasserstoff, Alkyl von 1 bis 4 C-Atomen, wie Methyl, Cyano, Carboxy, Carbalkoxy von 2 bis 5 C-Atomen, Carbonamido oder Phenyl steht, bevorzugt Methyl, Carboxy oder Carbalkoxy von 2 bis 5 C-Atomen, ist; |
| -K*-Z | ist ein Rest der allgemeinen Formel (8a), (8b), (8c), (8d), (8e) oder (8f) |

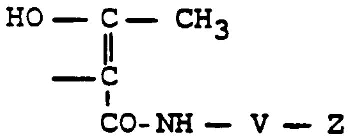

(8a)

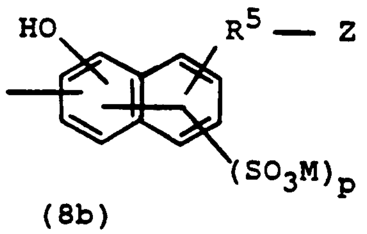

(8b)

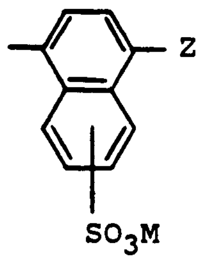

(8c)

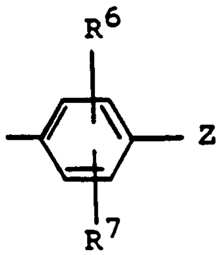

(8d)

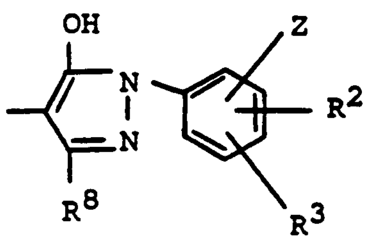

(8e)

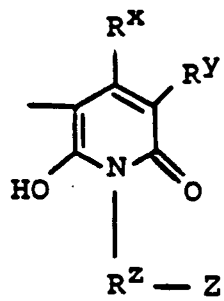

(8f)

in welchen

| | |
|---|---|
| $R^2$, $R^3$, Z, p und M | die obengenannten Bedeutungen haben und die Hydroxygrupe in Formel (8b) in ortho-Stellung zur freien Bindung, die mit der Azogruppe verbunden ist, steht, |
| V | ein Phenylenrest ist, der die obengenannten und definierten Reste $R^2$ und $R^3$ enthält, oder ein Naphthylenrest ist, der durch 1 oder 2 Sulfogruppen substituiert sein kann, |
| $R^5$ | eine direkte Bindung oder ein Rest der Formel -NH-CO-phenylen- , -NH-CO-NH-phenylen- , $-N(CH_3)$-CO-phenylen- oder $-N(CH_3)$-CO-NH-phenylen- ist, |
| $R^6$ | Wasserstoff, Alkyl von 1 bis 4 C-Atomen, Alkoxy von 1 bis 4 C-Atomen, Brom, Chlor oder Alkanoylamino von 2 bis 7 C-Atomen ist, |
| $R^7$ | Wasserstoff, Alkyl von 1 bis 4 C-Atomen, Alkoxy von 1 bis 4 C-Atomen, Chlor oder Alkanoylamino von 2 bis 7 C-Atomen, eine Ureido- oder Phenylureidogruppe ist, |
| $R^8$ | eine der oben angegebenen Bedeutungen hat, |
| $R^x$ | ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist, |
| $R^y$ | ein Wasserstoffatom, eine Sulfogruppe oder eine Sulfoalkylgruppe mit einem Alkylenrest von 1 bis 4 C-Atomen oder eine Cyano- oder Carbamoylgruppe |

ist und

$R^z$ eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;

v ist die Zahl Null oder 1.

**6.** Farbstoff nach Anspruch 1 entsprechend der allgemeinen Formel (5c)

$$Z - D^* - N = N - (E^1 - N = N)_v - K^1 - X^1 - SO_2 - Y^1 \quad (5c)$$

in welcher bedeuten:

Z und $Y^1$ haben die in Anspruch 1 genannten Bedeutungen;

$D^*$ ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann;

$E^1$ ist ein Rest der allgemeinen Formel (7a), (7b), (7c) oder (7d)

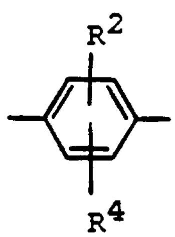
(7a)

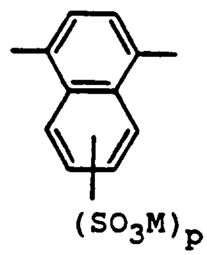
(7b)

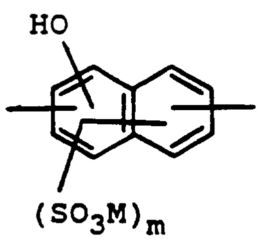
(7c)

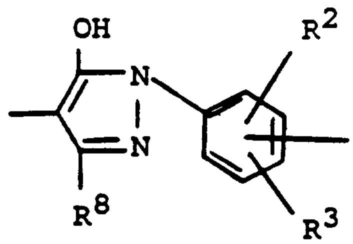
(7d)

in welchen

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist,

M — ein Wasserstoffatom oder ein Alkalimetall ist,
p — die Zahl Null, 1 oder 2 bedeutet,
m — die Zahl 1 oder 2 bedeutet und
$R^8$ — für Wasserstoff, Alkyl von 1 bis 4 C-Atomen, Cyano, Carboxy, Carbalkoxy von 2 bis 5 C-Atomen, Carbonamido oder Phenyl steht, bevorzugt Methyl, Carboxy oder Carbalkoxy von 2 bis 5 C-Atomen, ist;
v — ist die Zahl Null oder 1;
$K^1$ — ist ein Rest der allgemeinen Formel (9a), (9b) oder (9c)

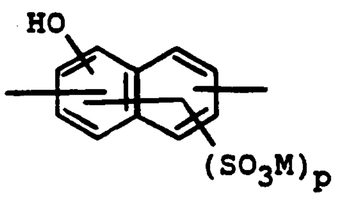 (9a)

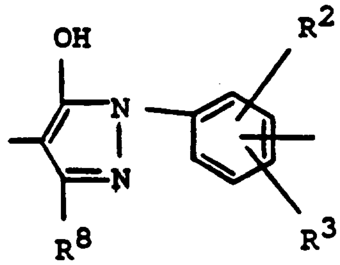 (9b)

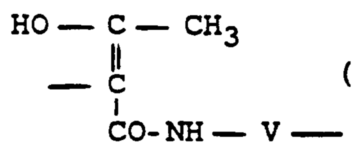 (9c)

in welchen
M, p, $R^2$, $R^3$ und $R^8$ — eine der obengenannten Bedeutungen haben, wobei die Hydroxygruppe in Formel (9a) in ortho-Stellung zur freien Bindung steht, die mit der Azogruppe verbunden ist, und
V — ein Phenylenrest ist, der die obengenannten und definierten Reste $R^2$ und $R^3$ enthält, oder ein Naphthylenrest ist, der durch 1 oder 2 Sulfogruppen substituiert sein kann;
$X^1$ — ist die Methylengruppe oder die Methylaminogruppe oder bevorzugt eine direkte Bindung.

**7.** Farbstoff nach Anspruch 1 entsprechend der allgemeinen Formel (5d)

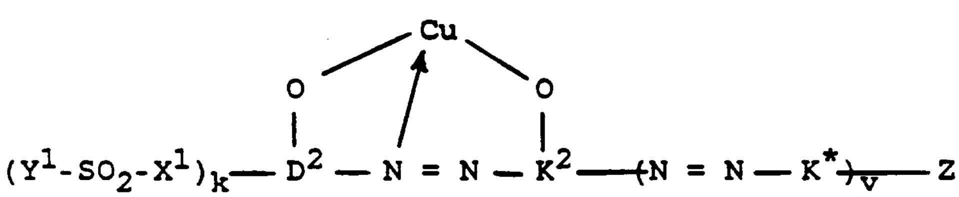 (5d)

in welcher bedeuten:
$Y^1$, k und Z — haben die in Anspruch 1 genannten Bedeutungen;
$X^1$ — ist die Methylengruppe oder die Methylaminogruppe oder bevorzugt eine direkte Bindung;
$D^2$ — ist ein Benzolrest, dessen freie Bindungen zum komplexbildenden Oxiatom und zur Azogruppe o-ständig zueinander stehen und der als zusätzliche Substituenten 1 oder 2 Substituenten aus der Gruppe Methyl, Ethyl, Methoxy, Ethoxy, Brom, Chlor, Carboxy und Sulfo enthalten kann, oder ist ein Naphthalinrest, an den die Oxigruppe in 1-Stellung und die Azogruppe in 2-Stellung gebunden sind und der als zusätzlichen Substituenten eine Sulfogruppe enthalten kann;

$K^2$ ist ein Rest der allgemeinen Formel (10a) oder (10b)

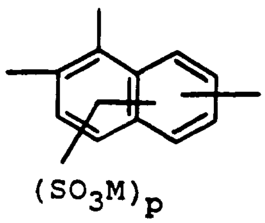
(10a)

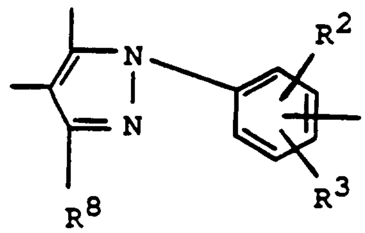
(10b)

in welchen

M ein Wasserstoffatom oder ein Alkalimetall ist,

p die Zahl Null, 1 oder 2 bedeutet,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist und

$R^8$ für Wasserstoff, Alkyl von 1 bis 4 C-Atomen, Cyano, Carboxy, Carbalkoxy von 2 bis 5 C-Atomen, Carbonamido oder Phenyl steht, bevorzugt Methyl, Carboxy oder Carbalkoxy von 2 bis 5 C-Atomen, ist;

v ist die Zahl Null oder 1;

-K*-Z ist ein Rest der allgemeinen Formel (8a), (8b), (8c), (8d), (8e) oder (8f)

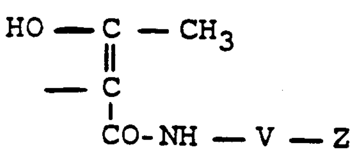
(8a)

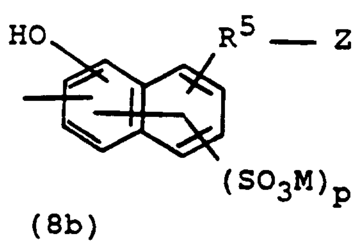
(8b)

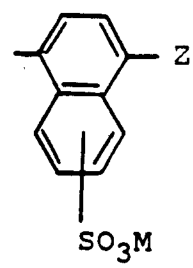
(8c)

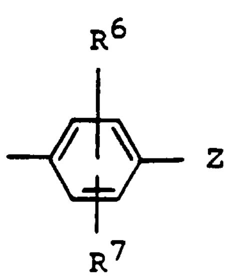
(8d)

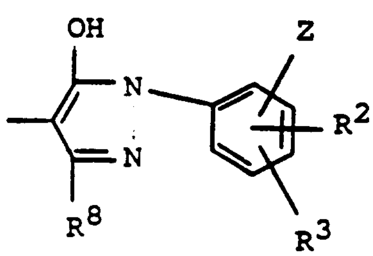
(8e)

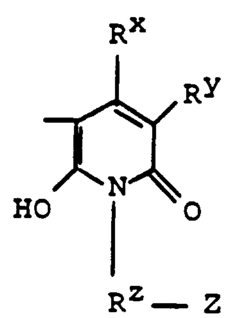
(8f)

in welchen

$R^2$, $R^3$, Z, p und M die obengenannten Bedeutungen haben und die Hydroxygrupe in Formel (8b) in ortho-Stellung zur freien Bindung, die mit der Azogruppe verbunden ist,

steht,

V ein Phenylenrest ist, der die obengenannten und definierten Reste $R^2$ und $R^3$ enthält, oder ein Naphthylenrest ist, der durch 1 oder 2 Sulfogruppen substituiert sein kann,

$R^5$ eine direkte Bindung oder ein Rest der Formel -NH-CO-phenylen- , -NH-CO-NH-phenylen- , $-N(CH_3)$-CO-phenylen- oder $-N(CH_3)$-CO-NH-phenylen- ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureidogruppe ist,

$R^8$ eine der oben angegebenen Bedeutungen hat,

$R^x$ ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen oder eine Cyano oder Carbamoylgruppe ist und

$R^z$ eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist.

**8.** Farbstoff nach Anspruch 1 entsprechend der allgemeinen Formel (12a)

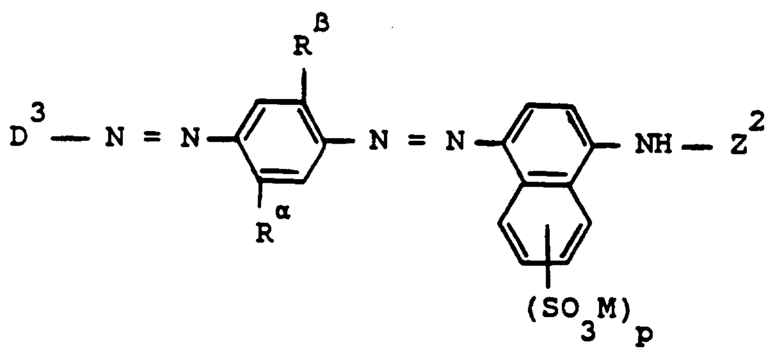

(12a)

in welcher bedeuten:

$D^3$ ist eine Gruppe der allgemeinen Formel (6a) oder (6b)

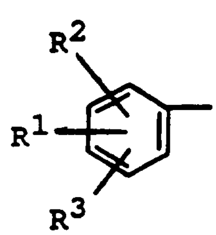

(6a)

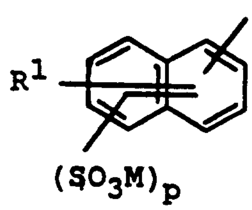

(6b)

in welchen

$R^1$ eine Gruppe der allgemeinen Formel $Y^1$-$SO_2$- mit $Y^1$ der in Anspruch 1 angegebenen Bedeutung ist,

$R^2$ ein Wasserstoffatom oder die Methyl-, Methoxy, Ethoxy- oder Sulfogruppe oder ein Chloratom ist,

$R^3$ ein Wasserstoffatom oder die Methyl-, Methoxy-, Ethoxy- oder Carboxygruppe oder ein

Chloratom ist,

M ein Wasserstoffatom oder ein Alkalimetall ist, und

p für die Zahl Null, 1 oder 2 steht;

$R^{\beta}$ ist ein Wasserstoffatom oder die Sulfo-, β-Methoxy-ethoxy-, Methyl-, Ethyl-, Methoxy- oder Ethoxygruppe;

R* ist ein Wasserstoffatom oder die Methyl-, Ethyl-, Methoxy-, Ethoxy-, Aceylamino-, Propionylamino- oder Ureidogruppe;

M hat die obenangegebene Bedeutung;

p hat die obenangegebene Bedeutung;

$Z^2$ ist eine Gruppe der allgemeinen Formel (3b)

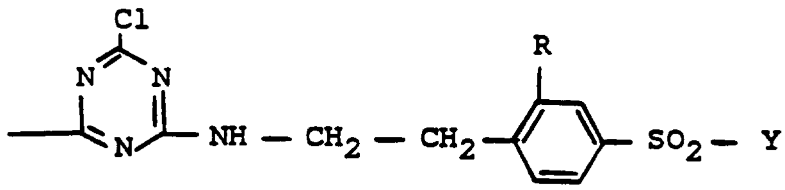

(3b)

in welcher Y und R eine der in Anspruch 1 genannten Bedeutungen haben.

**9.** Farbstoff nach mindestens einem der Ansprüche 1 bis 3, 5 und 7, dadurch gekennzeichnet, daß k für die Zahl 1 steht.

**10.** Farbstoff nach mindestens einem der Ansprüche 1 bis 3 und 9, dadurch gekennzeichnet, daß n die Zahl 1 bedeutet.

**11.** Farbstoff nach mindestens einem der Ansprüche 1 bis 7, 9 und 10, dadurch gekennzeichnet, daß Z eine Gruppe der allgemeinen Formel (3)

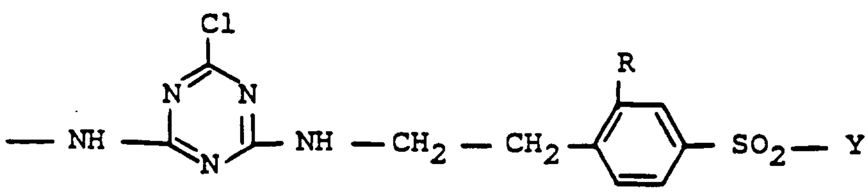

(3)

mit R und Y der in Anspruch 1 genannten Bedeutung ist.

**12.** Verbindung nach mindestens einem der Ansprüche 1 bis 11, dadurch gekennzeichnet, daß R für ein Wasserstoffatom steht.

**13.** Farbstoff nach mindestens einem der Ansprüche 1 bis 12, dadurch gekennzeichnet, daß $Y^1$ die β-Sulfatoethyl-Gruppe ist.

**14.** Farbstoff nach mindestens einem der Ansprüche 1 bis 13, dadurch gekennzeichnet, daß Y die β-Sulfatoethyl-Gruppe ist.

**15.** Verfahren zur Herstellung eines in Anspruch 1 genannten und definierten Farbstoffes der allgemeinen Formel (1), dadurch gekennzeichnet, daß man die für wasserlösliche Farbstoffe üblichen Vorprodukte, von denen mindestens eines eine Gruppe der allgemeinen Formel (2) und mindestens eines eine Gruppe der allgemeinen Formel $-SO_2-Y^1$ enthält, miteinander in üblicher Verfahrensweise zum entsprechenden Farbstoff umsetzt, oder indem man Cyanurchlorid in beliebiger Folge mit einer Aminoverbindung der allgemeinen Formel (22)

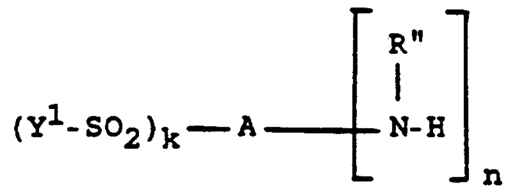

(22)

in welcher $Y^1$, k, A, R'' und n die in Anspruch 1 genannten Bedeutungen haben, und einer Aminoverbindung der allgemeinen Formel (23)

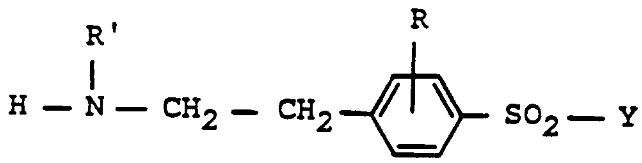

(23)

in welcher R', R und Y die in Anspruch 1 genannten Bedeutungen haben, umsetzt.

**16.** Verwendung einer Verbindung entsprechend der Formel (1) von mindestens einem der Ansprüche 1 bis 15 zum Färben und Bedrucken von hydroxy- und/oder carbonamidgruppenhaltigem Material, insbesondere Fasermaterial.

**17.** Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung entsprechend der allgemeinen Formel (1) von mindestens einem der Ansprüche 1 bis 15 verwendet.

**Patentansprüche für folgenden Vertragsstaat : ES**

**1.** Verfahren zur Herstellung eines Farbstoffes entsprechend der allgemeinen Formel (1)

$$(Y^1{-}SO_2)_k{-}\ A\ {-}Z_n \quad (1)$$

in welcher

| | |
|---|---|
| A | der Rest eines wasserlöslichen, sulfo- und/oder carboxygruppenhaltigen Farbstoffs ist, |
| $Y^1$ | die Vinylgruppe oder eine $\beta$-Chlorethyl-, $\beta$-Thiosulfatoethyl-, $\beta$-Acetyloxyethyl- oder $\beta$-Sulfatoethyl-Gruppe ist, |
| k | die Zahl 1 oder 2 ist, |
| n | die Zahl 1 oder 2 ist und |
| Z | eine Gruppe der allgemeinen Formel (2) |

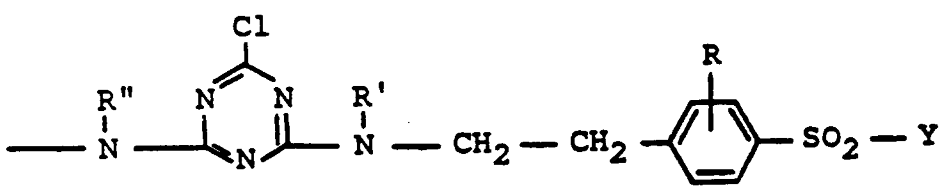

(2)

ist, in welcher

| | |
|---|---|
| R' und R'' | jedes, unabhängig voneinander, ein Wasserstoffatom oder eine Alkylgruppe von 1 bis 4 C-Atomen ist, |
| R | ein Wasserstoffatom oder eine Sulfogruppe ist und |
| Y | die Vinylgruppe oder eine $\beta$-Sulfatoethyl-Gruppe ist, wobei $Y^1$ und Y zueinander |

gleiche oder verschiedene Bedeutungen haben können,
ausgenommen jedoch von Farbstoffen der allgemeinen Formel

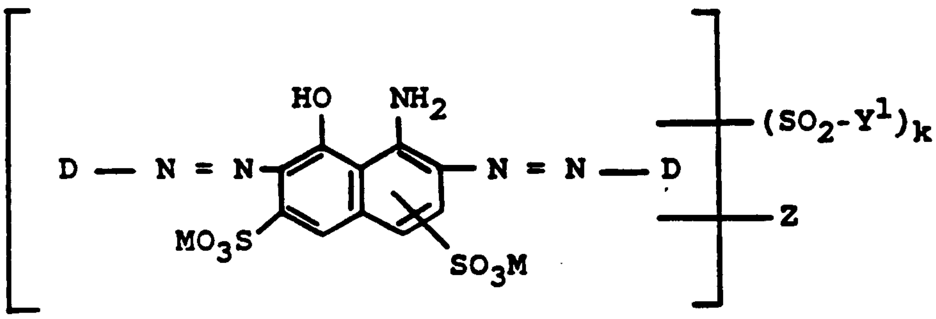

in welcher

M ein Wasserstoffatom oder ein Alkalimetall ist,

D jeweils für den Rest einer Diazokomponente steht, wobei beide D voneinander verschiedene Bedeutungen besitzen, und

Z, k und $Y^1$ eine der obengenannten Bedeutungen haben, wobei der Rest Z an einem der Reste D und die Gruppe(n) $-SO_2-Y^1$ direkt an ein aromatisches Kohlenstoffatom von D gebunden sind, wobei jedoch die Gruppen $-SO_2-Y^1$ und Z nicht gleichzeitig an demselben Rest D gebunden sind,

dadurch gekennzeichnet, daß man die für wasserlösliche Farbstoffe üblichen Vorprodukte, von denen mindestens eines eine Gruppe der allgemeinen Formel (2) und mindestens eines eine Gruppe der allgemeinen Formel $-SO_2-Y^1$ enthält, miteinander in üblicher Verfahrensweise zum entsprechenden Farbstoff umsetzt,
oder daß man Cyanurchlorid in beliebiger Folge mit einer Aminoverbindung der allgemeinen Formel (22)

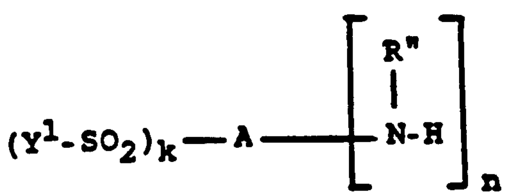 (22)

in welcher $Y^1$, k, A, R'' und n die obengenannten Bedeutungen haben, und einer Aminoverbindung der allgemeinen Formel (23)

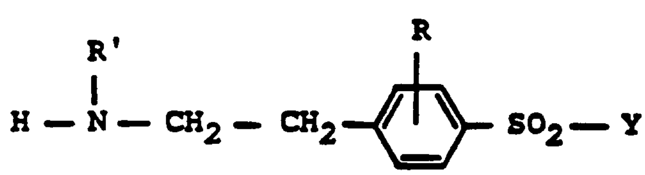 (23)

in welcher R', R und Y die obengenannten Bedeutungen haben, umsetzt.

**2.** Verfahren nach Anspruch 1, dadurch gekennzeichnet, daß A der Rest eines sulfogruppenhaltigen Mono- oder Disazofarbstoffes ist.

**3.** Verfahren nach Anspruch 1, dadurch gekennzeichnet, daß A der Rest eines sulfogruppenhaltigen 1:2-Chromkomplex- oder 1:2-Kobaltkomplex- oder 1:1-Kupferkomplex-Monoazo- oder -Disazofarbstoffes ist.

**4.** Verfahren nach Anspruch 1, dadurch gekennzeichnet, daß der synthetisierte Farbstoff ein Farbstoff entsprechend der allgemeinen Formel

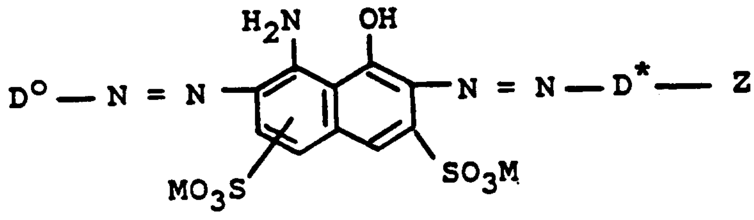

ist, in welcher bedeuten:

- M ist ein Wasserstoffatom oder ein Alkalimetall;
- Z hat die in Anspruch 1 angegebene Bedeutung;
- D° ist ein Rest der allgemeinen Formel (6a), (6b) oder (6c)

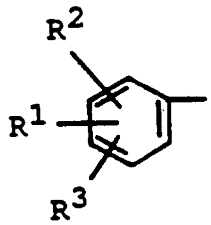
(6a)

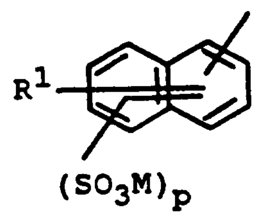
(6b)

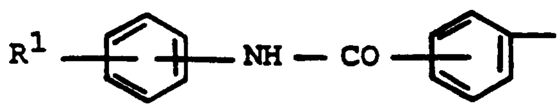
(6c)

in welchen

- $R^1$ ein Rest der allgemeinen Formel $Y^1$-$SO_2$-$X^1$- ist, worin $Y^1$ die in Anspruch 1 genannte Bedeutung besitzt und $X^1$ die Methylengruppe oder eine Methylaminogruppe ist,
- $R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
- $R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

  wobei der Benzol- bzw. Naphthalinring von Formeln (6a) und (6b) zusätzlich in o-Stellung zur freien Bindung eine Hydroxygruppe enthalten kann;
- p die Zahl Null, 1 oder 2 bedeutet (wobei diese Gruppe im Falle von p gleich Null ein Wasserstoffatom bedeutet) und
- M die obengenannte Bedeutung hat;
- D* ist ein Phenylrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann.

**5.** Verfahren nach Anspruch 1, dadurch gekennzeichnet, daß der synthetisierte Farbstoff ein Farbstoff entsprechend der allgemeinen Formel (5b)

$$(Y^1\text{-}SO_2\text{-}X^1)_k - D^1 - N = N - (E^1 - N = N)_v - K^* - Z \quad (5b)$$

ist, in welcher bedeuten:

| | |
|---|---|
| $Y^1$, k und Z | haben die in Anspruch 1 genannten Bedeutungen; |
| $X^1$ | ist die Methylengruppe oder Methylaminogruppe oder bevorzugt eine direkte Bindung; |
| $D^1$ | ist ein Phenylenrest, der durch die Substituenten $R^2$ und $R^3$ substituiert ist, wobei |
| $R^2$ | Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und |
| $R^3$ | Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)sulfamoyl, Alkylsulfonyl von 1 bis 4 C-Atomen, Phenylsulfonyl oder Phenoxy ist, oder |
| $D^1$ | ist ein Naphthylenrest, der durch 1 oder 2 Sulfogruppen substituiert sein kann; |
| $E^1$ | ist ein Rest der allgemeinen Formel (7a), (7b), (7c) oder (7d) |

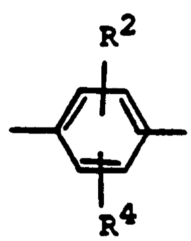

(7a)

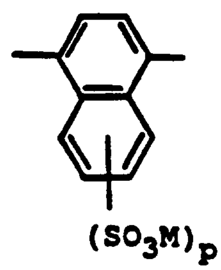

(7b)

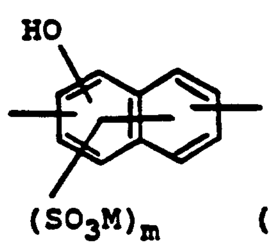

(7c)

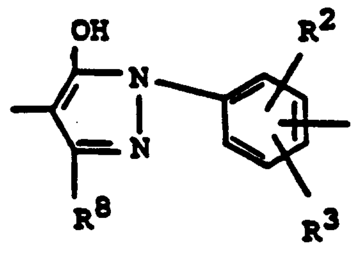

(7d)

in welchen

| | |
|---|---|
| M | ein Wasserstoffatom oder ein Alkalimetall ist, |
| p | die Zahl Null, 1 oder 2 bedeutet, |
| $R^2$ und $R^3$ | die oben angegebenen Bedeutungen haben, |
| $R^4$ | ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist, |
| m | die Zahl 1 oder 2 bedeutet und |
| $R^8$ | für Wasserstoff, Alkyl von 1 bis 4 C-Atomen, wie Methyl, Cyano, Carboxy, |

Carbalkoxy von 2 bis 5 C-Atomen, Carbonamido oder Phenyl steht, bevorzugt Methyl, Carboxy oder Carbalkoxy von 2 bis 5 C-Atomen ist;

-K*-Z ist ein Rest der Allgemeinen Formel (8a), (8b), (8c), (8d), (8e) oder (8f)

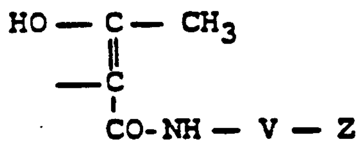

(8a)

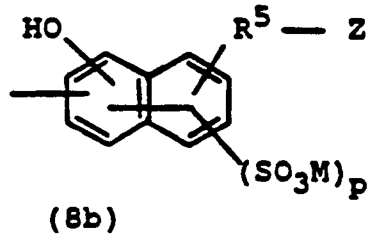

(8b)

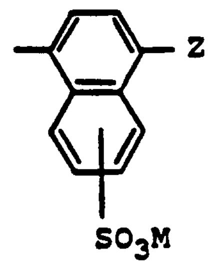

(8c)

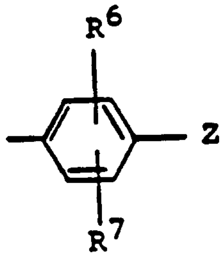

(8d)

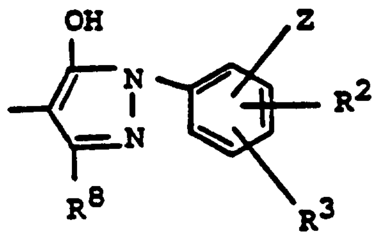

(8e)

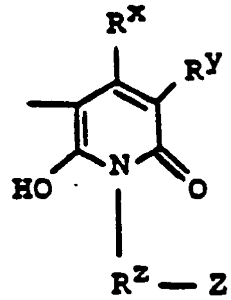

(8f)

in welchen

$R^2$, $R^3$, Z, p und M die obengenannten Bedeutungen haben und die Hydroxygruppe in Formel (8b) in ortho-Stellung zur freien Bindung, die mit der Azogruppe verbunden ist, steht,

V ein Phenylenrest ist, der die obengenannten und definierten Reste $R^2$ und $R^3$ enthält, oder ein Naphthylenrest ist, der durch 1 oder 2 Sulfogruppen substituiert sein kann,

$R^5$ eine direkte Bindung oder ein Rest der Formel -NH-CO-phenylen-, -NH-CO-NH-phenylen- , $-N(CH_3)$-CO-phenylen- oder $-N(CH_3)$CO-NH-phenylen- ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen, eine Ureido- oder Phenylureidogruppe ist,

$R^8$ eine der oben angegebenen Bedeutungen hat,

$R^x$ ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen oder eine Cyano- oder Carbamoylgruppe ist und

$R^z$ eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;

v ist die Zahl Null oder 1.

6. Verfahren nach Anspruch 1, dadurch gekennzeichnet, daß der synthetisierte Farbstoff ein Farbstoff entsprechend der allgemeinen Formel (5c)

$$Z-D^{*}-N=N-(E^{1}-N=N)_{v}-K^{1}-X^{1}-SO_{2}-Y^{1} \quad (5c)$$

ist, in welcher bedeuten:

| | |
|---|---|
| Z und $Y^1$ | haben die in Anspruch 1 genannten Bedeutungen; |
| $D^*$ | ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann; |
| $E^1$ | ist ein Rest der allgemeinen Formel (7a), (7b), (7c) oder (7d) |

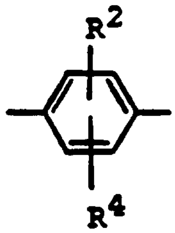
(7a)

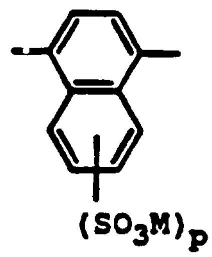
(7b)

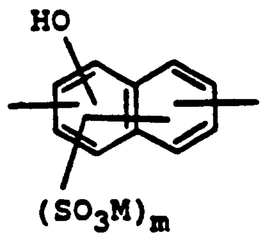
(7c)

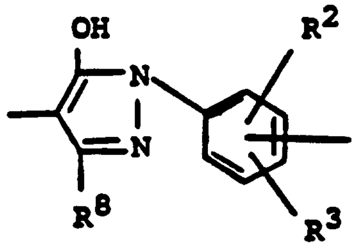
(7d)

in welchen

| | |
|---|---|
| $R^2$ | Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist, |
| $R^3$ | Wasserstoff, Methyl, Ethyl, Methoxy, Ethoxy, Cyan, Carboxy, Sulfo, Alksnoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist, |
| $R^4$ | ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist, |
| M | ein Wasserstoffatom oder ein Alkalimetall ist, |
| p | die Zahl Null, 1 oder 2 bedeutet, |
| m | die Zahl 1 oder 2 bedeutet und |
| $R^8$ | für Wasserstoff, Alkyl von 1 bis 4 C-Atomen, Cyano, Carboxy, Carbalkoxy von 2 bis 5 C-Atomen, Carbonamido oder Phenyl steht, bevorzugt Methyl, Carboxy oder Carbalkoxy von 2 bis 5 C-Atomen ist; |
| v | ist die Zahl Null oder 1; |
| $K^1$ | ist ein Rest der allgemeinen Formel (9a), (9b) oder (9c) |

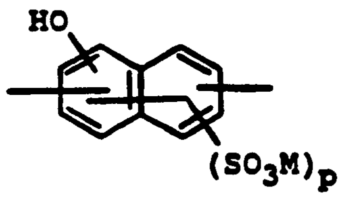

(9a)

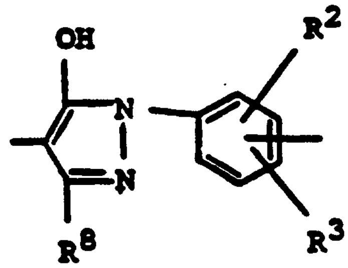

(9b)

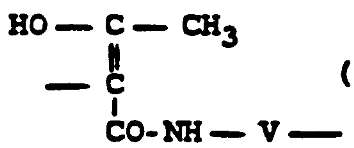

(9c)

in welchen

M, p, $R^2$, $R^3$ und $R^8$ eine der oben genannten Bedeutungen haben, wobei die Hydroxygruppe in Formel (9a) in ortho-Stellung zur freien Bindung steht, die mit der Azogruppe verbunden ist, und

V ein Phenylenrest ist, der die obengenannten und definierten Reste $R^2$ und $R^3$ enthält, oder ein Naphthylenrest ist, der durch 1 oder 2 Sulfogruppen substituiert sein kann;

$X^1$ ist die Methylengruppe oder die Methylaminogruppe oder bevorzugt eine direkte Bindung.

**7.** Verfahren nach Anspruch 1, dadurch gekennzeichnet, daß der synthetisierte Farbstoff ein Farbstoff entsprechend der allgemeinen Formel (5d)

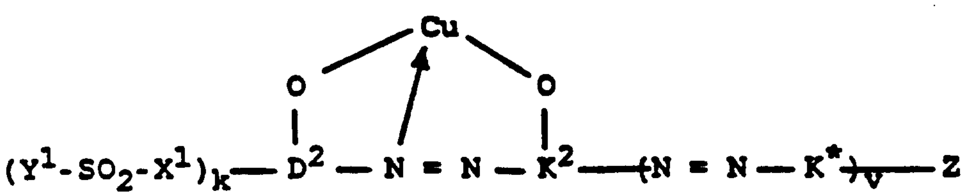

(5d)

ist, in welcher bedeuten:

$Y^1$, k und Z haben die in Anspruch 1 genannten Bedeutungen;

$X^1$ ist die Methylengruppe oder die Methylaminogruppe oder bevorzugt eine direkte Bindung;

$D^2$ ist ein Benzolrest, dessen freie Bindungen zum komplexbildenden Oxiatom und zur Azogruppe o-ständig zueinander stehen und der als zusätzliche Substituenten 1 oder 2 Substituenten aus der Gruppe Methyl, Ethyl, Methoxy, Ethoxy, Brom, Chlor, Carboxy und Sulfo enthalten kann, oder ist ein Naphthalinrest, an den die Oxigruppe in 1-Stellung und die Azogruppe in 2-Stellung gebunden sind und der als zusätzlichen Substituenten eine Sulfogruppe enthalten kann;

$K^2$ ist ein Rest der allgemeinen Formel (10a) oder (10b)

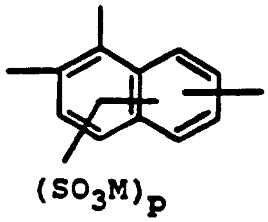
(10a)
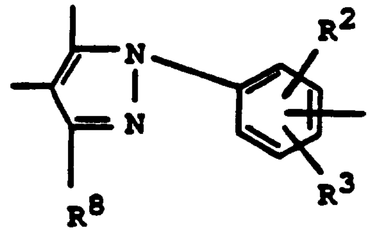
(10b)

in welchen

M ein Wasserstoffatom oder ein Alkalimetall ist,

p die Zahl Null, 1 oder 2 bedeutet,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist und

$R^8$ für Wasserstoff, Alkyl von 1 bis 4 C-Atomen, Cyano, Carboxy, Carbalkoxy von 2 bis 5 C-Atomen, Carbonamido oder Phenyl steht, bevorzugt Methyl, Carboxy oder Carbalkoxy von 2 bis 5 C-Atomen, ist;

v ist die Zahl Null oder 1;

-K*-Z ist ein Rest der allgemeinen Formel (8a), (8b), (8c), (8d), (8e) oder (8f)

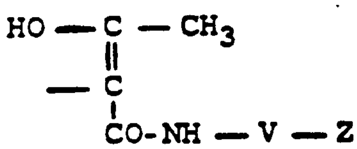
(8a)
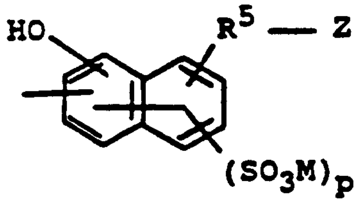
(8b)
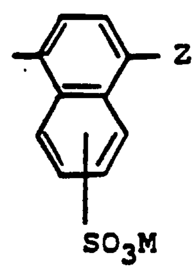
(8c)

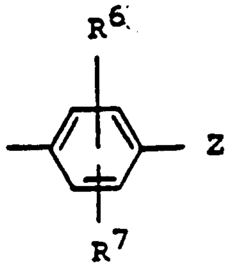
(8d)
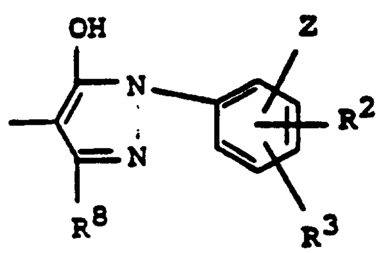
(8e)
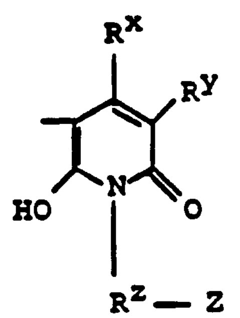
(8f)

in welchen

$R^2$, $R^3$, Z, p und MH die obengenannten Bedeutungen haben und die Hydroxygruppe in Formel (8b) in ortho-Stellung zur freien Bindung, die mit der Azogruppe verbunden ist, steht,

V ein Phenylenrest ist, der die obengenannten und definierten Reste $R^2$ und

R³ enthält, oder ein Naphthylenrest ist, der durch 1 oder 2 Sulfogruppen substituiert sein kann,

$R^5$ eine direkte Bindung oder ein Rest der Formel -NH-CO-phenylen-, -NH-CO-NH-phenylen , $-N(CH_3)-CO$-phenylen oder $-N(CH_3)-CO-NH$-phenylen ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureidogruppe ist,

$R^8$ eine der oben angegebenen Bedeutungen hat,

$R^x$ ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen oder eine Cyano oder Carbamoylgruppe ist und

$R^z$ eine Alkylengruppe von 1 bis 6 C-Atomen oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist.

**8.** Verfahren nach Anspruch 1, dadurch gekennzeichnet, daß der synthetisierte Farbstoff ein Farbstoff entsprechend der allgemeinen Formel (12a)

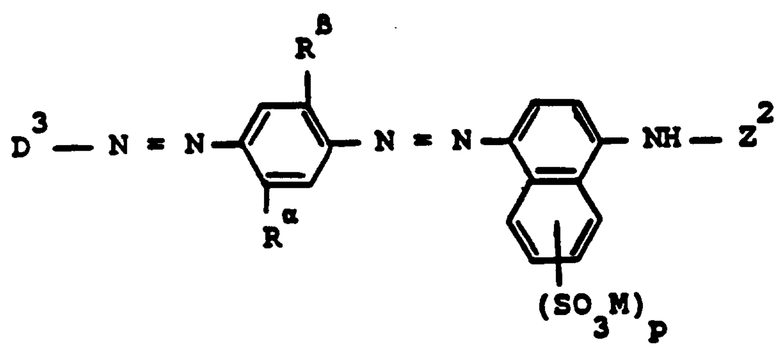

(12a)

ist, in welcher bedeuten:

$D^3$ ist eine Gruppe der allgemeinen Formel (6a) oder (6b)

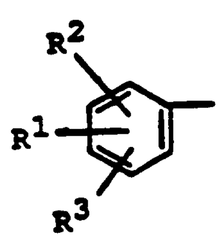

(6a)

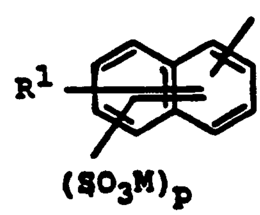

(6b)

in welchen

$R^1$ eine Gruppe der allgemeinen Formel $Y^1-SO_2-$ mit $Y^1$ der in Anspruch 1 angegebenen Bedeutung ist,

$R^2$ ein Wasserstoffatom oder die Methyl-, Methoxy-, Ethoxy- oder Sulfogruppe oder ein Chloratom ist,

$R^3$ ein Wasserstoffatom oder die Methyl-, Methoxy-, Ethoxy- oder Carboxygruppe oder ein Chloratom ist,

M ein Wasserstoffatom oder ein Alkalimetall ist und

p für die Zahl Null, 1 oder 2 steht;
$R^{\beta}$ ist ein Wasserstoffatom oder die Sulfo-, β-Methoxy-ethoxy-, Methyl-, Ethyl-, Methoxy oder Ethoxygruppe;
R* ist ein Wasserstoffatom oder die Methyl-, Ethyl-, Methoxy-, Ethoxy-, Aceylamino-, Propionylamino oder Ureidogruppe;
M hat die oben angegebene Bedeutung;
p hat die obenangegebene Bedeutung;
$Z^2$ ist eine Gruppe der allgemeinen Formel (3b)

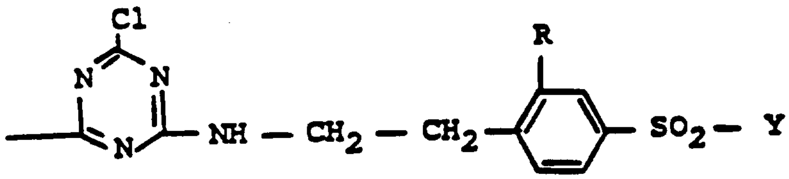

(3b)

in welcher Y und R eine der in Anspruch 1 genannten Bedeutungen haben.

**9.** Verfahren nach mindestens einem der Ansprüche 1 bis 3, 5 und 7, dadurch gekennzeichnet, daß k für die Zahl 1 steht.

**10.** Verfahren nach mindestens einem der Ansprüche 1 bis 3 und 9, dadurch gekennzeichnet, daß n die Zahl 1 bedeutet.

**11.** Verfahren nach mindestens einem der Ansprüche 1 bis 7, 9 und 10, dadurch gekennzeichnet, daß Z eine Gruppe der allgemeinen Formel (3)

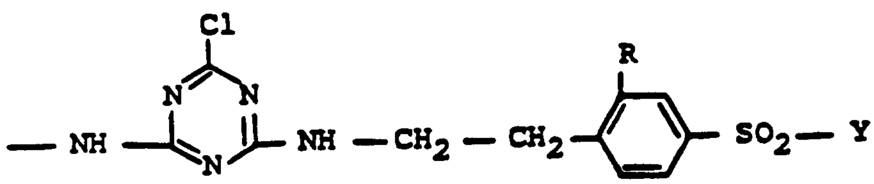

(3)

mit R und Y der in Anspruch 1 genannten Bedeutung ist.

**12.** Verfahren nach mindestens einem der Ansprüche 1 bis 11, dadurch gekennzeichnet, daß R für ein Wasserstoffatom steht.

**13.** Verfahren nach mindestens einem der Ansprüche 1 bis 12, dadurch gekennzeichnet, daß $Y^1$ die β-Sulfatoethyl-Gruppe ist.

**14.** Verfahren nach mindestens einem der Ansprüche 1 bis 13, dadurch gekennzeichnet, daß Y die β-Sulfatoethyl-Gruppe ist.

**15.** Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung entsprechend der allgemeinen Formel (1) von mindestens einem der Ansprüche 1 bis 14 verwendet.

## Claims

**Claims for the following Contracting States : BE, CH, DE, FR, GB, IT, LI**

**1.** A dye conforming to the general formula (1)

$$(Y^1{-}SO_2)_k{-}\ A\ {-}Z_n \qquad (1)$$

in which

| | |
|---|---|
| A | is the radical of a water-soluble, sulfo- and/or carboxyl-containing dye, |
| $Y^1$ | is the vinyl group or is a $\beta$-chloroethyl, $\beta$-thiosulfatoethyl, $\beta$-acetyloxyethyl or $\beta$-sulfatoethyl group, |
| k | is the number 1 or 2, |
| n | is the number 1 or 2, and |
| Z | is a group of the general formula (2) |

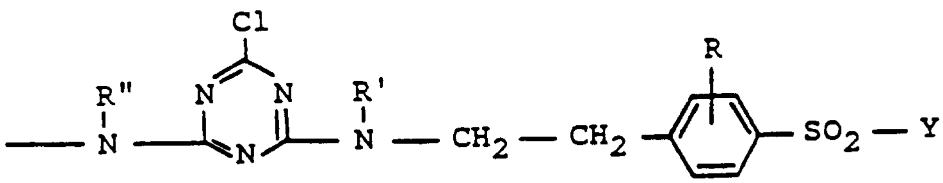

(2)

in which

| | |
|---|---|
| R' and R" | are each, independently of one another, a hydrogen atom or an alkyl group having 1 to 4 carbon atoms, |
| R | is a hydrogen atom or a sulfo group, and |
| Y | is the vinyl group or a $\beta$-sulfatoethyl group, where $Y^1$ and Y can have meanings which are identical to one another or different from one another, |

but with the exception of dyes of the formula

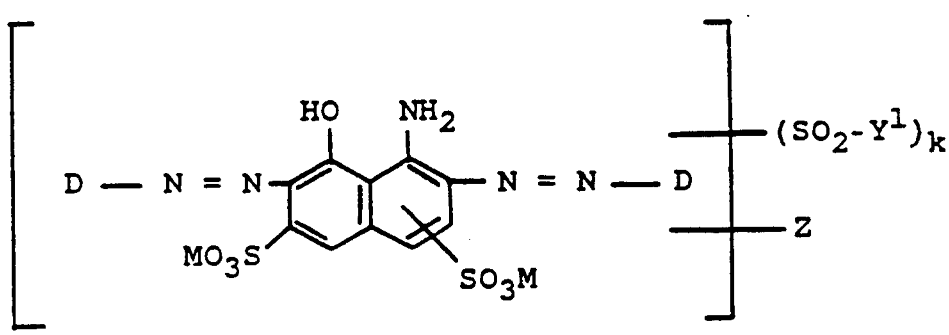

in which

| | |
|---|---|
| M | is a hydrogen atom or an alkali metal, |
| D | is in each case the radical of a diazo component, both D's having meanings different from one another, and |
| Z, k and $Y^1$ | have one of the above mentioned meanings, the radical Z being bonded to one of the radicals D and the group(s) $-SO_2-Y^1$ being bonded directly to an aromatic carbon atom of D, but with the groups $-SO_2-Y^1$ and Z not being bonded simultaneously to the same radical D. |

**2.** A dye as claimed in claim 1, wherein A is the radical of a sulfo-containing mono- or disazo dye.

**3.** A dye as claimed in claim 1, wherein A is the radical of a sulfo-containing 1:2 chromium complex/ or 1:2 cobalt complex/ or 1:1 copper complex/monoazo or disazo dye.

**4.** A dye as claimed in claim 1, conforming to the general formula

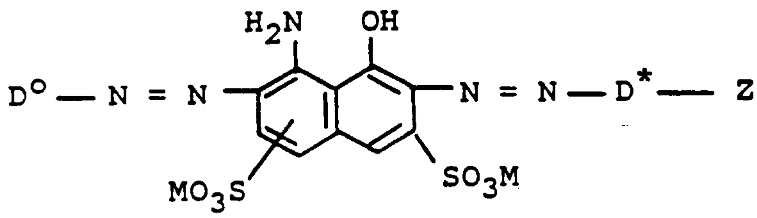

in which:

M is a hydrogen atom or an alkali metal;

Z is as defined in claim 1;

D° is a radical of the general formula (6a), (6b) or (6c)

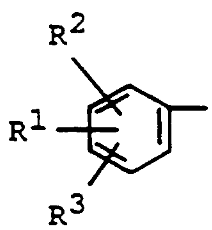 (6a) 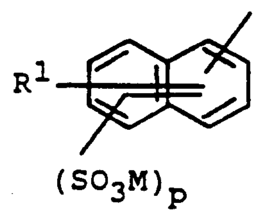 (6b)

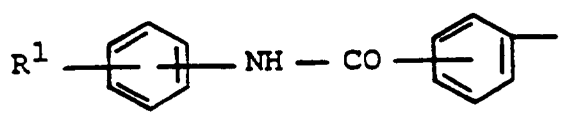 (6c)

in which

$R^1$ is a radical of the general formula $Y^1$-$SO_2$-$X^1$- in which $Y^1$ is as defined in claim 1 and $X^1$ is the methylene group or a methylamino group,

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl,fluorine, chlorine, nitro, sulfamoyl, N-($C_1$-$C_4$-alkyl)sulfamoyl, alkylsulfonyl having 1 to 4 carbon atoms, phenylsulfonyl or phenoxy,

it being possible for the benzene or naphthalene ring of the formulae (6a) and (6b) to additionally contain a hydroxyl group in the o-position to the free bond,

p is the number zero, 1 or 2 (this group being a hydrogen atom in the case where p is zero), and

M is as defined above;

D* is a phenylene radical, which may be substituted by 1 or 2 substituents selected from the group comprising hydrogen, methyl, ethyl, methoxy, bromine, chlorine, carboxyl and sulfo, or is a naphthylene radical, which may be substituted by 1 or 2 sulfo groups.

**5.** A dye as claimed in claim 1, conforming to the general formula (5b)

$$(Y^1\text{-}SO_2\text{-}X^1)_k - D^1 - N = N - (E^1 - N = N)_v - K^* - Z \quad (5b)$$

in which:

| | |
|---|---|
| $Y^1$, k and Z | are as defined in claim 1; |
| $X^1$ | is the methylene group or methylamino group or preferably a direct bond; |
| $D^1$ | is a phenylene radical which is substituted by the substituents $R^2$ and $R^3$, where |
| $R^2$ | is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl, and |
| $R^3$ | is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy, |
| | or |
| $D^1$ | is a naphthylene radical, which may be substituted by 1 or 2 sulfo groups; |
| $E^1$ | is a radical of the general formula (7a), (7b), (7c) or (7d) |

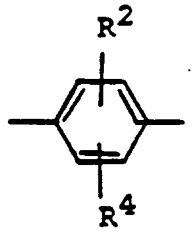
(7a)

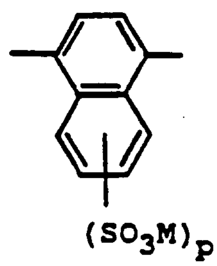
(7b)

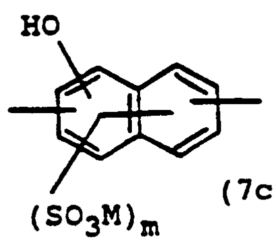
(7c)

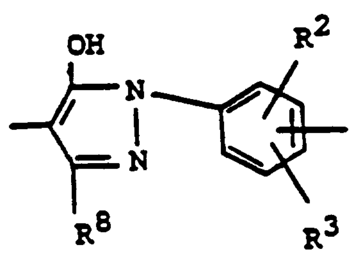
(7d)

| | |
|---|---|
| | in which |
| M | is a hydrogen atom or an alkali metal, |
| p | is the number zero, 1 or 2, |
| $R^2$ | and $R^3$ are as defined above, |
| $R^4$ | is a hydrogen atom, an alkyl group having 1 to 4 carbon atoms, an alkoxy group having 1 to 4 carbon atoms, a chlorine atom, an alkanoylamino group having 2 to 5 carbon atoms, the benzoylamino group, the ureido group, an N'-phenylureido group, an N'-alkylureido group having 1 to 4 carbon atoms in the alkyl radical, a phenylsulfonyl group or an alkylsulfonyl group having 1 to 4 carbon atoms, |
| m | is the number 1 or 2, and |
| $R^8$ | is hydrogen, alkyl having 1 to 4 carbon atoms, such as methyl, cyano, carboxyl, carbalkoxy having 2 to 5 carbon atoms, carboxamido or phenyl, preferably methyl, carboxyl or carbalkoxy having 2 to 5 carbon atoms; |
| -K*-Z | is a radical of the general formula (8a), (8b), (8c), (8d), (8e) or (8f) |

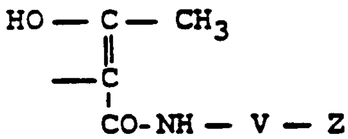

(8a)

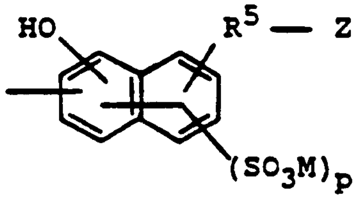

(8b)

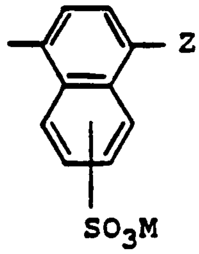

(8c)

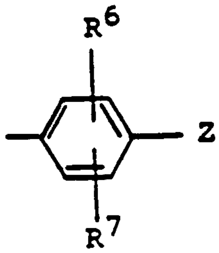

(8d)

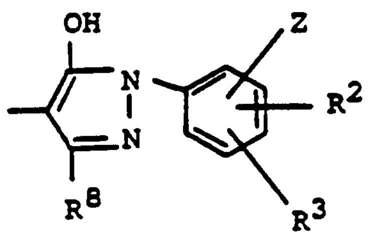

(8e)

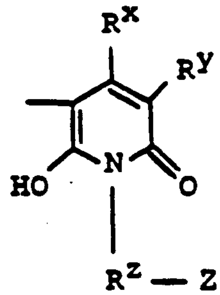

(8f)

in which

| | |
|---|---|
| $R^2$, $R^3$, Z, p and M | are as defined above, and the hydroxyl group in the formula (8b) is in the ortho-position to the free bond, which is linked to the azo group, |
| V | is a phenylene radical which contains the abovementioned and defined radicals $R^2$ and $R^3$, or is a naphthylene radical, which may be substituted by 1 or 2 sulfo groups, |
| $R^5$ | is a direct bond or a radical of the formula -NH-CO-phenylene-, -NH-CO-NH-phenylene-, $-N(CH_3)-CO-$phenylene- or $-N(CH_3)-CO-NH-$phenylene-, |
| $R^6$ | is hydrogen, alkyl having 1 to 4 carbon atoms, alkoxy having 1 to 4 carbon atoms, bromine, chlorine or alkanoylamino having 2 to 7 carbon atoms, |
| $R^7$ | is hydrogen, alkyl having 1 to 4 carbon atoms, alkoxy having 1 to 4 carbon atoms, chlorine or alkanoylamino having 2 to 7 carbon atoms, an ureido or phenylureido group, |
| $R^8$ | has one of the abovementioned meanings, |
| $R^x$ | is hydrogen, alkyl having 1 to 4 carbon atoms, or alkyl having 1 to 4 carbon atoms which is substituted by alkoxy having 1 to 4 carbon atoms or cyano, |
| $R^y$ | is hydrogen, sulfo, sulfoalkyl containing an alkylene radical having 1 to 4 carbon atoms, or is a cyano or a carbamoyl group, and |
| $R^z$ | is alkylene having 1 to 6 carbon atoms, or phenylene, which may be substituted by substituents selected from the group comprising methyl, ethyl, chlorine, carboxyl and sulfo, or is alkylenephenylene having 2 to 4 carbon atoms in the alkylene radical; |
| v | is the number zero or 1. |

**6.** A dye as claimed in claim 1, conforming to the general formula (5c)

$$Z - D^{*} - N = N -(E^{1} - N = N)_{v} - K^{1} - X^{1} - SO_{2} - Y^{1} \quad (5c)$$

in which:

| | |
|---|---|
| Z and $Y^1$ | are as defined in claim 1; |

D* is a phenylene radical, which may be substituted by 1 or 2 substituents selected from the group comprising hydrogen, methyl, ethyl, methoxy, bromine, chlorine, carboxyl and sulfo, or is a naphthylene radical, which may be substituted by 1 or 2 sulfo groups;

$E^1$ is a radical of the general formula (7a), (7b), (7c) or (7d)

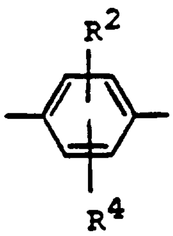
(7a)

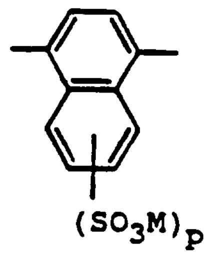
(7b)

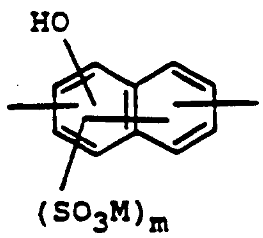
(7c)

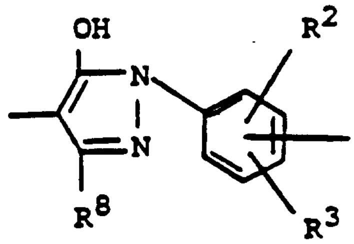
(7d)

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy,

$R^4$ is a hydrogen atom, an alkyl group having 1 to 4 carbon atoms, an alkoxy group having 1 to 4 carbon atoms, a chlorine atom, an alkanoylamino group having 2 to 5 carbon atoms, the benzoylamino group, the ureido group, an N'-phenylureido group, an N'-alkylureido group having 1 to 4 carbon atoms in the alkyl radical, a phenylsulfonyl group or an alkylsulfonyl group having 1 to 4 carbon atoms,

M is a hydrogen atom or an alkali metal,

p is the number zero, 1 or 2,

m is the number 1 or 2, and

$R^8$ is hydrogen, alkyl having 1 to 4 carbon atoms, cyano, carboxyl, carbalkoxy having 2 to 5 carbon atoms, carboxamido or phenyl, preferably methyl, carboxyl or carbalkoxy having 2 to 5 carbon atoms;

v is the number zero or 1;

$K^1$ is a radical of the general formula (9a), (9b) or (9c)

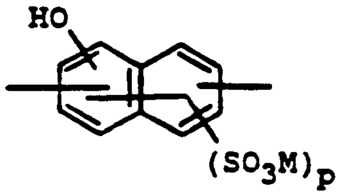

(9a)

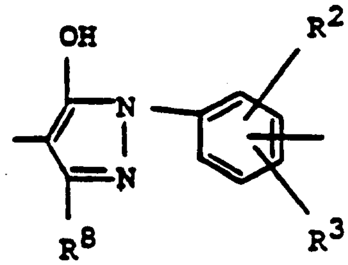

(9b)

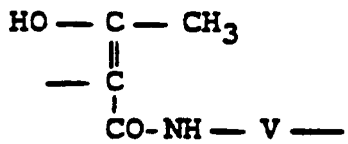

(9c)

| | |
|---|---|
| | in which |
| M, p, $R^2$, $R^3$ and $R^8$ | have one of the abovementioned meanings, the hydroxyl group in the formula (9a) being in the ortho-position to the free bond, which is linked to the azo group, and |
| V | is a phenylene radical which contains the abovementioned and defined radicals $R^2$ and $R^3$, or is a naphthylene radical, which may be substituted by 1 or 2 sulfo groups; |
| $X^1$ | is the methylene group or the methylamino group or preferably a direct bond. |

**7.** A dye as claimed in claim 1, conforming to the general formula (5d)

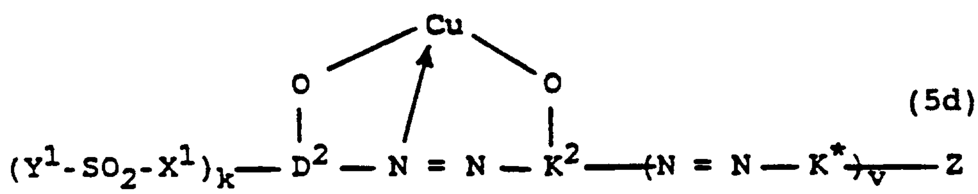

(5d)

in which:

| | |
|---|---|
| $Y^1$, k and Z | are as defined in claim 1; |
| $X^1$ | is the methylene group or the methylamino group or preferably a direct bond; |
| $D^2$ | is a benzene radical whose free bonds to the complexing oxygen atom and to the azo group are in the o-position to one another and which may contain, as additional substituents, 1 or 2 substituents selected from the group comprising methyl, ethyl, methoxy, ethoxy, bromine, chlorine, carboxyl and sulfo, or is a naphthalene radical to which the oxy group is bonded in the 1-position and the azo group is bonded in the 2-position, and which may contain, as additional substituents, a sulfo group; |
| $K^2$ | is a radical of the general formula (10a) or (10b) |

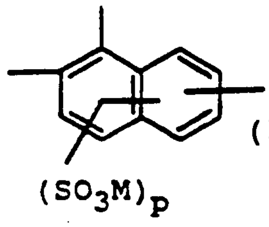 (10a) 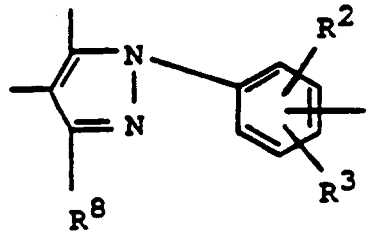 (10b)

in which

- M — is a hydrogen atom or an alkali metal,
- p — is the number zero, 1 or 2,
- $R^2$ — is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl,
- $R^3$ — is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy, and
- $R^8$ — is hydrogen, alkyl having 1 to 4 carbon atoms, cyano, carboxyl, carbalkoxy having 2 to 5 carbon atoms, carboxamido or phenyl, preferably methyl, carboxyl or carbalkoxy having 2 to 5 carbon atoms;
- v — is the number zero or 1;
- -K*-Z — is a radical of the general formula (8a), (8b), (8c), (8d), (8e) or (8f)

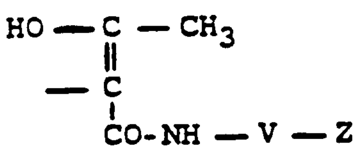
(8a)

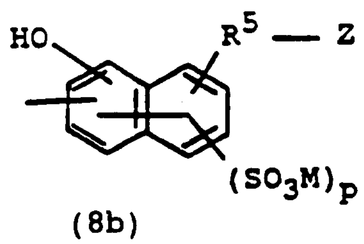
(8b)

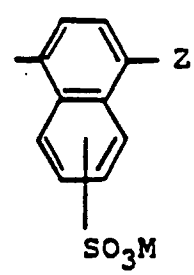
(8c)

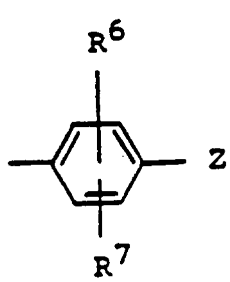
(8d)

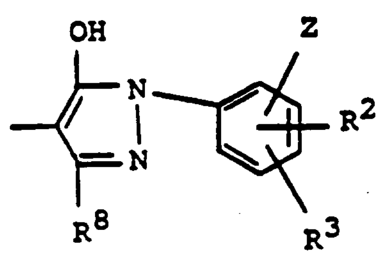
(8e)

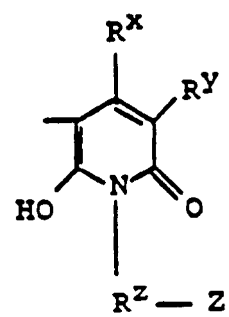
(8f)

in which

- $R^2$, $R^3$, Z, p and M — are as defined above, and the hydroxyl group in the formula (8b) is in the ortho-position to the free bond, which is linked to the azo group,
- V — is a phenylene radical which contains the abovementioned and defined radicals $R^2$ and $R^3$, or is a naphthylene radical, which may be substituted by 1

or 2 sulfo groups,

$R^5$ is a direct bond or a radical of the formula -NH-CO-phenylene-, -NH-CO-NH-phenylene-, $-N(CH_3)$-CO-phenylene- or $-N(CH_3)$-CO-NH-phenylene-,

$R^6$ is hydrogen, alkyl having 1 to 4 carbon atoms, alkoxy having 1 to 4 carbon atoms, bromine, chlorine or alkanoylamino having 2 to 7 carbon atoms,

$R^7$ is hydrogen, alkyl having 1 to 4 carbon atoms, alkoxy having 1 to 4 carbon atoms, chlorine, alkanoylamino having 2 to 7 carbon atoms, an ureido or phenylureido group,

$R^8$ has one of the abovementioned meanings,

$R^x$ is hydrogen, alkyl having 1 to 4 carbon atoms or alkyl having 1 to 4 carbon atoms which is substituted by alkoxy having 1 to 4 carbon atoms or by cyano,

$R^y$ is hydrogen, sulfo, sulfoalkyl containing an alkylene radical having 1 to 4 carbon atoms, or is a cyano or a carbamoyl group, and

$R^z$ is alkylene having 1 to 6 carbon atoms, or phenylene, which may be substituted by substituents selected from the group comprising methyl, ethyl, chlorine, carboxyl and sulfo, or is alkylenephenylene having 2 to 4 carbon atoms in the alkylene radical.

**8.** A dye as claimed in claim 1, conforming to the general formula (12a)

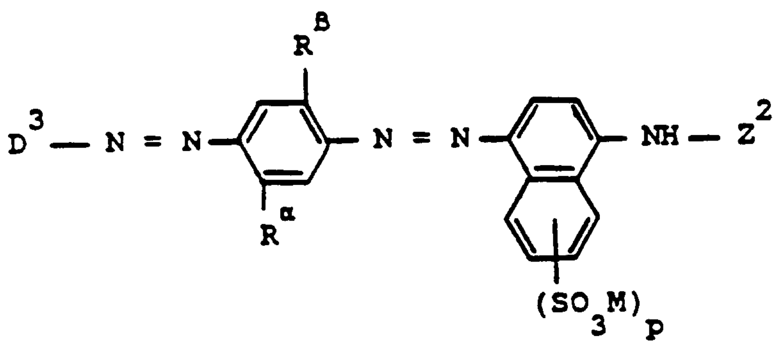
(12a)

in which:

$D^3$ is a group of the general formula (6a) or (6b)

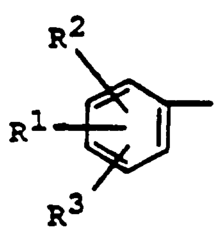
(6a)

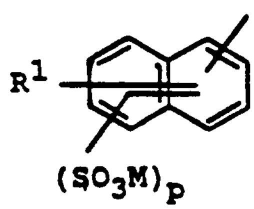
(6b)

in which

$R^1$ is a group of the general formula $Y^1-SO_2-$ where $Y^1$ is as defined in claim 1,

$R^2$ is a hydrogen atom or the methyl, methoxy, ethoxy or sulfo group or a chlorine atom,

$R^3$ is a hydrogen atom or the methyl, methoxy, ethoxy or carboxyl group or a chlorine atom,

M is a hydrogen atom or an alkali metal, and

p is the number zero, 1 or 2;

$R^\beta$ is a hydrogen atom or the sulfo, $\beta$-methoxyethoxy, methyl, ethyl, methoxy or ethoxy group;

$R^*$ is a hydrogen atom or the methyl, ethyl, methoxy, ethoxy, acetylamino, propionylamino or ureido group;

M is as defined above;

p is as defined above;

$Z^2$ is a group of the general formula (3b)

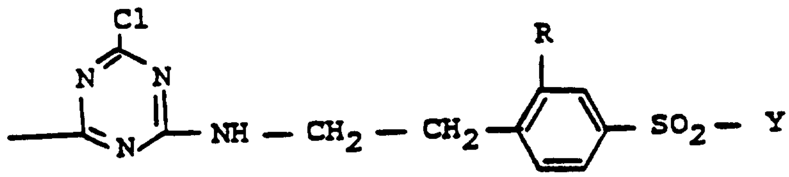

(3b)

in which Y and R are as defined in claim 1.

**9.** A dye as claimed in at least one of claims 1 to 3, 5 and 7, wherein k is the number 1.

**10.** A dye as claimed in at least one of claims 1 to 3 and 9, wherein n is the number 1.

**11.** A dye as claimed in at least one of claims 1 to 7, 9 and 10, wherein Z is a group of the general formula (3)

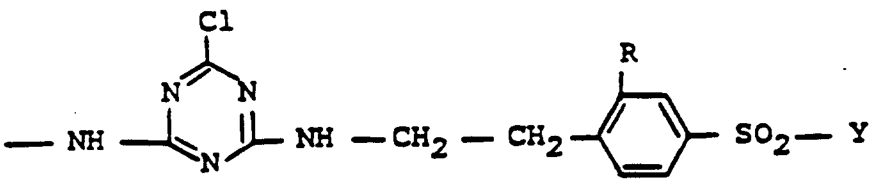

(3)

where R and Y are as defined in claim 1.

**12.** A compound as claimed in at least one of claims 1 to 11, wherein R is a hydrogen atom.

**13.** A dye as claimed in at least one of claims 1 to 12, wherein $Y^1$ is the $\beta$-sulfatoethyl group.

**14.** A dye as claimed in at least one of claims 1 to 13, wherein Y is the $\beta$-sulfatoethyl group.

**15.** A process for the preparation of a dye of the general formula (1) mentioned and defined in claim 1, which comprises reacting the precursors customary for water-soluble dyes, of which at least one contains a group of the general formula (2) and at least one contains a group of the general formula $-SO_2-Y^1$, with one another in a customary procedure to give the corresponding dye,
or reacting cyanuric chloride in any desired sequence with an amino compound of the general formula (22)

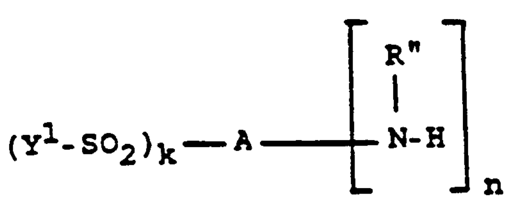

(22)

in which $Y^1$, k, A, R" and n are as defined in claim 1, and an amino compound of the general formula (23)

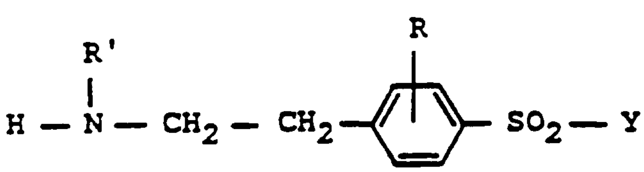

(23)

in which R', R and Y are as defined in claim 1.

**16.** The use of a compound conforming to the formula (1) of at least one of claims 1 to 15 for dyeing and printing hydroxyl- and/or carboxamide-containing material, in particular fiber material.

**17.** A process for coloring (dyeing, including printing) hydroxyl- and/or carboxamide-containing material, preferably fiber material, in which a dye is applied to the material or introduced into the material, and the dye is fixed on or in the material by means of heat or with the aid of an alkaline agent or by means of heat and with the aid of an alkaline agent, which comprises using, as the dye, a compound conforming to the general formula (1) of at least one of claims 1 to 15.

**Claims for the following Contracting State : ES**

**1.** A process for the preparation of a dye conforming to the formula (1)

$(Y^1{-}SO_2)_k{-}\ A\ {-}Z_n$ (1)

in which

| | |
|---|---|
| A | is the radical of a water-soluble, sulfo- and/or carboxyl-containing dye, |
| $Y^1$ | is the vinyl group or is a β-chloroethyl, β-thiosulfatoethyl, β-acetyloxyethyl or β-sulfatoethyl group, |
| k | is the number 1 or 2, |
| n | is the number 1 or 2, and |
| Z | is a group of the formula (2) |

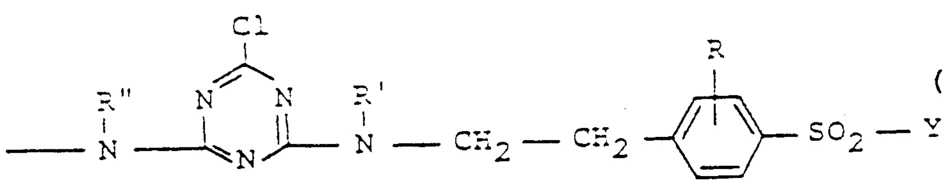

(2)

in which

| | |
|---|---|
| R' and R'' | are each, independently of one another, a hydrogen atom or an alkyl group having 1 to 4 carbon atoms, |
| R | is a hydrogen atom or a sulfo group, and |
| Y | is the vinyl group or a β-sulfatoethyl group, where $Y^1$ and Y can have meanings which are identical to one another or different from one another, |

but with the exception of dyes of the formula

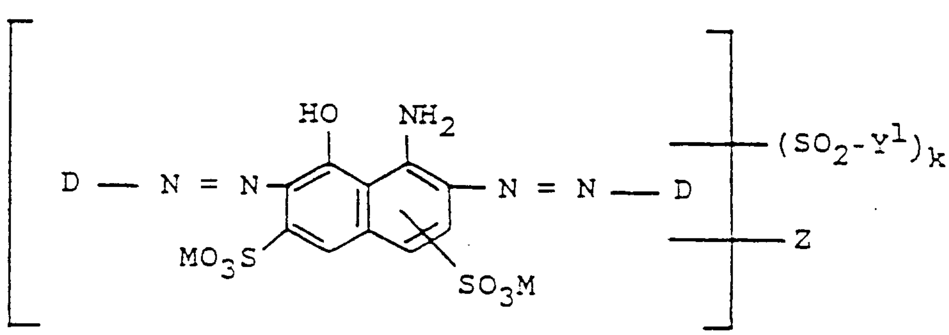

in which

| | |
|---|---|
| M | is a hydrogen atom or an alkali metal, |
| D | is in each case the radical of a diazo component, both D's having meanings different from one another, and |

Z, k and $Y^1$ have one of the abovementioned meanings, the radical Z being bonded to one of the radicals D and the group(s) $-SO_2-Y^1$ being bonded directly to an aromatic carbon atom of D, but with the groups $-SO_2-Y^1$ and Z not being bonded simultaneously to the same radical D,

which comprises reacting the precursors customary for water-soluble dyes, of which at least one contains a group of the formula (2) and at least one contains a group of the formula $-SO_2-Y^1$, with one another in a customary procedure to give the corresponding dye,
or reacting cyanuric chloride in any desired sequence with an amino compound of the formula (22)

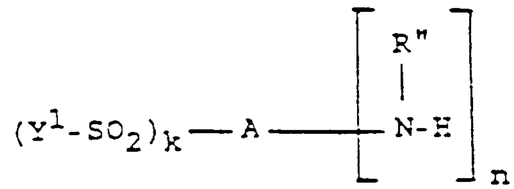

(22)

in which $Y^1$, k, A, R" and n are as defined above and an amino compound of the formula (23)

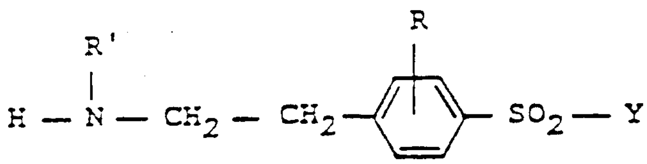

(23)

in which R', R and Y are as defined above.

2. The process as claimed in claim 1, wherein A is the radical of a sulfo-containing mono- or disazo dye.

3. The process as claimed in claim 1, wherein A is the radical of a sulfo-containing 1:2 chromium complex/ or 1:2 cobalt complex/ or 1:1 copper complex/monoazo or disazo dye.

4. The process as claimed in claim 1, wherein the dye synthesized is a dye conforming to the formula

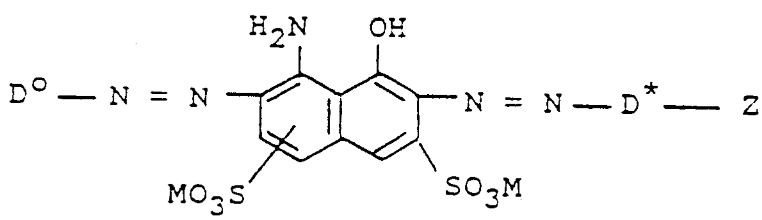

in which:

M is a hydrogen atom or an alkali metal;
Z is as defined in claim 1;
D° is a radical of the formula (6a), (6b) or (6c)

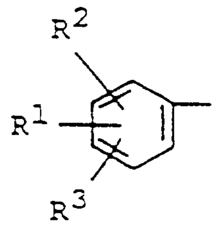

(6a)

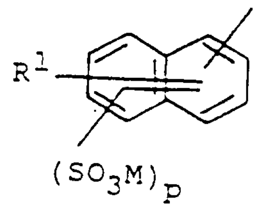

(6b)

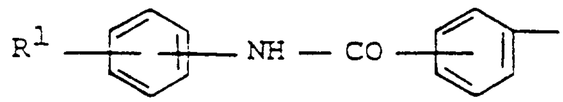

(6c)

in which

$R^1$ is a radical of the formula $Y^1$-$SO_2$-$X^1$- in which $Y^1$ is as defined in claim 1 and $X^1$ is the methylene group or a methylamino group,

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl,fluorine, chlorine, nitro, sulfamoyl, N-($C_1$-$C_4$-alkyl)sulfamoyl, alkylsulfonyl having 1 to 4 carbon atoms, phenylsulfonyl or phenoxy,

it being possible for the benzene or naphthalene ring of formulae (6a) and (6b) to additionally contain a hydroxyl group in the o-position to the free bond,

p is the number zero, 1 or 2 (this group being a hydrogen atom in the case where p is zero), and

M is as defined above;

D* is a phenylene radical, which may be substituted by 1 or 2 substituents selected from the group comprising hydrogen, methyl, ethyl, methoxy, bromine, chlorine, carboxyl and sulfo, or is a naphthylene radical, which may be substituted by 1 or 2 sulfo groups.

**5.** The process as claimed in claim 1, wherein the dye synthesized is a dye conforming to the formula (5b)

$$(Y^1\text{-}SO_2\text{-}X^1)_k - D^1 - N = N - (E^1 - N = N)_v - K^* - Z \quad (5b)$$

in which:

| | |
|---|---|
| $Y^1$, k and Z | are as defined in claim 1; |
| $X^1$ | is the methylene group or methylamino group or preferably a direct bond; |
| $D^1$ | is a phenylene radical which is substituted by the substituents $R^2$ and $R^3$, where |
| $R^2$ | is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl, and |
| $R^3$ | is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy, |
| | or |

$D^1$ is a naphthylene radical, which may be substituted by 1 or 2 sulfo groups;

$E^1$ is a radical of the formula (7a), (7b), (7c) or (7d)

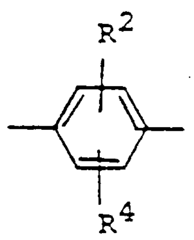
(7a)

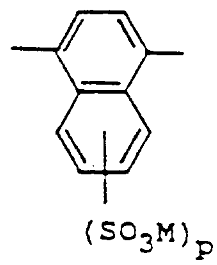
(7b)

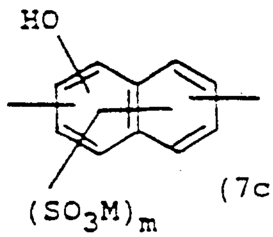
(7c)

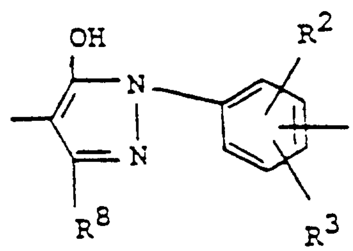
(7d)

in which

M is a hydrogen atom or an alkali metal,

p is the number zero, 1 or 2,

$R^2$ and $R^3$ are as defined above,

$R^4$ is a hydrogen atom, an alkyl group having 1 to 4 carbon atoms, an alkoxy group having 1 to 4 carbon atoms, a chlorine atom, an alkanoylamino group having 2 to 5 carbon atoms, the benzoylamino group, the ureido group, an N'-phenylureido group, an N'-alkylureido group having 1 to 4 carbon atoms in the alkyl radical, a phenylsulfonyl group or an alkylsulfonyl group having 1 to 4 carbon atoms,

m is the number 1 or 2, and

$R^8$ is hydrogen, alkyl having 1 to 4 carbon atoms, such as methyl, cyano, carboxyl, carbalkoxy having 2 to 5 carbon atoms, carboxamido or phenyl, preferably methyl, carboxyl or carbalkoxy having 2 to 5 carbon atoms;

-K*-Z is a radical of the formula (8a), (8b), (8c), (8d), (8e) or (8f)

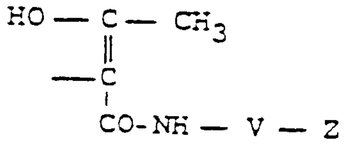

(8a)

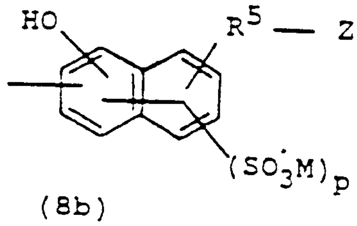

(8b)

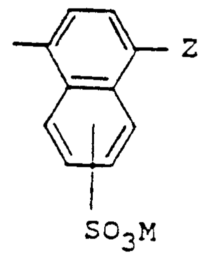

(8c)

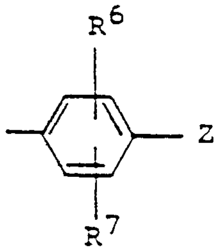

(8d)

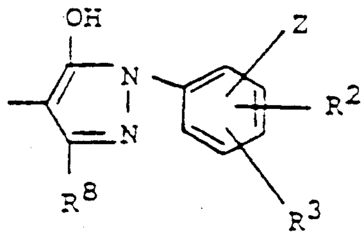

(8e)

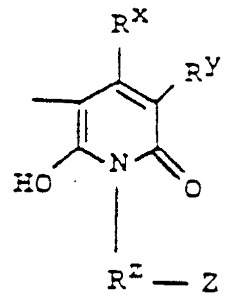

(8f)

in which

| | |
|---|---|
| $R^2$, $R^3$, Z, p and M | are as defined above, and the hydroxyl group in the formula (8b) is in the ortho-position to the free bond, which is linked to the azo group, |
| V | is a phenylene radical which contains the abovementioned and defined radicals $R^2$ and $R^3$, or is a naphthylene radical, which may be substituted by 1 or 2 sulfo groups, |
| $R^5$ | is a direct bond or a radical of the formula -NH-CO-phenylene-, -NH-CO-NH-phenylene-, $-N(CH_3)$-CO-phenylene- or $-N(CH_3)$-CO-NH-phenylene-, |
| $R^6$ | is hydrogen, alkyl having 1 to 4 carbon atoms, alkoxy having 1 to 4 carbon atoms, bromine, chlorine or alkanoylamino having 2 to 7 carbon atoms, |
| $R^7$ | is hydrogen, alkyl having 1 to 4 carbon atoms, alkoxy having 1 to 4 carbon atoms, chlorine or alkanoylamino having 2 to 7 carbon atoms, an ureido or phenylureido group, |
| $R^8$ | has one of the abovementioned meanings, |
| $R^x$ | is hydrogen, alkyl having 1 to 4 carbon atoms, or alkyl having 1 to 4 carbon atoms which is substituted by alkoxy having 1 to 4 carbon atoms or by cyano, |
| $R^y$ | is hydrogen, sulfo, sulfoalkyl containing an alkylene radical having 1 to 4 carbon atoms, or is a cyano or a carbamoyl group, and |
| $R^z$ | is alkylene having 1 to 6 carbon atoms, or phenylene, which may be substituted by substituents selected from the group comprising methyl, ethyl, chlorine, carboxyl and sulfo, or is alkylenephenylene having 2 to 4 carbon atoms in the alkylene radical; |
| v | is the number zero or 1. |

**6.** The process as claimed in claim 1, wherein the dye synthesized is a dye conforming to the formula (5c)

$$Z - D^{*} - N = N -(E^1 - N = N)_v- K^1 - X^1 - SO_2 - Y^1 \quad (5c)$$

in which:

Z and $Y^1$ are as defined in claim 1;

D* is a phenylene radical, which may be substituted by 1 or 2 substituents selected from the group comprising hydrogen, methyl, ethyl, methoxy, bromine, chlorine, carboxyl and sulfo, or is a naphthylene radical, which may be substituted by 1 or 2 sulfo groups;

$E^1$ is a radical of the formula (7a), (7b), (7c) or (7d)

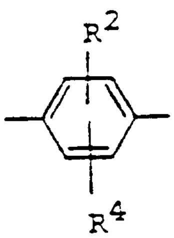
(7a)

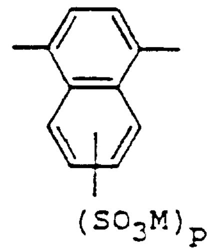
(7b)

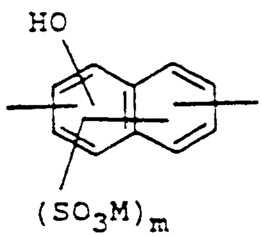
(7c)

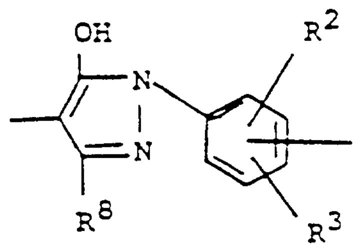
(7d)

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy,

$R^4$ is a hydrogen atom, an alkyl group having 1 to 4 carbon atoms, an alkoxy group having 1 to 4 carbon atoms, a chlorine atom, an alkanoylamino group having 2 to 5 carbon atoms, the benzoylamino group, the ureido group, an N'-phenylureido group, an N'-alkylureido group having 1 to 4 carbon atoms in the alkyl radical, a phenylsulfonyl group or an alkylsulfonyl group having 1 to 4 carbon atoms,

M is a hydrogen atom or an alkali metal,

p is the number zero, 1 or 2,

m is the number 1 or 2, and

$R^8$ is hydrogen, alkyl having 1 to 4 carbon atoms, cyano, carboxyl, carbalkoxy having 2 to 5 carbon atoms, carboxamido or phenyl, preferably methyl, carboxyl or carbalkoxy having 2 to 5 carbon atoms;

v is the number zero or 1;

$K^1$ is a radical of the formula (9a), (9b) or (9c)

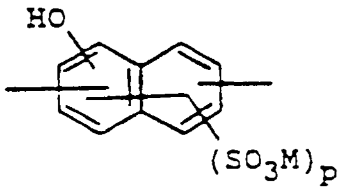

(9a)

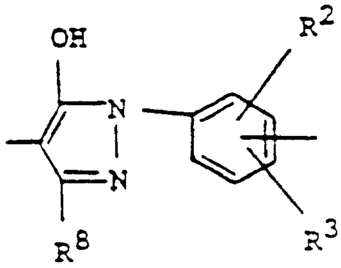

(9b)

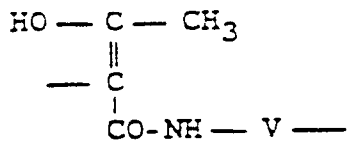

(9c)

in which

| | |
|---|---|
| M, p, $R^2$, $R^3$ and $R^8$ | have one of the abovementioned meanings, the hydroxyl group in the formula (9a) being in the ortho-position to the free bond, which is linked to the azo group, and |
| V | is a phenylene radical which contains the abovementioned and defined radicals $R^2$ and $R^3$, or is a naphthylene radical, which may be substituted by 1 or 2 sulfo groups; |
| $X^1$ | is the methylene group or the methylamino group or preferably a direct bond. |

**7.** The process as claimed in claim 1, wherein the dye synthesized is a dye conforming to the formula (5d)

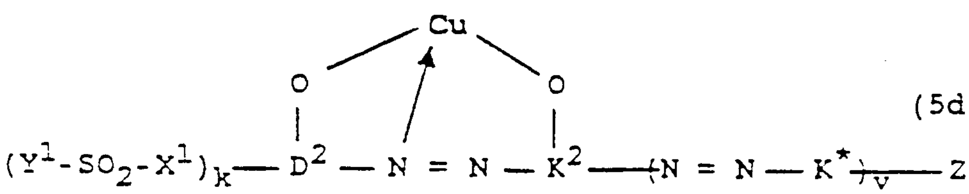

(5d)

in which:

| | |
|---|---|
| $Y^1$, k and Z | are as defined in claim 1; |
| $X^1$ | is the methylene group or the methylamino group or preferably a direct bond; |
| $D^2$ | is a benzene radical whose free bonds to the complexing oxygen atom and to the azo group are in the o-position to one another and which may contain, as additional substituents, 1 or 2 substituents selected from the group comprising methyl, ethyl, methoxy, ethoxy, bromine, chlorine, carboxyl and sulfo, or is a naphthalene radical to which the oxy group is bonded in the 1-position and the azo group is bonded in the 2-position, and which may contain, as additional substituent, a sulfo group; |
| $K^2$ | is a radical of the formula (10a) or (10b) |

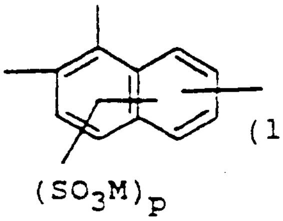 (10a)

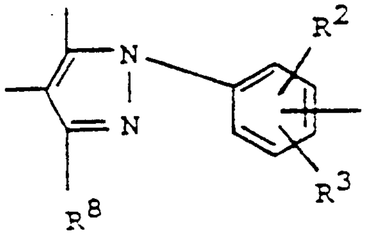 (10b)

in which

| | |
|---|---|
| M | is a hydrogen atom or an alkali metal, |
| p | is the number zero, 1 or 2, |
| $R^2$ | is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,fluorine, chlorine, bromine or trifluoromethyl, |
| $R^3$ | is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy, and |
| $R^8$ | is hydrogen, alkyl having 1 to 4 carbon atoms, cyano, carboxyl, carbalkoxy having 2 to 5 carbon atoms, carboxamido or phenyl, preferably methyl, carboxyl or carbalkoxy having 2 to 5 carbon atoms; |
| v | is the number zero or 1; |
| -K*-Z | is a radical of the formula (8a), (8b), (8c), (8d), (8e) or (8f) |

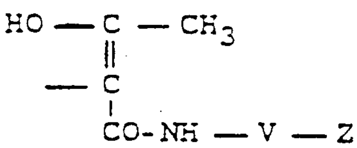

(8a)

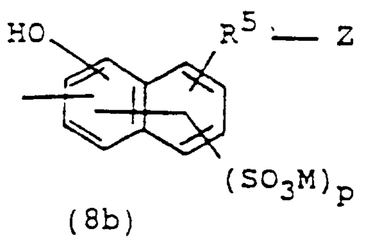

(8b)

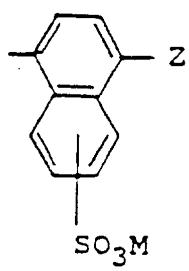

(8c)

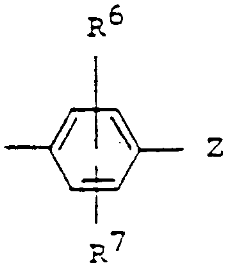

(8d)

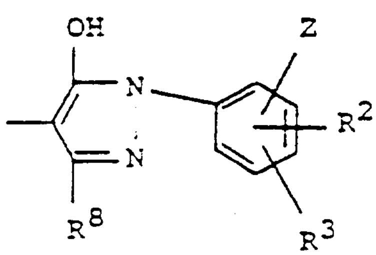

(8e)

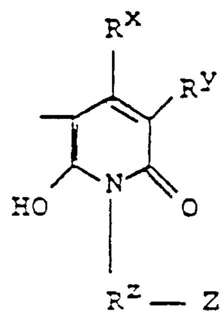

(8f)

in which

| | |
|---|---|
| $R^2$, $R^3$, Z, p and M | are as defined above, and the hydroxyl group in the formula (8b) is in the ortho-position to the free bond, which is linked to the azo group, |
| V | is a phenylene radical which contains the abovementioned and defined |

radicals $R^2$ and $R^3$, or is a naphthylene radical, which may be substituted by 1 or 2 sulfo groups,

$R^5$ is a direct bond or a radical of the formula -NH-CO-phenylene-, -NH-CO-NH-phenylene-, $-N(CH_3)$-CO-phenylene- or $-N(CH_3)$-CO-NH-phenylene-,

$R^6$ is hydrogen, alkyl having 1 to 4 carbon atoms, alkoxy having 1 to 4 carbon atoms, bromine, chlorine or alkanoylamino having 2 to 7 carbon atoms,

$R^7$ is hydrogen, alkyl having 1 to 4 carbon atoms, alkoxy having 1 to 4 carbon atoms, chlorine, alkanoylamino having 2 to 7 carbon atoms, an ureido or phenylureido group,

$R^8$ has one of the abovementioned meanings,

$R^x$ is hydrogen, alkyl having 1 to 4 carbon atoms or alkyl having 1 to 4 carbon atoms which is substituted by alkoxy having 1 to 4 carbon atoms or by cyano,

$R^y$ is hydrogen, sulfo, sulfoalkyl containing an alkylene radical having 1 to 4 carbon atoms, or is a cyano or a carbamoyl group, and

$R^z$ is alkylene having 1 to 6 carbon atoms, or phenylene, which may be substituted by substituents selected from the group comprising methyl, ethyl, chlorine, carboxyl and sulfo, or is alkylenephenylene having 2 to 4 carbon atoms in the alkylene radical.

**8.** The process as claimed in claim 1, wherein the dye synthesized is a dye conforming to the formula (12a)

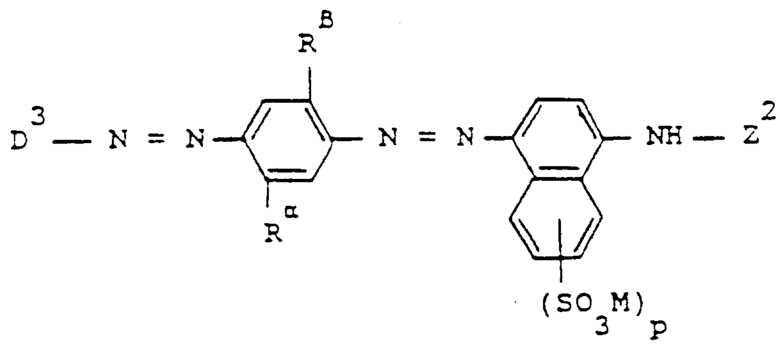

(12a)

in which:

$D^3$ is a group of the formula (6a) or (6b)

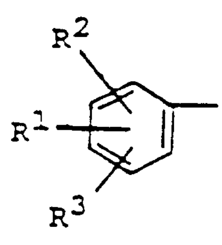

(6a)

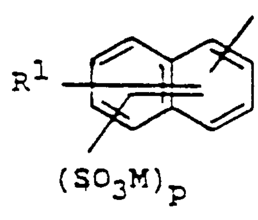

(6b)

in which

$R^1$ is a group of the formula $Y^1-SO_2-$ where $Y^1$ is as defined in claim 1,

$R^2$ is a hydrogen atom or the methyl, methoxy, ethoxy or sulfo group or a chlorine atom,

$R^3$ is a hydrogen atom or the methyl, methoxy, ethoxy or carboxyl group or a chlorine atom,

M is a hydrogen atom or an alkali metal, and

p is the number zero, 1 or 2;

$R^\beta$ is a hydrogen atom or the sulfo, $\beta$-methoxyethoxy, methyl, ethyl, methoxy or ethoxy group;

$R^\alpha$ is a hydrogen atom or the methyl, ethyl, methoxy, ethoxy, acetylamino, propionylamino or ureido group;

M is as defined above;

p is as defined above;
$Z^2$ is a group of the formula (3b)

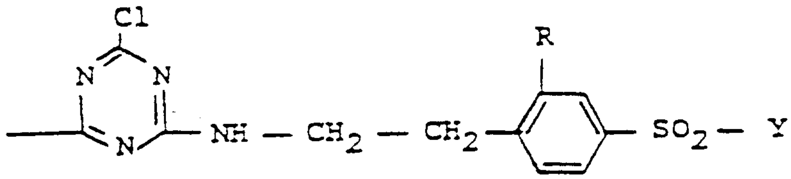

(3b)

in which Y and R are as defined in claim 1.

**9.** The process as claimed in at least one of claims 1 to 3, 5 and 7, wherein k is the number 1.

**10.** The process as claimed in at least one of claims 1 to 3 and 9, wherein n is the number 1.

**11.** The process as claimed in at least one of claims 1 to 7, 9 and 10, wherein Z is a group of the formula

(3)

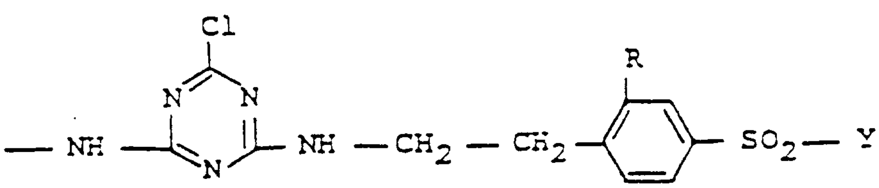

(3)

where R and Y are as defined in claim 1.

**12.** The process as claimed in at least one of claims 1 to 11, wherein R is a hydrogen atom.

**13.** The process as claimed in at least one of claims 1 to 12, wherein $Y^1$ is the β-sulfatoethyl group.

**14.** The process as claimed in at least one of claims 1 to 13, wherein Y is the β-sulfatoethyl group.

**15.** A process for coloring (dyeing, including printing) hydroxyl- and/or carboxamide-containing material, preferably fiber material, in which a dye is applied to the material or introduced into the material, and the dye is fixed on or in the material by means of heat or with the aid of an alkaline agent or by means of heat and with the aid of an alkaline agent, which comprises using, as the dye, a compound conforming to the formula (1) of at least one of claims 1 to 14.

**Revendications**
**Revendications pour les Etats contractants suivants : BE, CH, DE, FR, GB, IT, LI**

**1.** Colorant correspondant à la formule générale (1)

$(Y^1\text{-}SO_2)_k\text{-}A\text{-}Z_n$ (1)

dans laquelle

A représente le radical d'un colorant hydrosoluble contenant des groupes sulfo et/ou carboxy,
$Y^1$ représente le groupe vinyle ou représente un groupe β-chloréthyle, β-thiosulfatoéthyle, β-acétyloxy-éthyle ou de préférence β-sulfatoéthyle,
k représente le nombre 1 ou 2,
n représente le nombre 1 ou 2, et
Z représente un groupe de formule générale (2)

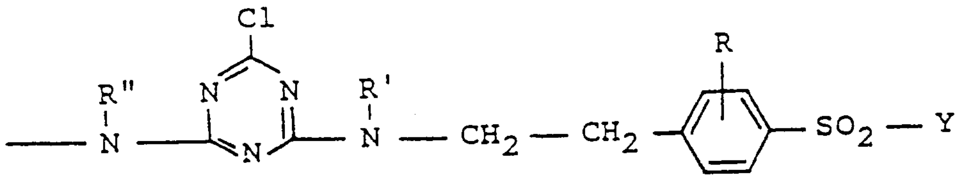

(2)

dans laquelle

R' et R'' chacun, indépendamment l'un de l'autre, représentent un atome d'hydrogène ou un groupe alkyle comportant de 1 à 4 atomes de carbone,

R représente un atome d'hydrogène ou un groupe sulfo et

Y représente le groupe vinyle ou est un groupe $\beta$-sulfatoéthyle, $Y^1$ et Y pouvant avoir des significations identiques ou différentes l'une de l'autre,

cependant, à l'exception du colorant de formule générale

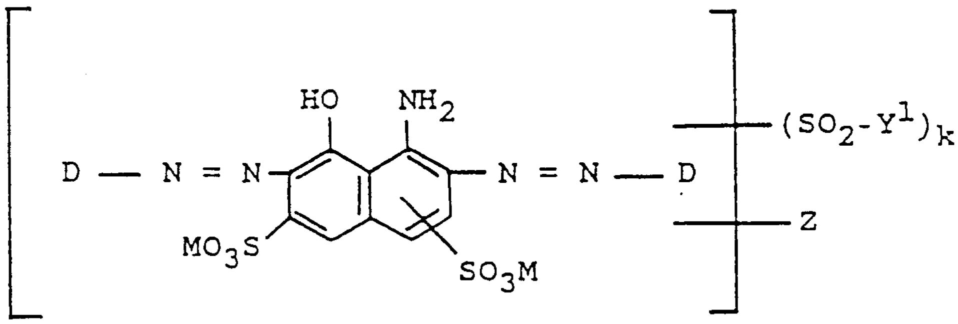

dans laquelle

M représente un atome d'hydrogène ou un métal alcalin,

D représente chaque fois le radical d'un composant diazoïque, deux D ayant des significations différentes l'un de l'autre, et

Z, k et $Y^1$ ont l'une des significations données ci-dessus, le radical Z étant lié à un des radicaux D et le(s) groupe(s) $-SO_2-Y^1$ étant lié(s) directement à un atome de carbone aromatique de D, toutefois, les groupes $-SO_2-Y^1$ et Z n'étant pas liés simultanément au même radical D.

**2.** Colorants selon la revendication 1, caractérisés en ce que A représente le radical d'un colorant mono- ou disazoïque contenant des groupes sulfo.

**3.** Colorant selon la revendication 1, caractérisé en ce que A représente le radical d'un complexe de chrome-colorant monoazo- ou disazoïque 1:2 ou d'un complexe de cobalt-colorant monoazo- ou disazoïque 1:2 ou d'un complexe de cuivre-colorant monoazo- ou disazoïque 1:1, contenant des groupes sulfo.

**4.** Colorant selon la revendication 1 correspondant à la formule générale

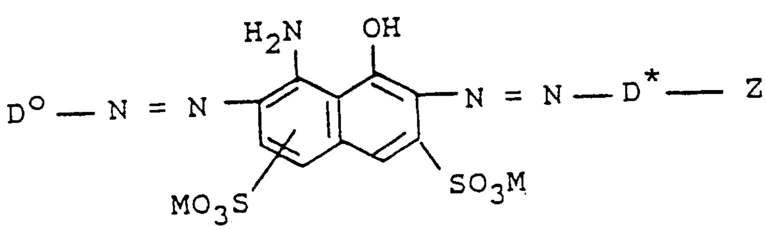

dans laquelle :

M représente un atome d'hydrogène ou un métal alcalin ;

Z a la signification donnée dans la revendication 1 ;
D° représente un radical de formule générale (6a), (6b) ou (6c)

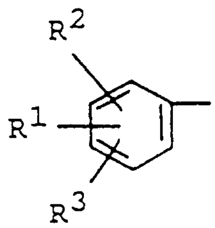

(6a)

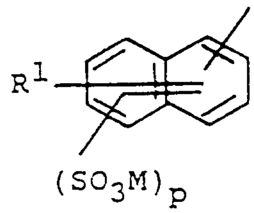

(6b)

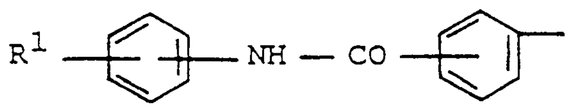

(6c)

dans lesquelles

- $R^1$ représente un radical de formule générale $Y^1$-$SO_2$-$X^1$, dans laquelle $Y^1$ a la signification donnée dans la revendication 1 et $X^1$ représente le groupe méthylène ou un groupe méthylamino,
- $R^2$ représente l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle,
- $R^3$ représente l'hydrogène, les méthyle, éthyle, méthoxy, éthoxy, cyan, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy,

  le cycle de benzène, respectivement de naphtalène, des formules (6a) et (6b) pouvant de plus contenir un groupe hydroxy en position ortho par rapport à la libre liaison,
- p signifie le nombre 0, 1 ou 2 (dans le cas de p égal à zéro, ce groupe signifiant un atome d'hydrogène) et
- M a la signification donnée ci-dessus ;
- D* représente un radical phényle qui peut être substitué par 1 ou 2 substituants pris dans le groupe comportant l'hydrogène, les méthyle, éthyle, méthoxy, brome, chlore, carboxy et sulfo, ou représente un radical naphtylène qui peut être substitué par 1 ou 2 groupes sulfo.

**5.** Colorant selon la revendication 1 répondant à la formule générale (5b)

$(Y^1\text{-}SO_2\text{-}X^1)_k\text{-}D^1\text{-}N=N\text{-}(E^1\text{-}N=N)_v\text{-}K^*\text{-}Z$ (5b)

dans laquelle :

- $Y^1$, k et Z ont les significations données dans la revendication 1 ;
- $X^1$ représente le groupe méthylène ou le groupe méthylamino ou de préférence une liaison directe ;
- $D^1$ représente un radical phénylène qui est substitué par des substituants $R^2$ et $R^3$,
- $R^2$ représentant l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle et
- $R^3$ représentant l'hydrogène, les méthyle, éthyle, méthoxy, éthoxy, cyano, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou

phénoxy, ou

D[1] représente un radical naphtylène qui peut être substitué par 1 ou 2 groupes sulfo ;

E[1] représente un radical de formule générale (7a), (7b), (7c) ou (7d)

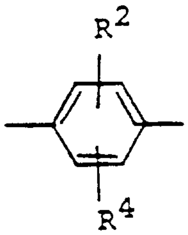

(7a)

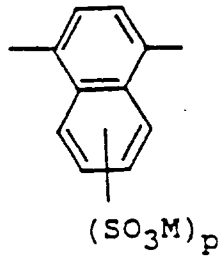

(7b)

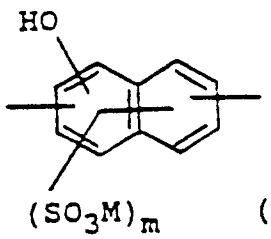

(7c)

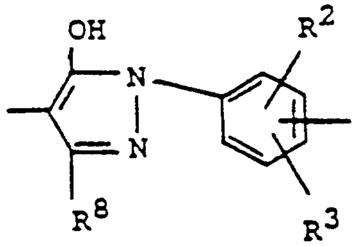

(7d)

dans lesquelles

M représente un atome d'hydrogène ou un métal alcalin,

p signifie le nombre 0, 1 ou 2,

$R^2$ et $R^3$ ont les significations données ci-dessus,

$R^4$ représente un atome d'hydrogène, un groupe alkyle comportant de 1 à 4 atomes de carbone, un groupe alcoxy comportant de 1 à 4 atomes de carbone, un atome de chlore, un groupe alcanoylamino comportant de 2 à 5 atomes de carbone, le groupe benzoylamino, le groupe uréido, un groupe N'-phényl-uréido, un groupe N'-alkyl-uréido comportant de 1 à 4 atomes de carbone dans le radical alkyle, un groupe phénylsulfonyle ou un groupe alkylsulfonyle comportant de 1 à 4 atomes de carbone,

m représente le nombre 1 ou 2, et

$R^8$ représente l'hydrogène, un alkyle comportant de 1 à 4 atomes de carbone, comme les méthyle, cyano, carboxy, carbalcoxy comportant de 2 à 5 atomes de carbone, carboxamido ou phényle, de préférence les méthyle, carboxy ou carbalcoxy comportant de 2 à 5 atomes de carbone ;

-K*-Z représente un radical de formule générale (8a), (8b), (8c), (8d), (8e) ou (8f)

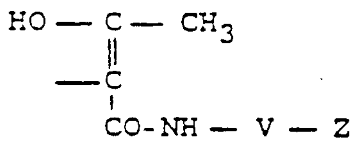

(8a)

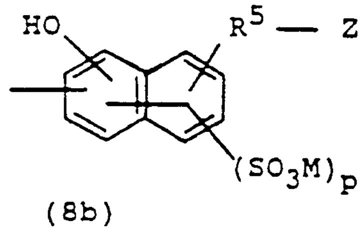

(8b)

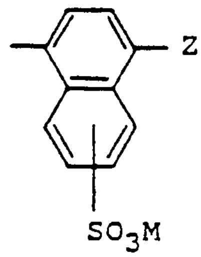

(8c)

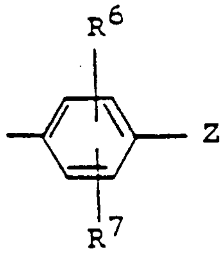

(8d)

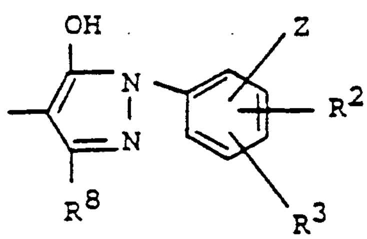

(8e)

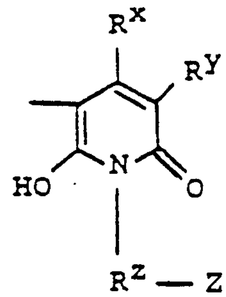

(8f)

dans lesquelles

| | |
|---|---|
| $R^2$, $R^3$, Z, p et M | ont les significations données ci-dessus et le groupe hydroxy dans la formule (8b) est lié en position ortho par rapport à la liaison libre, qui est lié au groupe azo, |
| v | représente un radical phénylène qui contient les radicaux $R^2$ et $R^3$ cités et définis ci-dessus, ou représente un radical naphtylène, qui peut être substitué par 1 ou 2 groupes sulfo, |
| $R^5$ | représente une liaison directe ou un radical de formule -NH-CO-phénylène-, -NH-CO-NH-phénylène-, $-N(CH_3)$-CO-phénylène- ou $-N(CH_3)$-CO-NH-phénylène-, |
| $R^6$ | représente l'hydrogène, les alkyle comportant de 1 à 4 atomes de carbone, alcoxy comportant de 1 à 4 atomes de carbone, brome, chlore ou alcanoylamino comportant de 2 à 7 atomes de carbone, |
| $R^7$ | représente l'hydrogène, les alkyle comportant de 1 à 4 atomes de carbone, alcoxy comportant de 1 à 4 atomes de carbone, chlore ou alcanoylamino comportant de 2 à 7 atomes de carbone, un groupe uréido ou un groupe phényluréido, |
| $R^8$ | a l'une des significations données ci-dessus, |
| $R^x$ | représente l'hydrogène ou un groupe alkyle comportant de 1 à 4 atomes de carbone ou un groupe alkyle comportant de 1 à 4 atomes de carbone substitués par alcoxy comportant 1 à 4 atomes de carbone ou cyano, |
| $R^y$ | représente un atome d'hydrogène, un groupe sulfo ou un groupe sulfoalkyle avec un radical alkyle comportant de 1 à 4 atomes de carbone, ou ou un groupe cyano ou ou un groupe carbamoyle, et |
| $R^z$ | représente un groupe alkylène comportant de 1 à 6 atomes de carbone ou un radical phénylène qui peut être substitué par des substituants pris dans le groupe comportant les méthyle, éthyle, chlore, carboxy et sulfo, ou représente un radical alkylène-phénylène comportant de 2 à 4 atomes de carbone dans le radical alkylène ; |
| v | représente le nombre 0 ou 1. |

**6.** Colorant selon la revendication 1, répondant à la formule générale (5c)

$$Z\text{-}D^{*}\text{-}N=N\text{-}(E^1\text{-}N=N)_v\text{-}K^1\text{-}X^1\text{-}SO_2\text{-}Y^1 \qquad (5c)$$

dans laquelle :

Z et $Y^1$ ont les significations données dans la revendication 1 ;

D* représente un radical phénylène qui peut être substitué par 1 ou 2 substituants pris dans le groupe comportant l'hydrogène, les méthyle, éthyle, méthoxy, brome, chlore, carboxy et sulfo, ou représente un radical naphtylène qui peut être substitué par 1 ou 2 groupes sulfo ;

$E^1$ représente un radical de formule générale (7a), (7b), (7c) ou (7d)

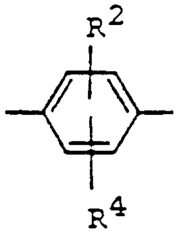
(7a)

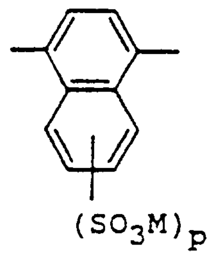
(7b)

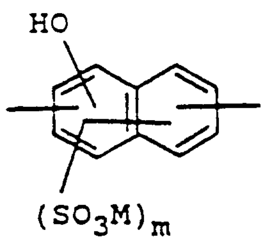
(7c)

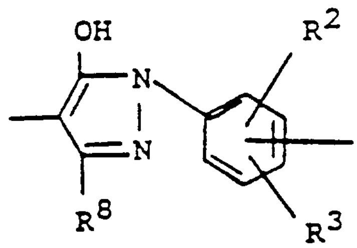
(7d)

dans lesquelles

$R^2$ représente l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle et

$R^3$ représente l'hydrogène, les méthyle, éthyle, méthoxy, éthoxy, cyano, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy,

$R^4$ représente un atome d'hydrogène, un groupe alkyle comportant de 1 à 4 atomes de carbone, un groupe alcoxy comportant de 1 à 4 atomes de carbone, un atome de chlore, un groupe alcanoylamino comportant de 2 à 5 atomes de carbone, le groupe benzoylamino, le groupe uréido, un groupe N'-phényl-uréido, un groupe N'-alkyl-uréido comportant de 1 à 4 atomes de carbone dans le radical alkyle, un groupe phénylsulfonyle ou un groupe alkylsulfonyle comportant de 1 à 4 atomes de carbone,

M représente un atome d'hydrogène ou un métal alcalin,

p représente le nombre 0, 1 ou 2,

m représente le nombre 1 ou 2, et

$R^8$ représente l'hydrogène, les alkyle comportant de 1 à 4 atomes de carbone, cyano, carboxy, carbalcoxy comportant de 2 à 5 atomes de carbone, carboxamido ou phényle, de préférence les méthyle, carboxy ou carbalcoxy comportant de 2 à 5 atomes de carbone ;

v représente le nombre 0 ou 1 ;

$K^1$ représente un radical de formule générale (9a), (9b) ou (9c)

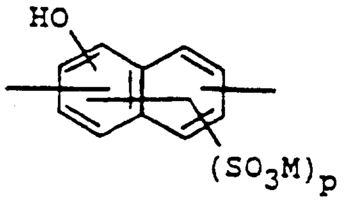

(9a)

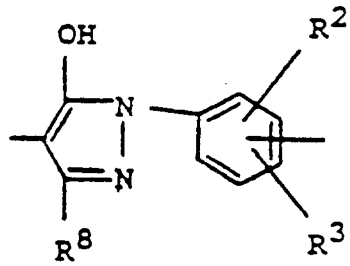

(9b)

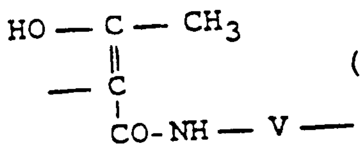

(9c)

dans lesquelles

| | |
|---|---|
| M, p, $R^2$, $R^3$ et $R^8$ | ont l'une des significations données ci-dessus, le groupe hydroxy dans la formule (9a) étant en position ortho par rapport à la liaison libre qui est lié au groupe azo, et |
| V | représente un radical phénylène, qui contient les radicaux $R^2$ et $R^3$, cités et définis ci-dessus, ou représente un radical naphtylène, qui peut être substitué par 1 ou 2 groupes sulfo ; |
| $X^1$ | représente le groupe méthylène ou le groupe méthylamino ou de préférence une liaison directe. |

**7.** Colorant selon la revendication 1 répondant à la formule générale (5d)

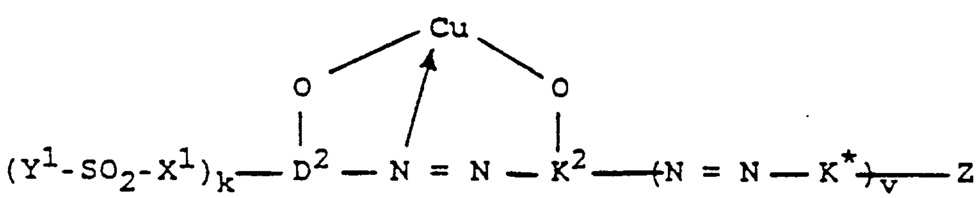

(5d)

dans laquelle

| | |
|---|---|
| $Y^1$, k et Z | ont les significations données dans la revendication 1 ; |
| $X^1$ | représente le groupe méthylène ou le groupe méthylamino, ou de préférence une liaison directe ; |
| $D^2$ | représente un radical benzène, dont les liaisons libres allant à l'atome complexant oxy et au groupe azo sont en position ortho l'une par rapport à l'autre et qui peut contenir, en tant que substituants supplémentaires, 1 ou 2 substituants pris dans le groupe des méthyle, éthyle, méthoxy, éthoxy, brome, chlore, carboxy et sulfo, ou représente un radical naphtalène auquel sont liés le groupe oxy en position 1 et le groupe azo en position 2 et qui peuvent contenir en tant que substituant supplémentaire un groupe sulfo ; |
| $K^2$ | représente un radical de formule générale (10a) ou (10b) |

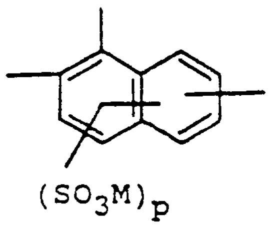

(10a)

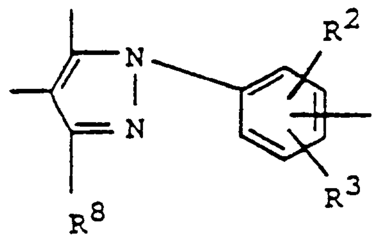

(10b)

dans lesquelles

| | |
|---|---|
| M | représente un atome d'hydrogène ou un métal alcalin, |
| p | vaut le nombre 0, 1 ou 2, |
| $R^2$ | représente l'hydrogène, les méthyle, éthyle, méthoxy, éthoxy, alcanoyle comportant de 2 à 5 atomes de carbone, cyan, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle, |
| $R^3$ | représente l'hydrogène, les méthyle, éthyle, méthoxy, éthoxy, cyan, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy, et |
| $R^8$ | représente l'hydrogène, les alkyle comportant de 1 à 4 atomes de carbone, cyano, carboxy, carbalcoxy comportant de 2 à 5 atomes de carbone, carboxamido ou phényle, de préférence les méthyle, carboxy ou carbalcoxy comportant de 2 à 5 atomes de carbone ; |
| v | représente le nombre 0 ou 1 ; |
| -K*-Z | représente un radical de formule générale (8a), (8b), (8c), (8d), (8e) ou (8f) |

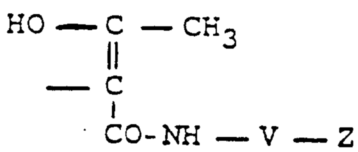

(8a)

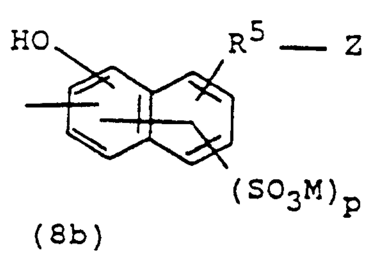

(8b)

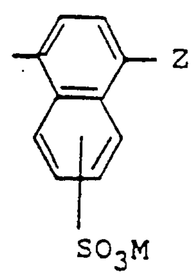

(8c)

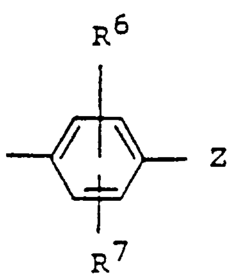

(8d)

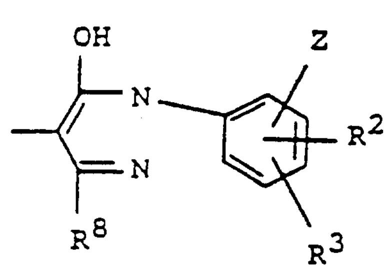

(8e)

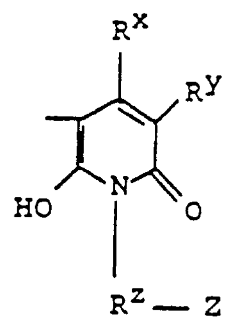

(8f)

dans lesquelles

| | |
|---|---|
| $R^2$, $R^3$, Z, p et M | ont les significations données ci-dessus et le groupe hydroxy dans la formule (8b) est lié en position ortho par rapport à la liaison libre qui est lié au groupe azo, |

V	représente un radical phénylène qui contient les radicaux $R^2$ et $R^3$, cités et définis ci-dessus, ou représente un radical naphtylène, qui peut être substitué par 1 ou 2 groupes sulfo,

$R^5$	représente une liaison directe ou un radical de formule -NH-CO-phénylène-, -NH-CO-NH-phénylène-, $-N(CH_3)-$CO-phénylène- ou $-N(CH_3)-$CO-NH-phénylène- ,

$R^6$	représente l'hydrogène, les alkyle comportant de 1 à 4 atomes de carbone, les alcoxy comportant de 1 à 4 atomes de carbone, brome, chlore ou alcanoylamino comportant de 2 à 7 atomes de carbone,

$R^7$	représente l'hydrogène, les alkyle comportant de 1 à 4 atomes de carbone, les alcoxy comportant de 1 à 4 atomes de carbone, chlore ou alcanoylamino comportant de 2 à 7 atomes de carbone, uréido ou le groupe phényluréido,

$R^8$	a l'une des significations données ci-dessus,

$R^x$	représente l'hydrogène ou un groupe alkyle comportant de 1 à 4 atomes de carbone ou un groupe alkyle comportant de 1 à 4 atomes de carbone substitué par alcoxy comportant 1 à 4 atomes de carbone ou cyano,

$R^y$	représente l'hydrogène, un groupe sulfo ou un groupe sulfoalkyle avec un radical alkyle comportant de 1 à 4 atomes de carbone ou un groupe cyano ou un groupe carbamoyle, et

$R^z$	représente un groupe alkylène comportant de 1 à 6 atomes de carbone ou un radical phénylène qui peut être substitué par des substituants pris dans le groupe des méthyle, éthyle, chlore, carboxy et sulfo, ou représente un radical alkylène-phénylène comportant de 2 à 4 atomes de carbone dans le radical alkylène.

**8.** Colorant selon la revendication 1 répondant à la formule générale (12a)

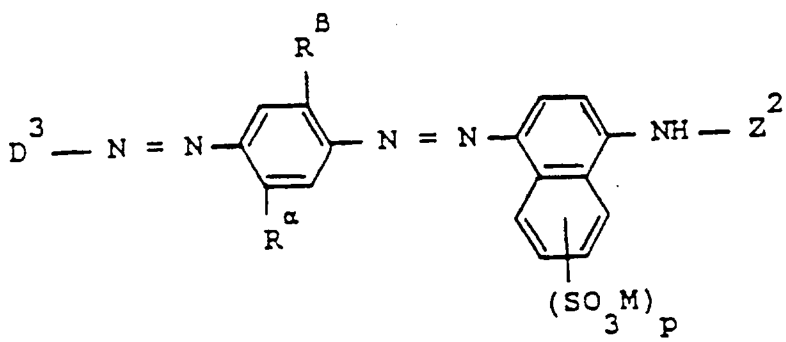

(12a)

dans laquelle

$D^3$	représente un groupe de formule générale (6a) ou (6b)

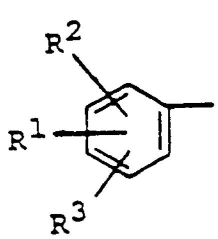

(6a)

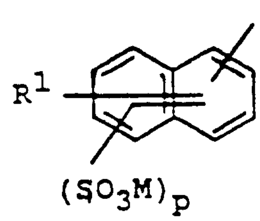

(6b)

dans lesquelles

$R^1$	représente un groupe de formule générale $Y^1-SO_2-$avec $Y^1$ ayant la signification donnée dans la revendication 1,

$R^2$	représente un atome d'hydrogène ou les groupes méthyle, méthoxy, éthoxy ou sulfo ou

représente un atome de chlore,

$R^3$ représente un atome d'hydrogène ou les groupes méthyle, méthoxy, éthoxy ou carboxy ou représente un atome de chlore,

M représente un atome d'hydrogène ou un métal alcalin, et

p vaut le nombre 0, 1 ou 2 ;

$R^\beta$ représente un atome d'hydrogène ou les groupes sulfo, $\beta$-méthoxy-éthoxy, méthyle, éthyle, méthoxy ou éthoxy ;

$R^*$ représente un atome d'hydrogène ou les groupes méthyle, éthyle, méthoxy, éthoxy, acylamino, propionylamino ou uréido ;

M a la signification donnée ci-dessus ;

p a la signification donnée ci-dessus ;

$Z^2$ représente un groupe de formule générale (3b)

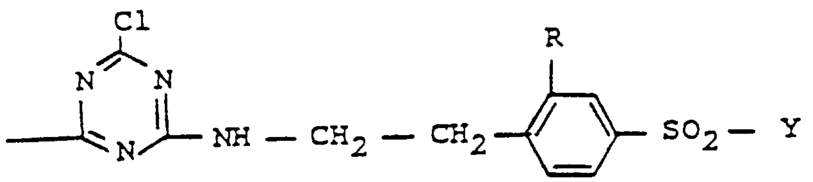

(3b)

dans laquelle Y et R ont l'une des significations données dans la revendication 1.

**9.** Colorant selon au moins l'une des revendications 1 à 3, 5 et 7, caractérisé en ce que k représente le nombre 1.

**10.** Colorant selon au moins l'une des revendications 1 à 3 et 9, caractérisé en ce que n représente le nombre 1.

**11.** Colorant selon au moins l'une des revendications 1 à 7, 9 et 10, caractérisé en ce que Z représente un groupe de formule générale (3)

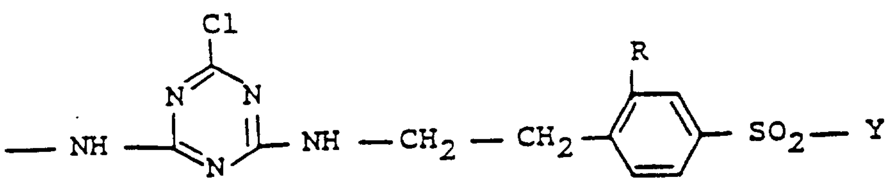

(3)

avec R et Y ayant la signification donnée dans la revendication 1.

**12.** Composé selon au moins l'une des revendications 1 à 11, caractérisé en ce que R représente un atome d'hydrogène.

**13.** Colorant selon au moins l'une des revendications 1 à 12, caractérisé en ce que $Y^1$ représente le groupe $\beta$-sulfatoéthyle.

**14.** Colorant selon au moins l'une des revendications 1 à 13, caractérisé en ce que Y représente le groupe $\beta$-sulfatoéthyle

**15.** Procédé pour la préparation d'un colorant de formule générale (1) , citée et définie dans la revendication 1, caractérisé en ce qu'on fait réagir les précurseurs usuels des colorants hydrosolubles, dont au moins un contient un groupe de formule générale (2), et au moins un un groupe de formule générale $-SO_2-Y^1$, entre eux, selon le mode opératoire usuel pour obtenir le colorant correspondant,
ou en faisant réagir le chlorure de cyanuryle en ordre quelconque, avec un composé amino de formule générale (22)

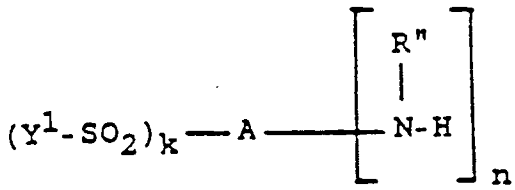

(22)

dans laquelle $Y^1$, k, A, R" et n ont les significations données dans la revendication 1, et avec un composé amino de formule générale (23)

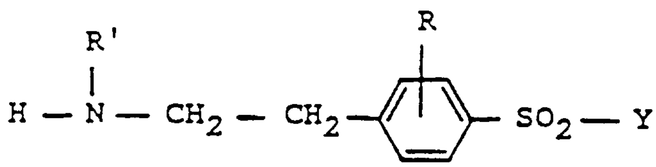

(23)

dans laquelle R', R et Y ont les significations données dans la revendication 1.

**16.** Utilisation d'un composé répondant à la formule (1) d'au moins l'une des revendications 1 à 15, pour la teinture et l'impression de matières contenant des groupes hydroxy et/ou carboxamido, plus particulièrement de matières fibreuses.

**17.** Procédé pour la coloration (teinture, y compris l'impression) de matières contenant des groupes hydroxy et/ou carboxamido, de préférence de matières fibreuses, selon lequel on dépose un colorant sur la matière ou on l'incorpore dans la matière et on fixe le colorant sur ou dans la matière, au moyen de la chaleur ou à l'aide d'un agent à action alcaline ou au moyen de la chaleur et à l'aide d'un agent alcalin, caractérisé en ce qu'on utilise en tant que colorant un composé répondant à la formule générale (1) d'au moins de l'une des revendications 1 à 15.

**Revendications pour l'Etat contractant suivant : ES**

**1.** Procédé pour la préparation d'un colorant correspondant à la formule générale (1)

$(Y^1\text{-}SO_2)_k\text{-}A\text{-}Z_n$ (1)

dans laquelle

| | |
|---|---|
| A | représente le radical d'un colorant hydrosoluble contenant des groupes sulfo et/ou carboxy, |
| $Y^1$ | représente le groupe vinyle ou représente un groupe $\beta$-chloréthyle, $\beta$-thiosulfatoéthyle, $\beta$-acétyloxyéthyle ou $\beta$-sulfatoéthyle, |
| k | représente le nombre 1 ou 2, |
| n | représente le nombre 1 ou 2, et |
| Z | représente un groupe de formule générale (2) |

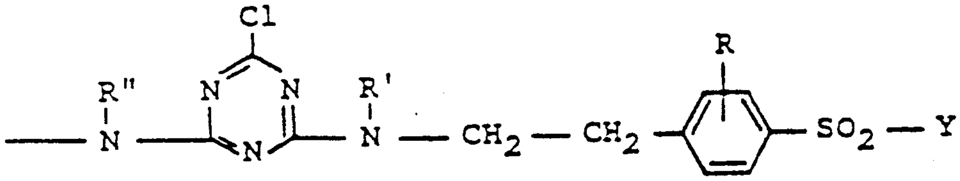

(2)

dans laquelle

| | |
|---|---|
| R' et R" | chacun, indépendamment l'un de l'autre, représentent un atome d'hydrogène ou un groupe alkyle comportant de 1 à 4 atomes de carbone, |

R représente un atome d'hydrogène ou un groupe sulfo et

Y représente le groupe vinyle ou est un groupe β-sulfatoéthyle, $Y^1$ et Y pouvant avoir des significations identiques ou différentes l'une de l'autre,

cependant, à l'exception des colorants de formule générale

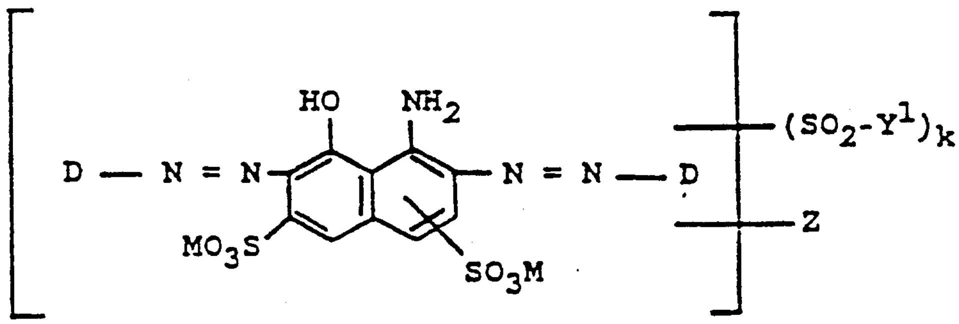

dans laquelle

M représente un atome d'hydrogène ou un métal alcalin,

D représente chaque fois le radical d'un composant diazoïque, les deux D ayant des significations différentes l'un de l'autre, et

Z, k et $Y^1$ ont l'une des significations données ci-dessus, le radical Z étant lié à un des radicaux D et le(s) groupe(s) $-SO_2-Y^1$ étant lié(s) directement à un atome de carbone aromatique de D, toutefois, les groupes $-SO_2-Y^1$ et Z n'étant pas liés simultanément au même radical D

caractérisé en ce qu'on fait réagir pour les colorants hydrosolubles des précurseurs usuels, dont au moins un contient un groupe de formule générale (2) et au moins un, un groupe de formule générale $-SO_2-Y^1$, entre eux, de façon usuelle, pour obtenir le colorant correspondant,

ou on fait réagir le chlorure de cyanuryle en ordre quelconque avec un composé amino de formule générale (22)

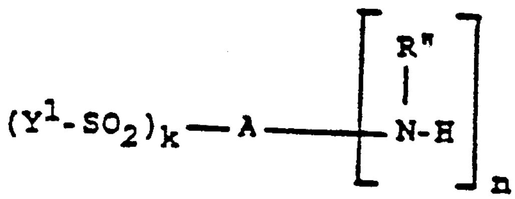

(22)

dans laquelle $Y^1$, k, A, R'' et n ont les significations données ci-dessus, et avec un composé amino de formule générale (23)

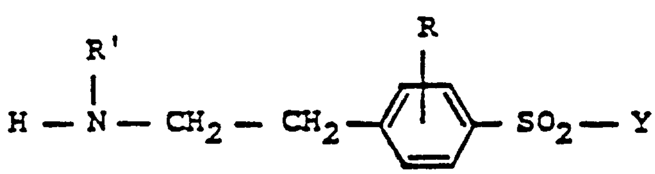

(23)

dans laquelle R', R et Y ont les significations données ci-dessus.

2. Procédé selon la revendication 1, caractérisé en ce que A représente le radical d'un colorant mono- ou disazoïque contenant des groupes sulfo.

3. Procédé selon la revendication 1, caractérisé en ce que A représente le radical d'un complexe de chrome-colorant monoazo- ou disazoïque 1:2 ou d'un complexe de cobalt-colorant monoazo- ou disazoïque 1:2 ou d'un complexe de cuivre-colorant monoazo- ou disazoïque 1:1, contenant des

groupes sulfo.

**4.** Procédé selon la revendication 1, caractérisé en ce que la colorant synthétisé est un colorant correspondant à la formule générale

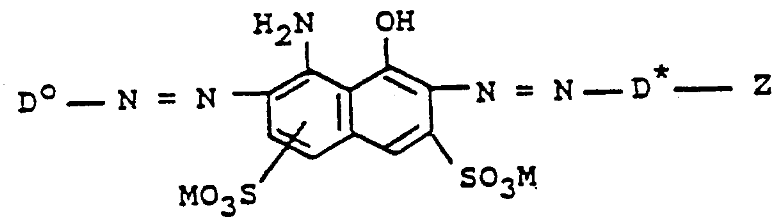

dans laquelle :

M représente un atome d'hydrogène ou un métal alcalin ;

Z a la signification donnée dans la revendication 1 ;

D° représente un radical de formule générale (6a), (6b) ou (6c)

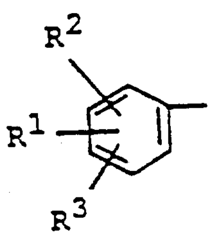

(6a)

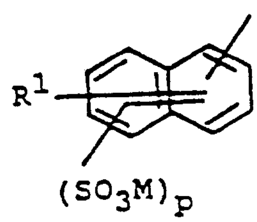

(6b)

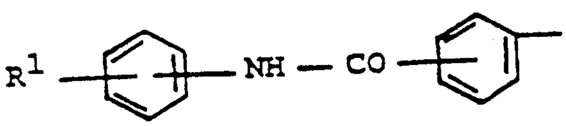

(6c)

dans lesquelles

$R^1$ représente un radical de formule générale $Y^1$-$SO_2$-$X^1$, dans laquelle $Y^1$ a la signification donnée dans la revendication 1 et $X^1$ représente le groupe méthylène ou un groupe methylamino,

$R^2$ représente l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle,

$R^3$ représente l'hydrogène, les méthyle, éthyle, méthoxy, éthoxy, cyan, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy,

le cycle de benzène, respectivement de naphtalène, des formules (6a) et (6b) pouvant de plus contenir un groupe hydroxy en position ortho par rapport à la liaison libre,

p signifie le nombre 0, 1 ou 2 (dans le cas de p égal à zéro, ce groupe signifiant un atome d'hydrogène) et

M a la signification donnée ci-dessus ;

D* représente un radical phénylène qui peut être substitué par 1 ou 2 substituants pris dans le groupe comportant l'hydrogène, les méthyle, éthyle, méthoxy, brome, chlore, carboxy et sulfo, ou représente un radical naphtylène qui peut être substitué par 1 ou 2 groupes sulfo ;

**5.** Procédé selon la revendication 1, caractérisé en ce que le colorant synthétisé est un colorant répondant à la formule générale (5b)

$(Y^1\text{-}SO_2\text{-}X^1)_k\text{-}D^1\text{-}N=N\text{-}(E^1\text{-}N=N)_v\text{-}K^*\text{-}Z$ (5b)

dans laquelle :

$Y^1$, k et Z ont les significations données dans la revendication 1 ;

$X^1$ représente le groupe méthylène ou le groupe méthylamino ou de préférence une liaison directe ;

$D^1$ représente un radical phénylène qui est substitué par des substituants $R^2$ et $R^3$,

$R^2$ représentant l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle et

$R^3$ représentant l'hydrogène, les méthyle, éthyle, méthoxy, éthoxy, cyano, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy, ou

$D^1$ représente un radical naphtylène qui peut être substitué par 1 ou 2 groupes sulfo ;

$E^1$ représente un radical de formule générale (7a), (7b), (7c) ou (7d)

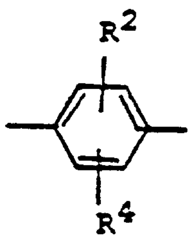
(7a)

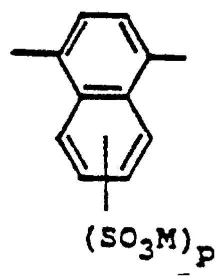
(7b)

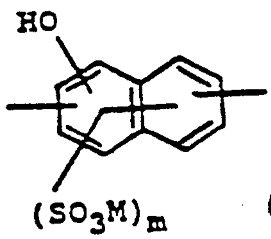
(7c)

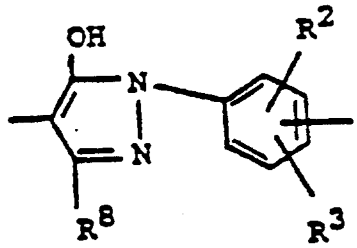
(7d)

dans lesquelles

M représente un atome d'hydrogène ou un métal alcalin,

p signifie le nombre 0, 1 ou 2,

$R^2$ et $R^3$ ont les significations données ci-dessus,

$R^4$ représente un atome d'hydrogène, un groupe alkyle comportant de 1 à 4 atomes de carbone, un groupe alcoxy comportant de 1 à 4 atomes de carbone, un atome de chlore, un groupe alcanoylamino comportant de 2 à 5 atomes de carbone, le groupe benzoylamino, le groupe uréido, un groupe N'-phényl-uréido, un groupe N'-alkyl-uréido comportant de 1 à 4 atomes de carbone dans le radical alkyle, un groupe phénylsulfonyle ou un groupe alkylsulfonyle comportant de 1 à 4 atomes de carbone,

m représente le nombre 1 ou 2, et

$R^8$ représente l'hydrogène, un alkyle comportant de 1 à 4 atomes de carbone, comme les méthyle, cyano, carboxy, carbalcoxy comportant de 2 à 5 atomes de carbone, carboxamido ou phényle, de préférence les méthyle, carboxy ou

carbalcoxy comportant de 2 à 5 atomes de carbone

-K*-Z représente un radical de formule générale (8a), (8b), (8c), (8d), (8e) ou (8f)

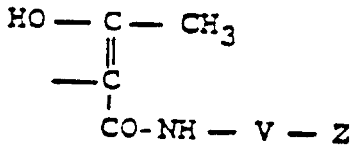
(8a)

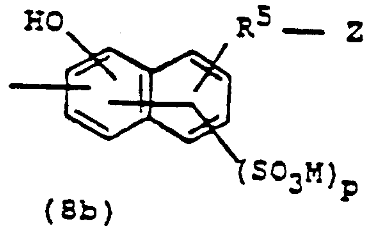
(8b)

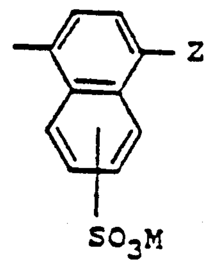
(8c)

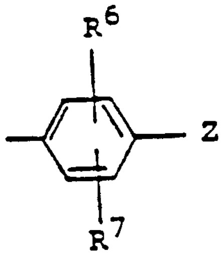
(8d)

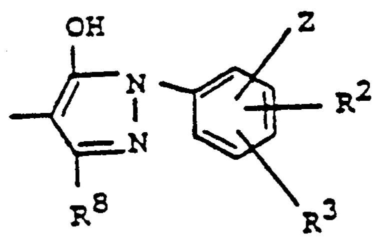
(8e)

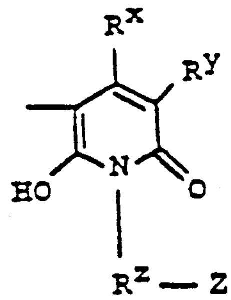
(8f)

dans lesquelles

$R^2$, $R^3$, Z, p et M ont les significations données ci-dessus et le groupe hydroxy dans la formule -(8b) est lié en position ortho par rapport à la liaison libre, qui est lié au groupe azo,

V représente un radical phénylène qui contient les radicaux $R^2$ et $R^3$, cités et définis ci-dessus, ou représente un radical naphtylène, qui peut être substitué par 1 ou 2 groupes sulfo,

$R^5$ représente une liaison directe ou un radical de formule -NH-CO-phénylène-, -NH-CO-NH-phénylène- , $-N(CH_3)-CO-$phénylène- ou $-N(CH_3)-CO-NH-$phénylène-,

$R^6$ représente l'hydrogène, les alkyle comportant de 1 à 4 atomes de carbone, alcoxy comportant de 1 à 4 atomes de carbone, brome, chlore ou alcanoylamino comportant de 2 à 7 atomes de carbone,

$R^7$ représente l'hydrogène, les alkyle comportant de 1 à 4 atomes de carbone, alcoxy comportant de 1 à 4 atomes de carbone, chlore ou alcanoylamino comportant de 2 à 7 atomes de carbone, un groupe uréido ou un groupe phényluréido,

$R^8$ a l'une des significations données ci-dessus,

$R^x$ représente l'hydrogène ou un groupe alkyle comportant de 1 à 4 atomes de carbone ou un groupe alkyle comportant de 1 à 4 atomes de carbone substitué par alcoxy comportant 1 à 4 atomes de carbone ou cyano,

$R^y$ représente un atome d'hydrogène, un groupe sulfo ou un groupe sulfoalkyle avec un radical alkyle comportant de 1 à 4 atomes de carbone, ou un groupe cyano ou ou un groupe carbamoyle, et

$R^z$ représente un groupe alkylène comportant de 1 à 6 atomes de carbone ou un radical phénylène qui peut être substitué par des substituants pris dans le groupe comportant les méthyle, éthyle, chlore, carboxy et sulfo, ou représente un radical alkylène-phénylène comportant de 2 à 4 atomes de carbone dans le radical alkylène ;

v représente le nombre 0 ou 1.

**6.** Procédé selon la revendication 1, répondant à la formule générale (5c)

$Z\text{-}D^{*}\text{-}N = N\text{-}(E^1\text{-}N = N)_v\text{-}K^1\text{-}X^1\text{-}SO_2\text{-}Y^1$ (5c)

dans laquelle :

Z et $Y^1$ ont les significations données dans la revendication 1 ;

$D^*$ représente un radical phénylène qui peut être substitué par 1 ou 2 substituants pris dans le groupe comportant l'hydrogène, les méthyle, éthyle, méthoxy, brome, chlore, carboxy et sulfo, ou représente un radical naphtylène qui peut être substitué par 1 ou 2 groupes sulfo ;

$E^1$ représente un radical de formule générale (7a), (7b), (7c) ou (7d)

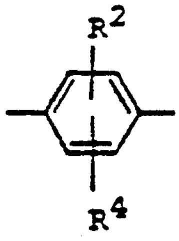

(7a)

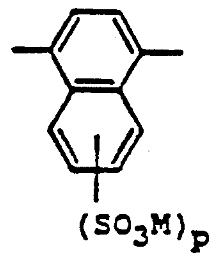

(7b)

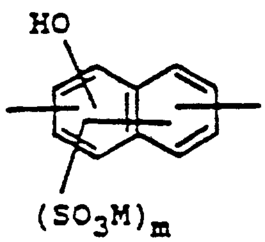

(7c)

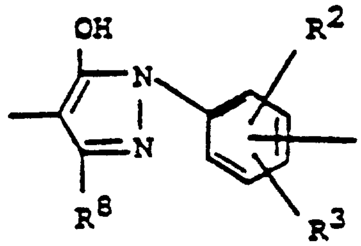

(7d)

dans lesquelles

$R^2$ représente l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle et

$R^3$ représente l'hydrogène, les méthyle, éthyle, méthoxy, éthoxy, cyano, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy,

$R^4$ représente un atome d'hydrogène, un groupe alkyle comportant de 1 à 4 atomes de carbone, un groupe alcoxy comportant de 1 à 4 atomes de carbone, un atome de chlore, un groupe alcanoylamino comportant de 2 à 5 atomes de carbone, le groupe benzoylamino, le groupe uréido, un groupe N'-phényl-uréido, un groupe N'-alkyl-uréido comportant de 1 à 4 atomes de carbone dans le radical alkyle, un groupe phénylsulfonyle ou un groupe alkylsulfonyle comportant de 1 à 4 atomes de carbone,

M représente un atome d'hydrogène ou un métal alcalin,

p représente le nombre 0, 1 ou 2,

m représente le nombre 1 ou 2, et

$R^8$ représente l'hydrogène, les alkyle comportant de 1 à 4 atomes de carbone, cyano, carboxy, carbalcoxy comportant de 2 à 5 atomes de carbone, carboxamido ou phényle, de préférence les méthyle, carboxy ou carbalcoxy comportant de 2 à 5 atomes de carbone ;

v représente le nombre 0 ou 1 ;

$K^1$ représente un radical de formule générale (9a), (9b) ou (9c)

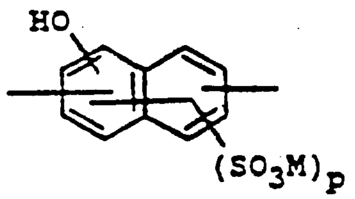

(9a)

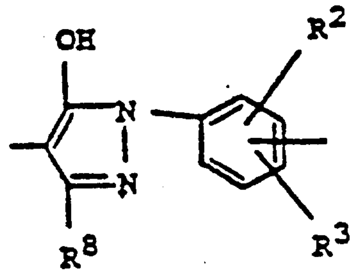

(9b)

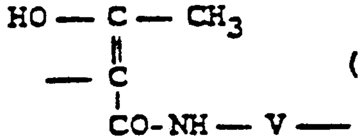

(9c)

dans lesquelles

M, p, $R^2$, $R^3$ et $R^8$ ont l'une des significations données ci-dessus, le groupe hydroxy dans la formule (9a) étant en position ortho par rapport à la liaison libre qui est lié au groupe azo, et

V représente un radical phénylène, qui contient les radicaux $R^2$ et $R^3$, cités et définis ci-dessus, ou représente un radical naphtylène, qui peut être substitué par 1 ou 2 groupes sulfo ;

$X^1$ représente le groupe méthylène ou le groupe méthylamino ou de préférence une liaison directe.

**7.** Procédé selon la revendication 1, caractérisé en ce que le colorant synthétisé est un colorant répondant à la formule générale (5d)

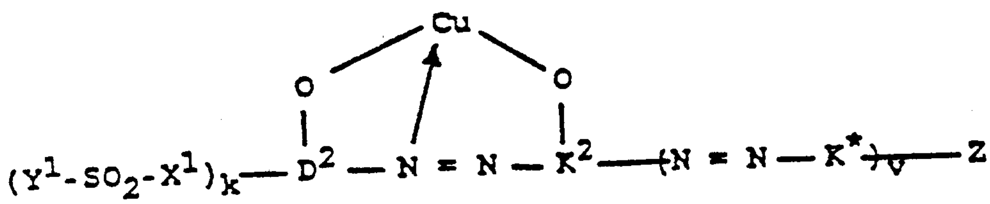

(5d)

dans laquelle

$Y^1$, k et Z ont les significations données dans la revendication 1 ;

$X^1$ représente le groupe méthylène ou le groupe méthylamino, ou de préférence une liaison directe ;

$D^2$ représente un radical benzène, dont les liaisons libres allant à l'atome complexant oxy et au groupe azo sont en position ortho l'une par rapport à l'autre, et qui peut contenir, en tant que substituants supplémentaires, 1 ou 2 substituants pris dans le groupe des méthyle, éthyle, méthoxy, éthoxy, brome, chlore, carboxy et sulfo, ou représente un radical naphtalène auquel sont liés le groupe oxy en position 1 et le groupe azo en position 2 et qui peut contenir en tant que substituant supplémentaire un groupe sulfo ;

$K^2$ représente un radical de formule générale (10a) ou (10b)

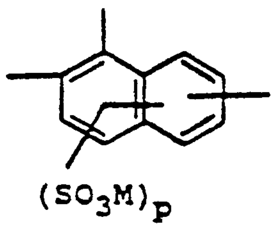

(10a)

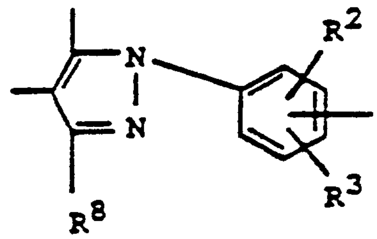

(10b)

dans lesquelles

M représente un atome d'hydrogène ou un métal alcalin,

p vaut le nombre 0, 1 ou 2,

$R^2$ représente l'hydrogène, les méthyle, éthyle, méthoxy, éthoxy, alcanoyle comportant de 2 à 5 atomes de carbone, cyano, carboxy, sulfo, alcoxycarbonyle comportant de 2 à 5 atomes de carbone, carbamoyle, N-(alkyle en $C_1$-$C_4$)-carbamoyle, fluor, chlore, brome ou trifluorométhyle,

$R^3$ représente l'hydrogène, les méthyle, éthyle, méthoxy, éthoxy, cyan, carboxy, sulfo, alcanoylamino comportant de 2 à 5 atomes de carbone, alcoxycarbonyle comportant de 2 à 5 atomes de carbone, carbamoyle, N-(alkyle en $C_1$-$C_4$)-carbamoyle, fluor, chlore, nitro, sulfamoyle, N-(alkyle en $C_1$-$C_4$)-sulfamoyle, alkylsulfonyle comportant de 1 à 4 atomes de carbone, phénylsulfonyle ou phénoxy, et

$R^8$ représente l'hydrogène, les alkyle comportant de 1 à 4 atomes de carbone, cyano, carboxy, carbalcoxy comportant de 2 à 5 atomes de carbone, carboxamido ou phényle, de préférence les méthyle, carboxy ou carbalcoxy comportant de 2 à 5 atomes de carbone ;

v représente le nombre 0 ou 1 ;

-K*-Z représente un radical de formule générale (8a), (8b), (8c), (8d), (8e) ou (8f)

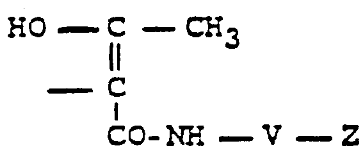

(8a)

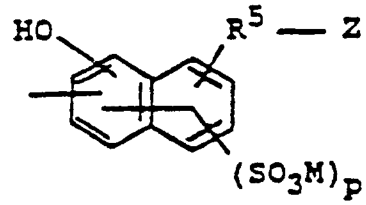

(8b)

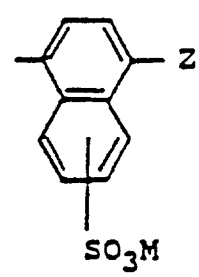

(8c)

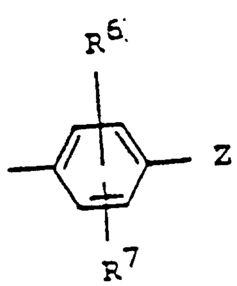

(8d)

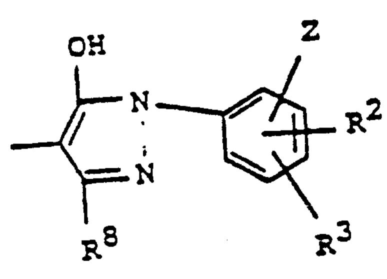

(8e)

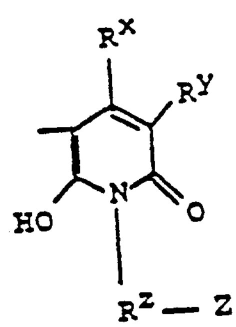

(8f)

dans lesquelles

$R^2$, $R^3$, Z, p et M ont les significations données ci-dessus et le groupe hydroxy dans la formule

(8b) est lié en position ortho par rapport à la liaison libre qui est lié au groupe azo,

V représente un radical phénylène qui contient les radicaux $R^2$ et $R^3$, cités et définis ci-dessus, ou représente un radical naphtylène, qui peut être substitué par 1 ou 2 groupes sulfo,

$R^5$ représente une liaison directe ou un radical de formule -NH-CO-phénylène-, -NH-CO-NH-phénylène-, $-N(CH_3)-$CO-phénylène- ou $-N(CH_3)-$CO-NH-phénylène-,

$R^6$ représente l'hydrogène, les alkyle comportant de 1 à 4 atomes de carbone, les alcoxy comportant de 1 à 4 atomes de carbone, brome, chlore ou alcanoylamino comportant de 2 à 7 atomes de carbone,

$R^7$ représente l'hydrogène, les alkyle comportant de 1 à 4 atomes de carbone, les alcoxy comportant de 1 à 4 atomes de carbone, chlore ou alcanoylamino comportant de 2 à 7 atomes de carbone, uréido ou le groupe phényluréido,

$R^8$ a l'une des significations données ci-dessus,

$R^x$ représente l'hydrogène ou un groupe alkyle comportant de 1 à 4 atomes de carbone ou un groupe alkyle comportant de 1 à 4 atomes de carbone substitué par alcoxy comportant 1 à 4 atomes de carbone ou cyano,

$R^y$ représente l'hydrogène, un groupe sulfo ou un groupe sulfoalkyle avec un radical alkyle comportant de 1 à 4 atomes de carbone ou un groupe cyano ou un groupe carbamoyle, et

$R^z$ représente un groupe alkylène comportant de 1 à 6 atomes de carbone ou un radical phénylène qui peut être substitué par des substituants pris dans le groupe des méthyle, éthyle, chlore, carboxy et sulfo, ou représente un radical alkylène-phénylène comportant de 2 à 4 atomes de carbone dans le radical alkylène.

**8.** Procédé selon la revendication 1, caractérisé en ce que le colorant synthétisé est un colorant répondant à la formule générale (12a)

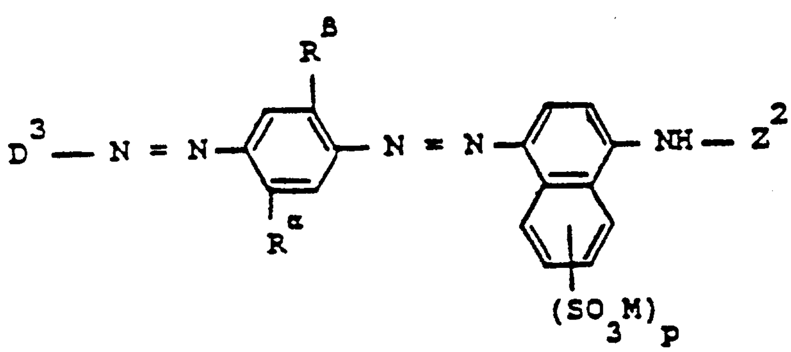

(12a)

dans laquelle

$D^3$ représente un groupe de formule générale (6a) ou (6b)

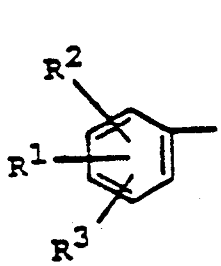

(6a)

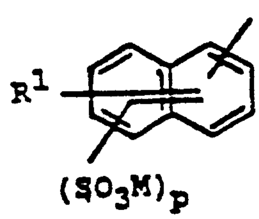

(6b)

dans lesquelles

$R^1$ représente un groupe de formule générale $Y^1-SO_2-$ avec $Y^1$ ayant la signification donnée

dans la revendication 1,

$R^2$ représente un atome d'hydrogène ou les groupes méthyle, méthoxy, éthoxy ou sulfo ou représente un atome de chlore,

$R^3$ représente un atome d'hydrogène ou les groupes méthyle, méthoxy, éthoxy ou carboxy ou représente un atome de chlore,

M représente un atome d'hydrogène ou un métal alcalin, et

p vaut le nombre 0, 1 ou 2 ;

$R^\beta$ représente un atome d'hydrogène ou les groupes sulfo, $\beta$-méthoxy-éthoxy, méthyle, éthyle, méthoxy ou éthoxy ;

$R^\alpha$ représente un atome d'hydrogène ou les groupes méthyle, éthyle, méthoxy, éthoxy, acylamino, propionylamino ou uréido ;

M a la signification donnée ci-dessus ;

p a la signification donnée ci-dessus ;

$Z^2$ représente un groupe de formule générale (3b)

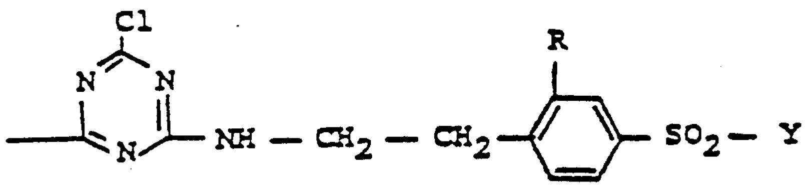

(3b)

dans laquelle Y et R ont l'une des significations données dans la revendication 1.

**9.** Procédé selon au moins l'une des revendications 1 à 3, 5 et 7, caractérisé en ce que k représente le nombre 1.

**10.** Procédé selon au moins l'une des revendications 1 à 3 et 9, caractérisé en ce que n représente le nombre 1.

**11.** Procédé selon au moins l'une des revendications 1 à 7, 9 et 10, caractérisé en ce que Z représente un groupe de formule générale (3)

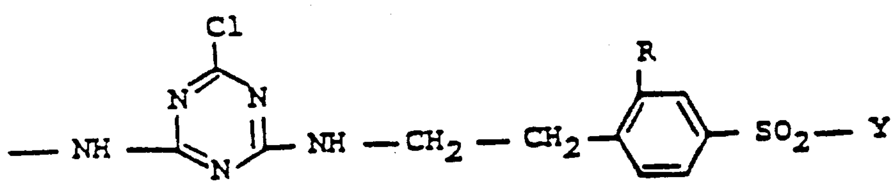

(3)

avec R et Y ayant la signification donnée dans la revendication 1.

**12.** Procédé selon au moins l'une des revendications 1 à 11, caractérisé en ce que R représente un atome d'hydrogène.

**13.** Procédé selon au moins l'une des revendications 1 à 12, caractérise en ce que $Y^1$ représente le groupe $\beta$-sulfatoéthyle.

**14.** Procédé selon au moins l'une des revendications 1 à 13, caractérisé en ce que Y représente le groupe $\beta$-sulfatoéthyle.

**15.** Procédé pour la coloration (teinture, y compris l'impression) de matières contenant des groupes hydroxy et/ou carboxamido, de préférence de matières fibreuses, selon lequel on dépose un colorant sur la matière ou on l'incorpore dans la matière et on fixe le colorant sur ou dans la matière au moyen de la chaleur ou à l'aide d'un agent à action alcaline ou au moyen de la chaleur et à l'aide d'un agent alcalin, caractérisé en ce qu'on utilise en tant que colorant un composé répondant à la formule

générale (1) d'au moins de l'une des revendications 1 à 14.